(19)

Europäisches Patentamt

European Patent Office

Office européen des brevets

(11) **EP 4 642 149 A1**

(12) **EUROPEAN PATENT APPLICATION**
published in accordance with Art. 153(4) EPC

(43) Date of publication:
**29.10.2025 Bulletin 2025/44**

(21) Application number: **23906697.0**

(22) Date of filing: **05.12.2023**

(51) International Patent Classification (IPC):
***H04W 76/25*** (2018.01)

(52) Cooperative Patent Classification (CPC):
**H04W 76/25**

(86) International application number:
**PCT/JP2023/043370**

(87) International publication number:
**WO 2024/135331 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.12.2022 JP 2022204266**

(71) Applicant: **Sony Group Corporation**
**108-0075 Tokyo (JP)**

(72) Inventors:
- **KUSASHIMA, Naoki**
  **Tokyo 108-0075 (JP)**
- **SHIMEZAWA, Kazuyuki**
  **Tokyo 108-0075 (JP)**
- **UCHIYAMA, Hiromasa**
  **Tokyo 108-0075 (JP)**

(74) Representative: **Witte, Weller & Partner**
**Patentanwälte mbB**
**Postfach 10 54 62**
**70047 Stuttgart (DE)**

(54) **COMMUNICATION DEVICE AND COMMUNICATION METHOD**

(57) A communication apparatus is one of a plurality of communication apparatuses including at least a transmission device and a reception device, and includes a determination unit that makes a determination regarding recovery control of a communication link between the transmission device and the reception device based on information on a change in a geographical relative position between the transmission device or the reception device and a third object. The information on the change in the geographical relative position is information acquired by sensing performed by the transmission device, the reception device, another communication apparatus different from the transmission device and the reception device, or the third object.

FIG.15B

EP 4 642 149 A1

**Description**

Field

The present disclosure relates to a communication apparatus and a communication method.

Background

Technologies related to wireless communication such as cellular communication have been actively developed. In order to realize more efficient communication, studies on integrated sensing and communication have been started in recent years.

Citation List

Non Patent Literature

Non Patent Literature 1: S1-214056, Qualcomm, "Cooperative Communication & sensing, Motivations, Use Cases and Proposal," Nov. 2021

Summary

Technical Problem

It is assumed that efficient communication can be realized by integrated sensing and communication. For example, it is assumed that a terminal device can efficiently use radio waves by detecting deterioration in a communication quality with its own sensor and switching a base station. However, simple integrated sensing and communication does not always achieve communication with high communication performance (e.g., stable communication quality, high communication quality, low delay, high reliability, or high throughput).

Therefore, the present disclosure proposes a communication apparatus and a communication method capable of realizing communication with high communication performance.

Note that the above problem or object is merely one of a plurality of problems or objects that can be solved or achieved by a plurality of embodiments disclosed in the present specification.

Solution to Problem

In order to solve the above problem, a communication apparatus among a plurality of communication apparatuses including at least a transmission device and a reception device according to one embodiment of the present disclosure, the communication apparatus includes: a determination unit that makes a determination regarding recovery control of a communication link between the transmission device and the reception device, based on information on a change in a geographical relative position between the transmission device or the reception device and a third object, wherein the information on the change in the geographical relative position is information acquired by sensing performed by the transmission device, the reception device, an other communication apparatus different from the transmission device and the reception device, or the third object.

Brief Description of Drawings

[0008]

　　FIG. 1 is a diagram illustrating an example of sensing-assisted communication.
　　FIG. 2 is a diagram illustrating another example of the sensing-assisted communication.
　　FIG. 3 is a diagram illustrating a configuration example of a communication system according to an embodiment of the present disclosure.
　　FIG. 4 is a diagram illustrating a configuration example of a management device according to the embodiment of the present disclosure.
　　FIG. 5 is a diagram illustrating a configuration example of a base station according to the embodiment of the present disclosure.
　　FIG. 6 is a diagram illustrating a configuration example of a terminal device according to the embodiment of the present disclosure.

FIG. 7 is a diagram illustrating a configuration example of an information processing device according to the embodiment of the present disclosure.

FIG. 8 is a diagram illustrating an example of a frame configuration.

FIG. 9 is a diagram illustrating an example of a resource grid.

FIG. 10 is a diagram illustrating an example of a bandwidth part.

FIG. 11A is a diagram illustrating an example of a slot format.

FIG. 11B is a diagram illustrating an example of the slot format.

FIG. 12 is a sequence diagram illustrating an example of conditional handover.

FIG. 13A illustrates an example of an IE that sets a trigger event used for conditional reconfiguration.

FIG. 13B illustrates details of an operation of conditional reconfiguration evaluation.

FIG. 14A illustrates an example of a beam failure instance reporting operation.

FIG. 14B illustrates an example of the beam failure detection operation.

FIG. 15A is a diagram illustrating an example of an operation of the communication system.

FIG. 15B is a diagram illustrating another example of the operation of the communication system.

FIG. 16A is a diagram illustrating an example of a control sequence of a basic mode.

FIG. 16B is a diagram illustrating another example of the control sequence of the basic mode.

FIG. 17A is a diagram illustrating an example of a control sequence according to a first application.

FIG. 17B is a diagram illustrating another example of the control sequence of the first application.

FIG. 17C is a diagram illustrating another example of the control sequence of the first application.

FIG. 18A is a diagram illustrating an example of the control sequence according to a second application.

FIG. 18B is a diagram illustrating another example of the control sequence according to the second application.

FIG. 18C is a diagram illustrating another example of the control sequence according to the second application.

FIG. 18D is a diagram illustrating another example of the control sequence according to the second application.

FIG. 19A is a diagram illustrating an example of the control sequence according to a third application.

FIG. 19B is a diagram illustrating another example of the control sequence according to the third application.

FIG. 19C is a diagram illustrating another example of the control sequence according to the third application.

FIG. 19D is a diagram illustrating another example of the control sequence according to the third application.

FIG. 19E is a diagram illustrating another example of the control sequence according to the third application.

FIG. 20A is a diagram illustrating an example of the control sequence according to a fourth application.

FIG. 20B is a diagram illustrating another example of the control sequence according to the fourth application.

FIG. 20C is a diagram illustrating another example of the control sequence according to the fourth application.

FIG. 20D is a diagram illustrating another example of the control sequence according to the fourth application.

FIG. 20E is a diagram illustrating another example of the control sequence according to the fourth application.

FIG. 21 illustrates a change example of an IE of a measurement information report.

FIG. 22 illustrates a change example of an IE that sets a trigger event used for the conditional reconfiguration.

FIG. 23 illustrates a change example of a beam failure detection operation.

FIG. 24 illustrates a change example of a beam failure instance reporting operation.

FIG. 25 illustrates a change example of the beam failure instance reporting operation.

FIG. 26 illustrates a change example of a radio link monitoring operation.

FIG. 27 illustrates Change Example 1 of a MAC layer operation in a random access procedure.

FIG. 28 illustrates Change Example 2 of the MAC layer operation in the random access procedure.

Description of Embodiments

Hereinafter, embodiments of the present disclosure will be described with reference to the drawings. In each of the following embodiments, same parts are given the same reference signs to omit redundant description.

In addition, in the present specification and the drawings, a plurality of components having substantially the same functional configuration may be distinguished by attaching different numerals after the same reference sign. For example, a plurality of configurations having substantially the same functional configuration is distinguished as terminal devices $30_1$, $30_2$, and $30_3$ as necessary. However, when it is not particularly necessary to distinguish each of the plurality of components having substantially the same functional configuration, only the same reference sign is given. For example, in a case where it is not necessary to particularly distinguish the terminal devices $30_1$, $30_2$, and $30_3$, they are simply referred to as terminal devices 30.

In the description below, one or more embodiments (including examples and modifications) can be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

<<Outline>>

In recent years, studies on integrated sensing and communication have been started. As the integrated sensing and communication, a method of matching a communication status and a sensor (communication-assisted sensing) and a method of applying a sensing result to communication control (sensing-assisted communication) are assumed. By integrating sensing and communication, acquisition of sensor information with higher accuracy or realization of more efficient communication control is expected.

An example of information expected to be acquired by the sensor is information on an object having no communication function. Since straightness of an electromagnetic wave (radio wave) is strong in a high frequency band (millimeter wave, etc.), blocking by an object has a large influence on communication quality. Therefore, the communication apparatus can realize seamless communication such as early switching of the communication link by predicting a change in the state of an object that is likely to affect the communication quality.

For example, the communication apparatus of the present embodiment is any communication apparatus selected from a plurality of communication apparatuses including at least a transmission device (e.g., terminal device) and a reception device (e.g., base station). Note that, in addition to the transmission device and the reception device, the plurality of communication apparatuses may include another communication apparatus different from the transmission device and the reception device. In other words, the communication apparatus of the present embodiment may be a communication apparatus selected from among the transmission device, the reception device, and another communication apparatus. The communication apparatus makes a determination regarding recovery control of a communication link between the transmission device and the reception device based on information on a change in a geographical relative position between the transmission device or the reception device and a third object (e.g., truck or pedestrian). Here, the information on the change in the geographical relative position is information acquired by sensing performed by the transmission device, the reception device, a third communication apparatus, or the third object. Note that the recovery control also includes preventive control before blocking actually occurs. Here, the third communication apparatus may be the transmission device or the reception device, or may be another communication apparatus different from the transmission device and the reception device.

Hereinafter, this operation will be described more specifically with reference to the drawings.

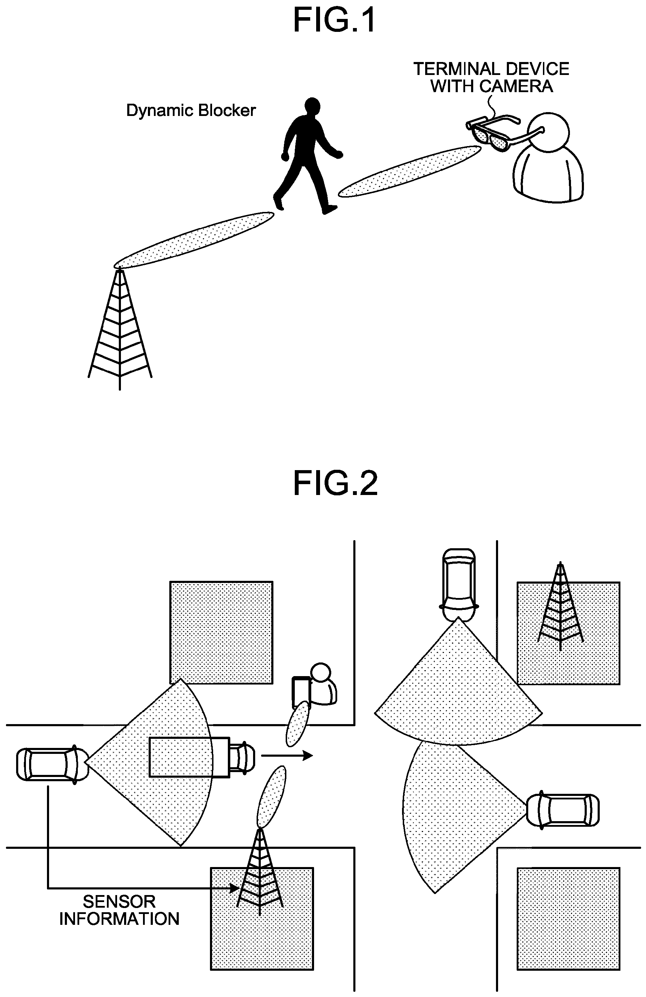

FIG. 1 is a diagram illustrating an example of the sensing-assisted communication. In the example in FIG. 1, the base station and the terminal device are linked, and a pedestrian is about to pass between the base station and the terminal device. In the example in FIG. 1, the base station and the terminal device are the reception device and/or the transmission device, and the pedestrian is the third object. In the example in FIG. 1, the base station or the terminal device includes a sensor (e.g., camera or distance sensor) that detects a state of the pedestrian. The base station or the terminal device predicts by the sensor blocking of communication. Then, the base station or the terminal device performs the recovery control of the communication link based on the prediction.

FIG. 2 is a diagram illustrating another example of the sensing-assisted communication. In the example in FIG. 2, the base station and the terminal device are linked, and a truck is about to pass between the base station and the terminal device. In the example in FIG. 2, the base station and the terminal device are the reception device and the transmission device, and the pedestrian is the third object. A vehicle following the truck is the third communication apparatus. In the example in FIG. 2, the vehicle following the truck includes a sensor (e.g., distance sensor) that detects a state of the truck. The vehicle following the truck detects the state of the truck by the sensor and reports the state to the base station or the network. Then, the base station predicts blocking of communication based on the information, and performs the recovery control of the communication link based on the prediction.

As a result, the communication apparatus according to the present embodiment can realize communication with high communication performance. For example, since the communication apparatus can perform the recovery control (e.g., communication link switching) before an adverse effect on communication (e.g., radio link failure or beam link failure) occurs, seamless communication can be realized.

The outline of the present embodiment has been described above, and a communication system according to the present embodiment will be described in detail below.

<<Configuration of communication system>>

First, a configuration of a communication system 1 will be described.

First, an outline of the configuration of the communication system 1 of the present embodiment will be described. The communication system 1 is a wireless communication system including at least a base station 20 and a terminal device 30. The base station 20 can accommodate a plurality of terminal devices 30. The base station 20 may be connected to another base station 20 by, for example, an X2 interface. Further or alternatively, the base station 20 may be connected to another base station 20 by, for example, an Xn interface. Further or alternatively, the base station 20 may be connected to the base station 20 by an interface (e.g., inter-base-station interface) different from both the X2 interface and the Xn interface. Furthermore, for example, the base station 20 may be connected to an evolved packet core (EPC) by an S1 interface. Further, the base station 20 can be connected to a mobility management entity (MME) by, for example, an S1-MME interface. In addition, for example, the base station 20 can be connected to a serving gateway (S-GW) by an S1-U interface. The S1 interface supports a many-to-many connection between the MME and/or the S-GW and the base station 20. Further or alternatively, for example, the base station 20 may be connected to a 5th generation core (5GC) by an NG interface. Further or alternatively, the base station 20 may be connected to the 5GC by an interface (e.g., base station-to-core network interface) different from both the S1 interface and the NG interface. Furthermore, in the present embodiment, the base station 20 and the terminal device 30 may support LTE and/or NR, respectively. Further or alternatively, in the present embodiment, each of the base station 20 and the terminal device 30 may support 6G.

The outline of the configuration of the communication system 1 has been described above, and the configuration of the communication system 1 will be described in detail below.

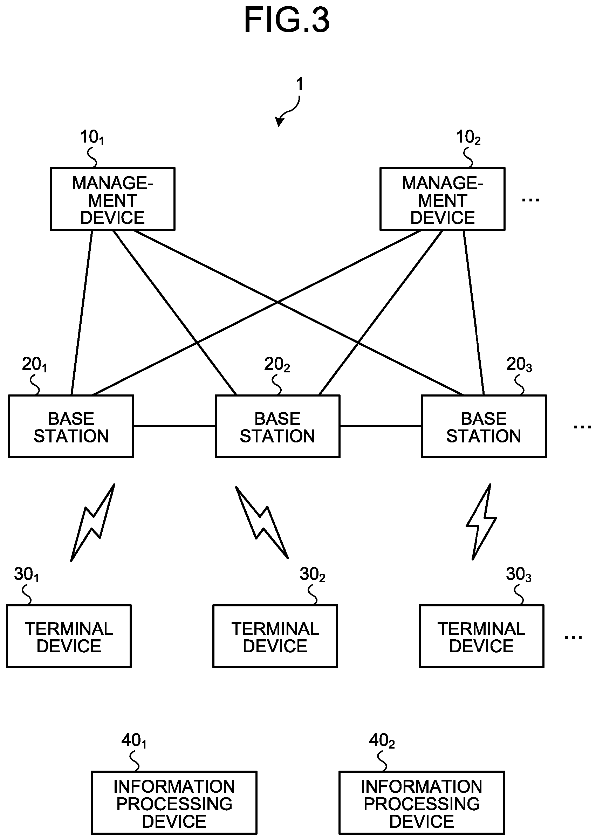

FIG. 3 is a diagram illustrating a configuration example of the communication system 1 according to the embodiment of the present disclosure. The communication system 1 includes a management device 10, the base station 20, the terminal device 30, and an information processing device 40. The communication system 1 provides a user with a wireless network capable of mobile communication by coordinated operation of wireless communication apparatuses configuring the communication system 1. The wireless network of the present embodiment includes, for example, a radio access network and a core network. Note that, in the present embodiment, the wireless communication apparatus is an apparatus having a function of wireless communication, and corresponds to the base station 20, the terminal device 30, and the information processing device 40 in the example in FIG. 3. In the following description, the wireless communication apparatus may be simply referred to as a communication apparatus.

The communication system 1 may include a plurality of management devices 10, a plurality of base stations 20, a plurality of terminal devices 30, and a plurality of information processing devices 40. In the example in FIG. 3, the communication system 1 includes management devices $10_1$ and $10_2$ as the management device 10, and includes base stations $20_1$, $20_2$, and $20_3$ as the base station 20. Furthermore, the communication system 1 includes terminal devices $30_1$, $30_2$, and $30_3$ as the terminal device 30, and includes information processing devices $40_1$ and $40_2$ as the information processing device 40.

The terminal device 30 may be configured to be connectable to a plurality of networks. The network is, for example, a communication network such as a local area network (LAN), a wide area network (WAN), a cellular network, a fixed telephone network, a regional Internet protocol (IP) network, or the Internet. The network may include a wired network and a wireless network. In addition, the network may include a core network. The core network is, for example, an evolved packet core (EPC) or a 5G core network (5GC). Naturally, the network N may be a data network connected to the core network. The data network may also be a service network of a telecommunications carrier such as an IP multimedia subsystem (IMS) network. Furthermore, the data network may be a private network such as an intra-company network.

The terminal device 30 may be connectable to the network using one communication path or may be connectable to the network using a plurality of communication paths. In this case, one or at least one of the plurality of communication paths may be a wireless communication path. For example, the communication path may be a wireless communication path (radio access network) between the terminal device 30 and the base station 20. Furthermore, the communication path may be a wireless communication path between the terminal device 30 and an access point. Naturally, the plurality of communication paths may include a wired communication path (e.g., wired LAN). Note that the communication path may be a network itself.

When the wireless communication path is included in one or the plurality of communication paths, the terminal device 30 may be configured to connect to the network using a radio access technology (RAT) such as long term evolution (LTE), new radio (NR), Wi-Fi, Bluetooth (registered trademark), and 6G. In this case, the terminal device 30 may be configured to be able to use different radio access technologies (wireless communication systems). For example, the terminal device 30 may be configured to be able to use the NR and the Wi-Fi. Furthermore, the terminal device 30 may be configured to be able to use different cellular communication technologies (e.g., LTE, NR, or 6G). The LTE and NR are types of cellular communication technology, and enable mobile communication of a terminal device by arranging a plurality of cellular areas covered by the base station. In addition, the 6G here is also a type of cellular communication technology, and enables mobile communication of the terminal device by arranging a plurality of cellular areas covered by the base station.

Note that, in the following description, the "LTE" includes LTE-Advanced (LTE-A), LTE-Advanced Pro (LTE-A Pro), and evolved universal terrestrial radio access (EUTRA). Still more, the NR includes new radio access technology (NRAT) and further EUTRA (FEUTRA). Note that a single base station may manage a plurality of cells. In the following description, a cell corresponding to the LTE is referred to as an LTE cell, and a cell corresponding to the NR is referred to as an NR cell.

The NR is the radio access technology of a next generation (fifth generation) of the LTE (fourth generation communication including LTE-Advanced and LTE-Advanced Pro). The NR is the radio access technology that can support various use cases including enhanced mobile broadband (eMBB), massive machine type communications (mMTC), and ultra-reliable and low latency communications (URLLC). The NR has been studied in, for example, 3GPP (registered trademark) with the aim of a technical framework corresponding to usage scenarios, requirements, arrangement scenarios, and the like in these use cases.

6G is a cellular communication technology of a next generation of the NR or a 5G system (5GS) which is fifth generation mobile communication, and includes the radio access technology and the network technology between a base station, a core network, and a data network. The 6G may include extreme connectivity of each of the eMBB, mMTC, and URLLC, which have been regarded as a main use case or a requirement in the NR, and new technologies (e. g., AI (cognitive network and AI native air interface), sensing (including radar sensing and network as a sensor), and terahertz communication) in new aspects. Standard specifications of the 6G start to be studied in the 3GPP from around 2025, formulation of initial specifications will be completed in around 2028, and there is a possibility that the 6G will be commercialized in 2030 and after.

Note that the base station 20 configuring the communication system 1 may be a ground station or a non-ground station. The non-ground station may be a satellite station or an aircraft station. When the non-ground station is the satellite station, the communication system 1 may be a bent-pipe (transparent) type mobile satellite communication system.

In the present embodiment, the ground station (also referred to as a ground base station) refers to a base station (including a relay station) installed on the ground. Here, the "ground" is a ground in a broad sense including not only land but also underground, water, and underwater. Note that, in the following description, the "ground station" may be replaced with a "gateway".

Note that an LTE base station may be referred to as an evolved node B (eNodeB) or an eNB. Further, an NR base station may be referred to as a gNodeB or a gNB. A 6G base station may be referred to as a 6G NodeB (6GNB). In the LTE, NR, and 6G, the terminal device (also referred to as a mobile station or a terminal) may be referred to as user equipment (UE). Note that the terminal device 30 is a type of communication apparatus, and is also referred to as the mobile station or the terminal.

Note that the terminal device 30 may be connectable to a network using the radio access technology (wireless communication system) other than the LTE, NR, 6G, Wi-Fi, and Bluetooth. For example, the terminal device 30 may be connectable to a network by using low power wide area (LPWA) communication. Furthermore, the terminal device 30 may be connectable to the network using wireless communication of a unique standard.

Here, the LPWA communication is the wireless communication that enables low-power wide-area communication. For example, the LPWA radio is Internet of Things (IoT) wireless communication using a specified low power radio (e.g., 920 MHz band) or an industry-science-medical (ISM) band. Note that the LPWA communication used by the terminal device 30 may conform to the LPWA standards. Examples of the LPWA standards include ELTRES, ZETA, SIGFOX, LoRaWAN, and NB-Iot. It is apparent that the LPWA standards are not limited thereto, and may be other LPWA standards.

Note that one or the plurality of communication paths may include a virtual network. For example, the plurality of communication paths to which the terminal device 30 can be connected may include a virtual network such as a virtual local area network (VLAN) and a physical network such as an IP communication path. In this case, the terminal device 30 may perform route control based on a route control protocol such as open shortest path first (OSPF) or border gateway protocol (BGP).

In addition, the plurality of communication paths may include one or more overlay networks or one or more network slices.

Note that devices in the drawings may be considered as devices in a logical sense. Specifically, a part or all of the devices in FIG. 2 may be realized by a virtual machine (VM), a container, a docker, or the like, and they may be implemented on physically the same hardware.

Hereinafter, a configuration of each device configuring the communication system 1 will be specifically described. Note that the configuration of each device described below is merely an example. The configuration of each device may be different from the following configuration.

<Configuration of management device>

Next, a configuration of the management device 10 will be described.

The management device 10 is an information processing device (computer) that manages the wireless network. For example, the management device 10 is an information processing device that manages communication of the base station 20. The management device 10 may be, for example, a device having a function as a mobility management entity (MME). The management device 10 may be a device having a function as an access and mobility management function (AMF) and/or a session management function (SMF). The MME, the AMF, and the SMF are control plane network function nodes in the core network. The management device 10 may be a device having a function as a control plane network function (6G CPNF) in the 6G. The 6G CPNF may be configured with one or more logical nodes. Obviously, functions of the management device 10 are not limited to the MME, the AMF, the SMF, and the 6G CPNF. The management device 10 may be a device having a function as a network slice selection function (NSSF), an authentication server function (AUSF), a policy control function (PCF), or a unified data management (UDM). Furthermore, the management device 10 may be a device having a function as a home subscriber server (HSS).

Note that the management device 10 may have a function of the gateway. For example, the management device 10 may have a function as a serving gateway (S-GW) or a packet data network gateway (P-GW). In addition, the management device 10 may have a function of a user plane function (UPF). In this case, the management device 10 may have a plurality of UPFs. Furthermore, the management device 10 may be a device having a function as a user plane network function (6G UPNF) in the 6G.

The core network includes a plurality of network functions, and each network function may be aggregated into one physical device or distributed to a plurality of physical devices. In other words, the management device 10 can be dispersedly arranged in a plurality of devices. Further, this distributed arrangement may be controlled to be performed dynamically. The base station 20 and the management device 10 configure one network, and provide a wireless communication service to the terminal device 30. The management device 10 is connected to the Internet, and the terminal device 30 can use various services provided via the Internet via the base station 20.

Note that the management device 10 is not necessarily a device configuring the core network. For example, it is assumed that the core network is a wideband code division multiple access (W-CDMA) or code division multiple access 2000 (cdma2000) core network. In this case, the management device 10 may be a device that functions as a radio network controller (RNC).

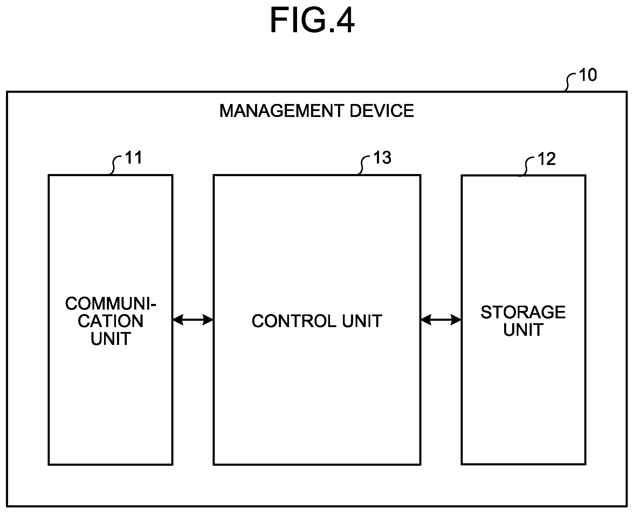

FIG. 4 is a diagram illustrating a configuration example of the management device 10 according to the embodiment of the present disclosure. The management device 10 includes a communication unit 11, a storage unit 12, and a control unit 13. Note that the configuration illustrated in FIG. 4 is a functional configuration, and a hardware configuration may be different from the functional configuration. Furthermore, functions of the management device 10 may be implemented in a statistically or dynamically distributed manner in a plurality of physically separated structures. For example, the management device 10 may include a plurality of server devices.

The communication unit 11 is a communication interface for communicating with other devices. The communication unit 11 may be a network interface or a device connection interface. For example, the communication unit 11 may be a local area network (LAN) interface such as a network interface card (NIC), or may be a universal serial bus (USB) interface including a USB host controller and a USB port. Furthermore, the communication unit 11 may be a wired interface or a wireless interface. The communication unit 11 functions as a communication means of the management device 10. The communication unit 11 communicates with the base station 20 and the like under the control of the control unit 13.

The storage unit 12 is a data readable/writable storage device such as a dynamic random access memory (DRAM), a static random access memory (SRAM), a flash memory, or a hard disk. The storage unit 12 stores, for example, a connection state of the terminal device 30. For example, the storage unit stores a radio resource control (RRC) state, an EPS connection management (ECM) state, or a 5G system connection management (CM) state of the terminal device 30. The storage unit 12 may function as a home memory that stores position information of the terminal device 30.

The control unit 13 is a controller that controls each part of the management device 10. The control unit 13 is realized by, for example, a processor such as a central processing unit (CPU), a micro processing unit (MPU), or a graphics processing unit (GPU). For example, the control unit 13 is implemented by a processor executing various programs stored in the storage device inside the management device 10 using a random access memory (RAM) or the like as a work area. Note that the control unit 13 may be realized by an integrated circuit such as an application specific integrated circuit (ASIC) or a field programmable gate array (FPGA). Furthermore, the control unit 13 may be realized by the GPU. Any of the CPU, the MPU, the ASIC, the FPGA, and the GPU can be regarded as the controller. Note that the control unit 13 may include a plurality of physically separated objects. For example, the control unit 13 may include a plurality of semiconductor chips.

Note that the operation of the control unit 43 may be similar to the operations of a control unit 23 of the base station 20, a control unit 33 of the terminal device 30, and a control unit 43 of the information processing device 40.

In addition, the management device 10 may include a sensor that acquires various types of information regarding wireless communication. At this time, the configuration of a sensor unit included in the management device 10 may be similar to a configuration of a sensor unit 34 included in the terminal device 30. The configuration of the sensor unit 34 will be described later.

<Configuration of base station>

Next, a configuration of the base station 20 will be described.

The base station 20 is a wireless communication apparatus that performs wireless communication with the terminal device 30. The base station 20 may be configured to wirelessly communicate with the terminal device 30 via the relay station, or may be configured to wirelessly communicate with the terminal device 30 directly.

The base station 20 is one type of the communication apparatus. More specifically, the base station 20 is, a device corresponding to a radio base station (e.g., base station, Node B, eNB, gNB, or 6GNB) or a radio access point. The base station 20 may be a wireless relay station. Furthermore, the base station 20 may be an optical extension device called a remote radio head (RRH) or a radio unit (RU). Furthermore, the base station 20 may be a receiving station such as a field pickup unit (FPU). Furthermore, the base station 20 may be an integrated access and backhaul (IAB) donor node or an IAB relay node that provides a radio access line and a radio backhaul line by time division multiplexing, frequency division multiplexing, or space division multiplexing.

Note that the radio access technology used by the base station 20 may be the cellular communication technology or the wireless LAN technology. Obviously, the radio access technology used by the base station 20 is not limited thereto, and may be other radio access technologies. For example, the radio access technology used by the base station 20 may be a low power wide area (LPWA) communication technology. Obviously, the wireless communication used by the base station 20 may be wireless communication using a millimeter wave or wireless communication using a terahertz wave. Furthermore, the wireless communication used by the base station 20 may be wireless communication using radio waves or wireless communication (optical) using infrared rays or visible light. The base station 20 may be capable of non-orthogonal multiple access (NOMA) communication with the terminal device 30. Here, the NOMA communication is communication using a non-orthogonal resource (transmission, reception, or both). Note that the base station 20 may be able to perform the NOMA communication with another base station 20.

Note that the base stations 20 may be capable of communicating with each other via a base station-core network interface (e.g., NG Interface and S1 Interface). This interface may be either wired or wireless. Furthermore, the base stations may be capable of communicating with each other via the inter-base station interface (e.g., Xn interface, X2 interface, or F1 interface). This interface may be either wired or wireless.

Note that the concept of the base station includes not only a donor base station but also a relay base station (also referred to as the relay station). For example, the relay base station may be any one of RF repeater, smart repeater, and intelligent surface. In addition, the concept of the base station includes not only a structure having a function of the base station but also a device installed in the structure.

The structure is, for example, a building such as a high-rise building, a house, a steel tower, a station facility, an airport facility, a harbor facility, an office building, a school building, a hospital, a factory, a commercial facility, or a stadium. Note that the concept of the structure includes not only a building but also a non-building structure such as a tunnel, a bridge, a dam, a wall, or an iron pillar, and equipment such as a crane, a gate, or a windmill. In addition, the concept of the structure includes not only a structure on land (on the ground in a narrow sense) or underground, but also a structure on water such as a platform or a megafloat, and a structure under water such as a marine observation facility. The base station can be rephrased as the information processing device.

The base station 20 may be a donor station or a relay station. Furthermore, the base station 20 may be a fixed station or a mobile station. The mobile station is a wireless communication apparatus (e.g., base station) configured to be movable. In this case, the base station 20 may be a device installed in the mobile body or may be the mobile body itself. For example, the relay station having mobility can be regarded as the base station 20 as the mobile station. In addition, a device that is originally a device having the mobility and has a function of the base station (at least a part of the function of the base station), such as a vehicle, an unmanned aerial vehicle (UAV) as typified by a drone, or a smartphone, also corresponds to the base station 20 as the mobile station.

Here, the mobile body may be a mobile terminal such as a smartphone or a mobile phone. In addition, the mobile body may be a mobile body that travels on land (ground in a narrow sense) (e.g., vehicle including an automobile, a bicycle, a bus, a truck, a motorcycle, a train, and a linear motor car) or a mobile body (e.g., subway) that travels underground (e.g., inside tunnel). In addition, the mobile body may be a mobile body that travels on water (e.g., ship such as a passenger ship, a cargo ship, or a hovercraft) or a mobile body that moves under water (e.g., submersibles such as a submersible vessel, a submarine, and an unmanned submarine). Note that the mobile body may be a mobile body (e.g., aircraft such as an airplane, an airship, or a drone) that moves in the atmosphere.

Furthermore, the base station 20 may be a ground base station device (ground station) installed on the ground. For example, the base station 20 may be a base station installed in a structure on the ground, or may be a base station installed in a mobile body moving on the ground. More specifically, the base station 20 may be an antenna installed in a structure such as a building and a signal processing device connected to the antenna. Obviously, the base station 20 may be the structure or the mobile body itself. The "ground" in a broad sense includes not only land (ground in a narrow sense) but also underground, on water, and under water. Note that the base station 20 is not limited to the ground base station. For example, when the communication system 1 is a satellite communication system, the base station 20 may be an aircraft station. From the perspective of the satellite station, an aircraft station located on the earth is a ground station.

Note that the base station 20 is not limited to the ground station. The base station 20 may be a non-ground base station (non-ground station) capable of floating in the air or space. For example, the base station 20 may be an aircraft station or a satellite station.

The satellite station is a satellite station capable of floating outside the atmosphere. The satellite station may be a device mounted on a space mobile body such as an artificial satellite, or may be the space mobile body itself. The space mobile body is a mobile body that moves outside the atmosphere. Examples of the space mobile body include artificial bodies such as an artificial satellite, a spacecraft, a space station, and a probe. The satellite serving as the satellite station may be any of a low earth orbiting (LEO) satellite, a medium earth orbiting (MEO) satellite, a geostationary earth orbiting (GEO) satellite, and a highly elliptical orbiting (HEO) satellite. Obviously, the satellite station may be a device mounted on the LEO satellite, the MEO satellite, the GEO satellite, or the HEO satellite.

The aircraft station is a wireless communication apparatus capable of floating in the atmosphere, such as an aircraft. The aircraft station may be a device mounted on an aircraft or the like, or may be the aircraft itself. Note that the concept of the aircraft includes not only a heavy aircraft such as an airplane and a glider but also a light aircraft such as a balloon and an airship. In addition, the concept of the aircraft includes not only heavy and light aircrafts but also a rotorcraft such as a helicopter and an autogyroscope. Note that the aircraft station (or the aircraft on which an aircraft station is mounted) may be an unmanned aerial vehicle such as a drone.

Note that the concept of the unmanned aerial vehicle also includes an unmanned aircraft system (UAS) and a tethered UAS. The concept of the unmanned aerial vehicle also includes lighter than air (LTA) UAS and heavier than air (HTA) UAS. Furthermore, the concept of unmanned aerial vehicles also includes high altitude UAS platforms (HAPs).

A coverage of the base station 20 may be large such as a macro cell to small such as a pico cell. It is apparent that a magnitude of the coverage of the base station 20 may be extremely small such as a femto cell. Further, the base station 20 may have a beamforming capability. In this case, the base station 20 may form a cell or a service area for each beam.

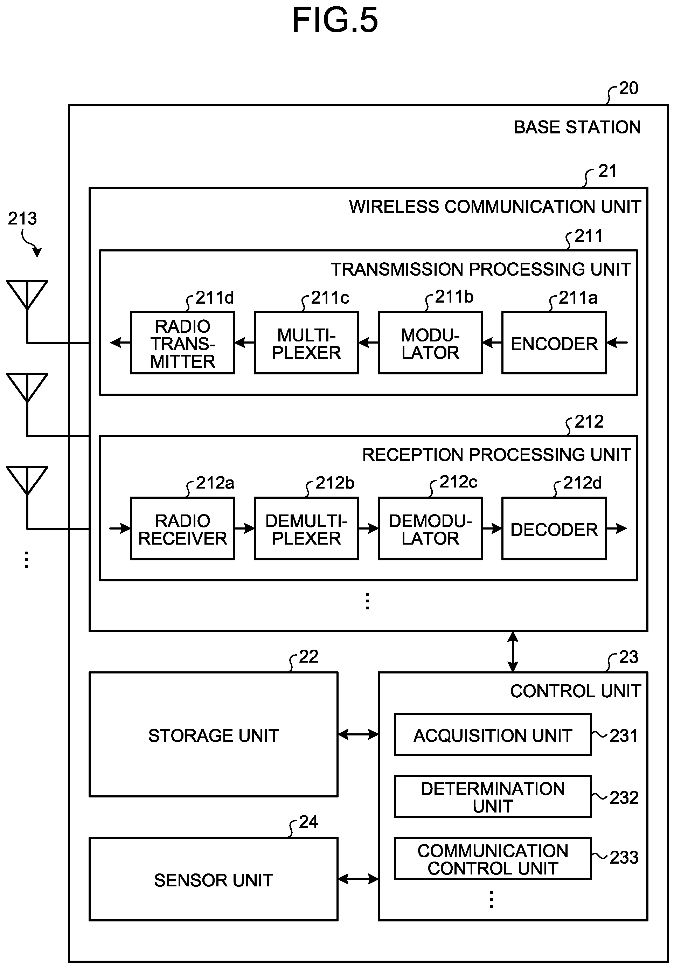

FIG. 5 is a diagram illustrating a configuration example of the base station 20 according to the embodiment of the present disclosure. The base station 20 includes a wireless communication unit 21, a storage unit 22, and a control unit 23. Note that the configuration illustrated in FIG. 5 is a functional configuration, and a hardware configuration may be different from the functional configuration. Furthermore, functions of the base station 20 may be implemented in a distributed manner in a plurality of physically separated configurations.

The wireless communication unit 21 is a signal processing unit for wirelessly communicating with another wireless communication apparatus (e.g., terminal device 30). The wireless communication unit 21 operates under the control of the control unit 23. The wireless communication unit 21 corresponds to one or a plurality of radio access systems. For example, the wireless communication unit 21 corresponds to at least one of the NR, LTE, and 6G. The wireless communication unit 21 may be compatible with W-CDMA or cdma2000 in addition to the NR, LTE, or 6G. Furthermore, the wireless communication unit 21 may support an automatic retransmission technology such as hybrid automatic repeat request (HARQ).

The wireless communication unit 21 includes a transmission processing unit 211, a reception processing unit 212, and an antenna 213. The wireless communication unit 21 may include a plurality of transmission processing units 211, a plurality of reception processing units 212, and a plurality of antennas 213. When the wireless communication unit 21 supports a plurality of radio access systems, each part of the wireless communication unit 21 can be configured individually for each of the radio access systems. For example, the transmission processing unit 211 and the reception processing unit 212 may be individually configured for the LTE, NR, and 6G. Furthermore, the antenna 213 may include a plurality of antenna elements (e.g., a plurality of patch antennas). In this case, the wireless communication unit 21 may be configured to be beamformable. The wireless communication unit 21 may be configured to be able to perform polarization beamforming using a vertically polarized wave (V-polarized wave) and a horizontally polarized wave (H-polarized waves) (or dual-polarized wave in the polarizing direction at 45 degrees and -45 degrees from the vertical direction).

The transmission processing unit 211 performs transmission processing of downlink control information and downlink data. For example, the transmission processing unit 211 encodes the downlink control information and the downlink data input from the control unit 23 using an encoding system such as block encoding, convolutional encoding, or turbo encoding. Here, the encoding may be performed by polar code encoding or low density parity check code (LDPC code) encoding. Then, the transmission processing unit 211 modulates encoded bits by a predetermined modulation scheme such as BPSK, QPSK, 16QAM, 64QAM, or 256QAM. In this case, signal points on constellation do not necessarily have to be equidistant. The constellation may be a non-uniform constellation (NUC). The transmission processing unit 211 multiplexes a modulation symbol of each channel and a downlink reference signal, and arranges a multiplexed result in a predetermined resource element. Then, the transmission processing unit 211 performs various types of signal processing on a multiplexed signal. For example, the transmission processing unit 211 performs processing such as conversion into a frequency domain by fast Fourier transform, addition of a guard interval, generation of a baseband digital signal, conversion into an analog signal, quadrature modulation, up-conversion, removal of an extra frequency component, and power amplification. A signal generated by the transmission processing unit 211 is transmitted from the antenna 213.

The reception processing unit 212 processes an uplink signal received via the antenna 213. The reception processing unit 212 performs, with respect to the uplink signal, down-conversion, removal of an unnecessary frequency component, control of an amplification level, quadrature demodulation, conversion into a digital signal, removal of a guard interval (cyclic prefix), extraction of a frequency domain signal by fast Fourier transform, and the like. In this case, the reception processing unit 212 separates an uplink channel, such as a physical uplink shared channel (PUSCH) and a physical uplink control channel (PUCCH), and an uplink reference signal from a signal after the above processing is performed. The reception processing unit 212 demodulates a received signal using a modulation scheme such as binary phase shift keying (BPSK) or quadrature phase shift keying (QPSK) with respect to a modulation symbol of the uplink channel. The modulation scheme used for demodulation may be 16-quadrature amplitude modulation (16QAM), 64QAM, or 256QAM. In this case, signal points on constellation do not necessarily have to be equidistant. The constellation may be a non-uniform constellation (NUC). The reception processing unit 212 decodes encoded bits of a demodulated uplink channel. Decoded uplink data and uplink control information are output to the control unit 23.

The antenna 213 is an antenna device (antenna unit) that mutually converts a current and a radio wave. The antenna 213 may include one antenna element (e.g., one patch antenna) or may include a plurality of antenna elements (e.g., a plurality of patch antennas). In a case where the antenna 213 includes a plurality of antenna elements, the wireless communication unit 21 may be configured to be beamformable. For example, the wireless communication unit 21 may be configured to generate a directional beam by controlling the directivity of a radio signal using the plurality of antenna elements. Note that the antenna 213 may be a dual-polarized antenna. When the antenna 213 is the dual-polarized antenna, the wireless communication unit 21 may use the vertically polarized wave (V-polarized wave) and the horizontally polarized wave (H-polarized waves) (or dual-polarized wave in the polarizing direction at 45 degrees and -45 degrees from the vertical direction) in transmitting radio signals. Then, the wireless communication unit 21 may control the directivity of the radio signal transmitted using the vertically polarized wave and the horizontally polarized wave (or dual-polarized wave in the polarizing direction at 45 degrees and -45 degrees from the vertical direction). Furthermore, the wireless communication unit 21 may transmit and receive spatially multiplexed signals via a plurality of layers including the plurality of antenna elements.

The storage unit 22 is a storage device capable of reading and writing data, such as a DRAM, an SRAM, a flash memory, or a hard disk. The storage unit 22 functions as a storage means of the base station 20.

The control unit 23 is a controller that controls each unit of the base station 20. The control unit 23 is realized by, for example, a processor such as the CPU or the MPU. For example, the control unit 23 is realized by a processor executing various programs stored in the storage device inside the base station 20 using the RAM or the like as a work area. Note that the control unit 23 may be realized by an integrated circuit such as the ASIC or the FPGA. Furthermore, the control unit 23 may be realized by the GPU. Any of the CPU, the MPU, the ASIC, the FPGA, and the GPU can be regarded as the controller. Note that the control unit 23 may include a plurality of physically separated objects. For example, the control unit 23 may include a plurality of semiconductor chips.

As illustrated in FIG. 5, the control unit 23 includes an acquisition unit 231, a determination unit 232, and a communication control unit 233. Each block (acquisition unit 231 to communication control unit 233) configuring the control unit 23 is a functional block indicating each function of the control unit 23. These functional blocks may be software blocks or hardware blocks. For example, each of the functional blocks described above may be one software module realized by software (including a microprogram), or may be one circuit block on a semiconductor chip (die). It is apparent that each functional block may be one processor or one integrated circuit. Note that the control unit 23 may be configured by a functional unit different from the above-described functional blocks. A configuration method of the functional blocks is arbitrary.

Note that the operation of each block configuring the control unit 23 may be similar to the operation of each block included in the control unit 33 of the terminal device 30 and the operation of each block in the control unit 43 of the information processing device 40. Furthermore, the operation of the control unit 23 may be similar to the operation of the control unit 13 of the management device 10.

The sensor unit 24 is a sensor that acquires various types of information regarding wireless communication. For example, the sensor unit 24 is a sensor that acquires information on an object around the device. For example, the sensor unit 24 is a sensor that acquires information such as a position, shape, and motion of other objects (e.g., third object, communication apparatus configuring a communication link, and third communication apparatus). The sensor unit 24 may be a sensor for detecting a state of the device itself (e.g., a position, moving speed, inclination, vibration, and rotation of the base station 20).

In addition, the configuration of the sensor unit 24 may be similar to the configuration of the sensor unit 34 included in the terminal device 30. For example, the sensor unit 24 may be a radio frequency sensor (RF sensor) or a non-RF sensor. Furthermore, the sensor unit 24 may be a sensor system in which the RF sensor and the non-RF sensor are combined (e.g., sensor unit or sensor module). The configuration of the sensor unit 34 will be described later.

In some embodiments, the concept of the base station may consist of a collection of multiple physical or logical devices. For example, in this embodiment, the base station may be distinguished into a plurality of devices such as a baseband unit (BBU) and a radio unit (RU). Then, the base station may be interpreted as an assembly of the plurality of devices. In addition, the base station may be either or both of the BBU and the RU. The BBU and the RU may be connected by a predetermined interface (e.g., enhanced common public radio interface (eCPRI)). The RU may be rephrased as a remote radio unit (RRU) or a radio DoT (RD). Furthermore, the RU may correspond to a gNB distributed unit (gNB-DU) described later. Further, the BBU may correspond to a gNB central unit (gNB-CU) described later. Alternatively, the RU may be a wireless device connected to the gNB-DU described later. The gNB-CU, the gNB-DU, and the RU connected to the gNB-DU may be configured to conform to an open radio access network (O-RAN). Further, the RU may be a device integrally formed with the antenna. An antenna (e.g., antenna integrally formed with RU) included in the base station may adopt an advanced antenna system and support MIMO (e.g., full dimension (FD)-MIMO) or beamforming. Furthermore, the antenna included in the base station may include, for example, 64 transmission antenna ports and 64 reception antenna ports.

In addition, the antenna mounted on the RU may be an antenna panel including one or more antenna elements, and the RU may be mounted with one or more antenna panels. For example, the RU may be mounted with two types of antenna panels of a horizontally polarized antenna panel and a vertically polarized antenna panel, two types of antenna panels of a clockwise circularly polarized antenna panel and a counterclockwise circularly polarized antenna panel, or an antenna panel in the polarizing direction of 45 degrees from the vertical direction and an antenna panel in the polarizing direction of -45 degrees from the vertical direction. A plurality of antennas having the plurality of polarizing directions may be mounted on one antenna panel. In addition, the RU may form and control an independent beam for each antenna panel.

Note that a plurality of base stations may be connected to each other. One or more base stations may be included in a radio access network (RAN). In this case, the base station may be simply referred to as a RAN, a RAN node, an access network (AN), or an AN node. Note that the RAN in the LTE is sometimes referred to as an enhanced universal terrestrial RAN (EUTRAN). In addition, the RAN in the NR may be referred to as NGRAN. In addition, the RAN in the 6G may be referred to as 6GRAN. In addition, the RAN in the W-CDMA (UMTS) is sometimes referred to as UTRAN.

Note that an LTE base station may be referred to as an evolved node B (eNodeB) or an eNB. In this case, the EUTRAN includes one or more eNodeBs (eNBs). Further, an NR base station may be referred to as a gNodeB or a gNB. In this case, the NGRAN includes one or more gNBs. A 6G base station may be referred to as a 6GNodeB, a 6gNodeB, a 6GNB, or a 6gNB. At this time, the 6GRAN includes one or more 6GNBs. The EUTRAN may include the gNB (en-gNB) connected to the core network (EPC) in an LTE communication system (EPS). Similarly, the NGRAN may include an ng-eNB connected to a core network 5GC in a 5G communication system (5GS).

When the base station is the eNB, gNB, 6GNB, or the like, the base station may be referred to as a 3GPP access. In addition, when the base station is the radio access point, the base station may be referred to as a non-3GPP access. Further, the base station may be an optical extension device called a remote radio head (RRH) or a radio unit (RU). Furthermore, in a case where the base station is the gNB, the base station may be a combination of the gNB-CU and the gNB-DU described above, or may be any one of the gNB-CU and the gNB-DU.

Here, the gNB-CU hosts a plurality of higher layers (e.g., radio resource control (RRC), service data adaptation protocol (SDAP), and packet data convergence protocol (PDCP)) in an access stratum for communication with the UE. On the other hand, the gNB-DU hosts a plurality of lower layers (e.g., radio link control (RLC), medium access control (MAC), and physical layer (PHY) in the access stratum. In other words, among messages/information to be described later, RRC signaling (semi-static notification) may be generated by the gNB-CU, while MAC CE and DCI (dynamic notification) may be generated by the gNB-DU. Alternatively, in an RRC configuration (semi-static notification), for example, some configurations such as IE: cellGroupConfig may be generated by the gNB-DU, and remaining configurations may be generated by the gNB-CU. These configurations may be transmitted and received through an F1 interface described later.

Note that the base station may be configured to be able to communicate with another base station. For example, when a plurality of base stations is the eNBs or a combination of the eNB and the en-gNB, the base stations may be connected by the X2 interface. Furthermore, when the plurality of base stations is the gNBs or a combination of the gn-eNB and the gNB, the devices may be connected by the Xn interface. Furthermore, when the plurality of base stations is a combination of the gNB-CU and the gNB-DU, the devices may be connected by the above-described F1 interface. A message/information (e.g., RRC signaling, MAC control element (MAC CE), or DCI) to be described later may be transmitted between the plurality of base stations, for example, via the X2 interface, the Xn interface, or the F1 interface.

The cell provided by the base station is referred to as, for example, a serving cell. The serving cell may include a primary cell (PCell) and a secondary cell (SCell). When dual connectivity is configured for the UE (e.g., terminal device 30), the PCell provided by a master node (MN) and zero or one or more SCells may be referred to as a master cell group. Examples of the dual connectivity include EUTRA-EUTRA dual connectivity, EUTRA-NR dual connectivity (ENDC), EUTRA-NR dual connectivity with 5GC, NR-EUTRA dual connectivity (NEDC), and NR-NR dual connectivity. Further, examples of the dual connectivity include NR-6G dual connectivity and 6G-NR dual connectivity.

Further, the serving cell may include a primary secondary cell (PSCell) or primary SCG cell. In other words, when the dual connectivity is set to the UE, the PSCell provided by the secondary node (SN) and zero or one or more SCells are referred to as a secondary cell group (SCG). Unless specially configured (e.g., PUCCH on SCell), a physical uplink control channel (PUCCH) is transmitted in the PCell and the PSCell, but is not transmitted in the SCell. In addition, a radio link failure is also detected in the PCell and the PSCell, but is not detected in the SCell (may not be detected). As described above, since the PCell and the PSCell have a special role in the serving cell, they are also referred to as a special cell (SpCell).

In one cell, one downlink component carrier and one uplink component carrier may be associated. Further, a system bandwidth corresponding to one cell may be divided into a plurality of bandwidth parts (BWP). In this case, one or more BWPs may be set to the UE, and the UE may use one BWP as an active BWP. In addition, radio resources that can be used by the terminal device 30 (e.g., frequency bandwidth, numerology (subcarrier spacing), and slot configuration) may be different for each cell, each component carrier, or each BWP.

<Configuration of terminal device>

Next, a configuration of the terminal device 30 will be described. The terminal device 30 can be rephrased as user equipment (UE) 30.

Any form of computer can be employed as the terminal device 30. The terminal device 30 may be a mobile terminal such as a mobile phone, a smart device (smartphone or tablet), a personal digital assistant (PDA), or a notebook PC. Furthermore, the terminal device 30 may be an imaging device (e.g., camcorder) having a communication function. Furthermore, the terminal device 30 may be a motorcycle, a mobile relay car, or the like on which the communication device such as the field pickup unit (FPU) is mounted. Furthermore, the terminal device 30 may be a machine-to-machine (M2M) device or an Internet of Things (IoT) device. Still more, the terminal device 30 may be a wearable device such as a smart watch.

Still more, the terminal device 30 may be an xR device such as an augmented reality (AR) device, a virtual reality (VR) device, and a mixed reality (MR) device. At this time, the xR device may be an eyewear device such as AR glasses and MR glasses, or may be a head-mounted device such as a VR head-mounted display. When the terminal device 30 is the xR device, the terminal device 30 may be a standalone device including only a user wearing part (e.g., eyewear part). Furthermore, the terminal device 30 may be a terminal interlocking device including a user wearing part (e.g., eyewear part) and a terminal part (e.g., smart device) interlocked with the user wearing part.

Note that the terminal device 30 may be configured to be connectable to a plurality of communication paths. For example, the terminal device 30 may be configured to be connectable to two communication paths of the Wi-Fi (registered trademark) and the cellular network. The terminal device 30 may be connectable to a plurality of cellular networks. At this time, the plurality of cellular networks may be associated with different subscriber identity modules (SIMs).

Note that the terminal device 30 may be configured to be able to switch and use a plurality of SIM cards. For example, the terminal device 30 may be compatible with dual SIM or triple SIM. Obviously, the terminal device 30 may be configured to be able to insert more than three SIM cards. Furthermore, the terminal device 30 may be a remote SIM provisioning (RSP). For example, the terminal device 30 may be compatible with an embedded SIM (eSIM). The RSP-compatible terminal device can rewrite information regarding wireless communication (hereinafter referred to as a profile) without replacing a SIM card.

Note that the terminal device 30 may be capable of performing NOMA communication with the base station 20. Furthermore, the terminal device 30 may be capable of using an automatic retransmission technology such as HARQ when communicating with the base station 20. Further, the terminal device 30 may be capable of performing sidelink communication with another terminal device 30. The terminal device 30 may also be capable of using an automatic retransmission technology such as HARQ when performing the sidelink communication. Note that the terminal device 30 may also be capable of the NOMA communication in communication (sidelink) with other terminal devices 30. Furthermore, the terminal device 30 may be capable of performing LPWA communication with other communication apparatuses (e.g., base station 20 and other terminal devices 30). Furthermore, wireless communication used by the terminal device 30 may be wireless communication using millimeter waves. Note that the wireless communication (including the sidelink communication) used by the terminal device 30 may be wireless communication using radio waves or wireless communication (optical) using infrared rays or visible light.

Furthermore, the terminal device 30 may be a mobile device. The mobile device is a mobile wireless communication apparatus. In this case, the terminal device 30 may be the wireless communication apparatus installed in the mobile body or may be the mobile body itself. For example, the terminal device 30 may be a vehicle that moves on a road, such as an automobile, a bus, a truck, or a motorcycle, or a wireless communication apparatus mounted on the vehicle. Note that the mobile body may be a mobile terminal, or may be the mobile body that travels on land (on the ground in a narrow sense), underground, on water, or under water. Furthermore, the mobile body may be a mobile body that travels in the atmosphere, such as a drone or a helicopter, or may be a mobile body that travels outside the atmosphere such as an artificial satellite.

The terminal device 30 may be simultaneously connected to a plurality of base stations or a plurality of cells to perform communication. For example, when one base station supports a communication area via a plurality of cells (e.g., pCell and sCell), it is possible to bundle the plurality of cells and communicate between the base station 20 and the terminal device 30 by a carrier aggregation (CA) technology, a dual connectivity (DC) technology, or a multi-connectivity (MC) technology. Alternatively, the terminal device 30 and the plurality of base stations 20 can communicate with each other by a coordinated multipoint transmission and reception (CoMP) technology via cells of different base stations 20.

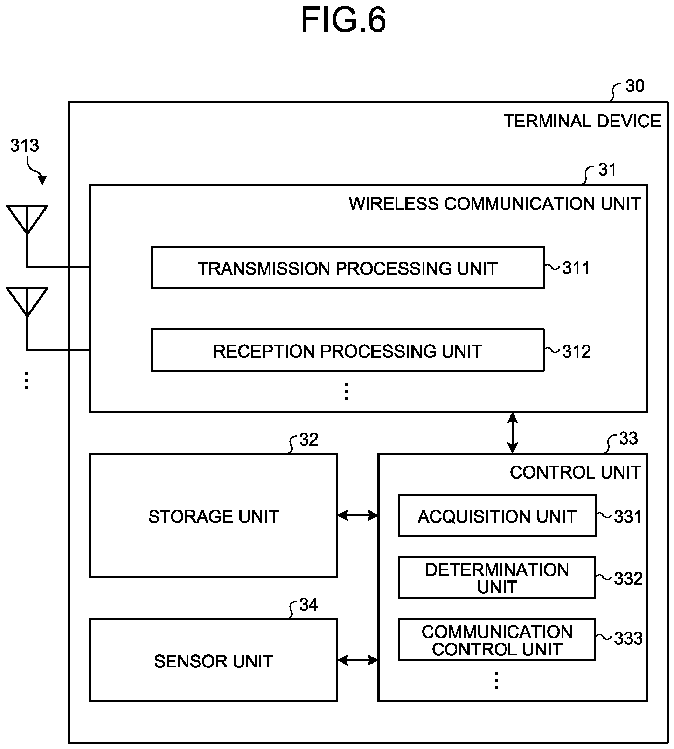

FIG. 6 is a diagram illustrating a configuration example of the terminal device 30 according to the embodiment of the present disclosure. The terminal device 30 includes a wireless communication unit 31, a storage unit 32, a control unit 33, and a sensor unit 34. Note that the configuration illustrated in FIG. 6 is a functional configuration, and a hardware configuration may be different from the functional configuration. Furthermore, functions of the terminal device 30 may be implemented in a distributed manner in a plurality of physically separated structures.

The wireless communication unit 31 is a signal processing unit for wirelessly communicating with other wireless communication apparatuses (e.g., base station 20 and other terminal devices 30). The wireless communication unit 31 operates under the control of the control unit 33. The wireless communication unit 31 includes a transmission processing unit 311, a reception processing unit 312, and an antenna 313. Configurations of the wireless communication unit 31, the transmission processing unit 311, the reception processing unit 312, and the antenna 313 may be similar to those of the wireless communication unit 21, the transmission processing unit 211, the reception processing unit 212, and the antenna 213 of the base station 20. Further, the wireless communication unit 31 may be configured to be beamformable similarly to the wireless communication unit 21. Further, similarly to the wireless communication unit 21, the wireless communication unit 31 may be configured to be capable of transmitting and receiving spatially multiplexed signals.

The storage unit 32 is a storage device capable of reading and writing data such as the DRAM, the SRAM, the flash memory, or the hard disk. The storage unit 32 functions as a storage means of the terminal device 30.

The control unit 33 is a controller that controls each part of the terminal device 30. The control unit 33 is realized by, for example, a processor such as the CPU or the MPU. For example, the control unit 33 is realized by a processor executing various programs stored in a storage device inside the terminal device 30 using the RAM or the like as a work area. Note that the control unit 33 may be realized by an integrated circuit such as the ASIC or the FPGA. Furthermore, the control unit 33 may be realized by the GPU. Any of the CPU, the MPU, the ASIC, the FPGA, and the GPU can be regarded as the controller. Note that the control unit 33 may include a plurality of physically separated objects. For example, the control unit 33 may include a plurality of semiconductor chips.

As illustrated in FIG. 6, the control unit 33 includes an acquisition unit 331, a determination unit 332, and a communication control unit 333. Each block (acquisition unit 331 to communication control unit 333) configuring the control unit 33 is a functional block indicating each function of the control unit 33. These functional blocks may be software blocks or hardware blocks. For example, each of the functional blocks described above may be one software module realized by software (including a microprogram), or may be one circuit block on a semiconductor chip (die). It is apparent that each functional block may be one processor or one integrated circuit. The control unit 33 may be configured by a functional unit different from the above-described functional blocks. A configuration method of the functional blocks is arbitrary.

Note that the operation of each block configuring the control unit 33 may be similar to the operation of each block included in the control unit 23 of the base station 20 and the operation of each block included in the control unit 43 of the information processing device 40. Furthermore, the operation of the control unit 33 may be similar to the operation of the control unit 13 of the management device 10.

The sensor unit 34 is a sensor that acquires various types of information regarding wireless communication. For example, the sensor unit 34 is a sensor that acquires information on an object around the device. For example, the sensor unit 34 is a sensor that acquires information such as a position, shape, and motion of other objects (e.g., third object, communication apparatus configuring a communication link, or third communication apparatus). The sensor unit 34 may be a sensor for detecting a state of the device itself (e.g., position, moving speed, inclination, vibration, and rotation of the terminal device 30).

The sensor unit 34 may be the radio frequency sensor (RF sensor) or the non-RF sensor. Furthermore, the sensor unit 34 may be a sensor system in which the RF sensor and the non-RF sensor are combined (e.g., sensor unit or sensor module).

The RF sensor represents a component that performs measurement using radio waves.

Examples of the RF sensor include a radar using radio waves such as millimeter waves. At this time, the radio wave used for the radar is not limited to the radio wave in a millimeter wave band (e.g., 30 to 300 GHz band), and may be, for example, a radio wave in a microwave band (e.g., 3 to 30 GHz band) or a quasi-millimeter wave band (e.g., 20 to 30 GHz band).

Another example of the RF sensor is a wireless positioning sensor (wireless positioning system). Examples of the wireless positioning sensor include a global navigation satellite system (GNSS) sensor. Here, the GNSS sensor may be a global positioning system (GPS) sensor, a global navigation satellite system (GLONASS) sensor, a Galileo sensor, or a quasi-zenith satellite system (QZSS) sensor. Note that the wireless positioning sensor is not limited to the GNSS sensor, and examples thereof include a sensor for 3GPP positioning or Wi-Fi/Bluetooth positioning.

The non-RF sensor represents a component that performs measurement without using radio waves.

Examples of the non-RF sensor include a distance measuring sensor (distance measuring system) such as a light detection and ranging (LiDAR). At this time, light (e.g., laser beam) used by the LiDAR is not limited to visible light, and may be invisible light such as ultraviolet light, infrared light, and near infrared light. Other examples of the non-RF sensor include sonars using sound waves such as ultrasonic waves.

Another example of the non-RF sensor is a camera. Note that the camera is not limited to a visible light camera. For example, the camera may be a near-infrared camera, a mid-infrared camera, or a far-infrared camera. Furthermore, the camera may be a monocular camera or a stereo camera. Furthermore, another example of the non-RF sensor may be an image sensor. At this time, in the image sensor, image plane phase difference pixels may be discretely embedded. In addition, the sensor unit 34 may be a time of flight (ToF) sensor or a microphone.

Other examples of the non-RF sensor include an acceleration sensor (e.g., triaxial acceleration sensor), a speed sensor, a gyro sensor, an inertial measurement unit (IMU), and other motion sensors. Other examples of the non-RF sensor include a magnetic sensor, a baroscope, and an altimeter (e.g., a barometer).

Furthermore, the sensor unit 34 may be a sensor that acquires various types of information for predicting the quality of the communication path (e.g., communication path formed by wireless communication unit). For example, the sensor unit 34 is a sensor that detects reception S/N of a radio wave received from another communication apparatus (e.g., communication apparatus to be a communication partner or communication apparatus other than the communication partner). Obviously, the information acquired by the sensor unit 34 is not limited to the reception S/N as long as the information can be used for quality prediction of the communication path.

Obviously, the sensor unit 24 is not limited to the above-described sensor. Furthermore, the sensor unit 34 may be a sensor system in which a plurality of the above-described sensors are combined (e.g., sensor unit or sensor module).

<Configuration of information processing device>

First, a configuration of the information processing device 40 will be described.

The information processing device 40 is another communication apparatus different from the transmission device and the reception device. At this time, the information processing device 40 may have a configuration similar to that of the base station 20 or may have a configuration similar to that of the terminal device 30. Note that the information processing device 40 may be the management device 10. When the third object has a communication function, the information processing device 40 may be the third object.

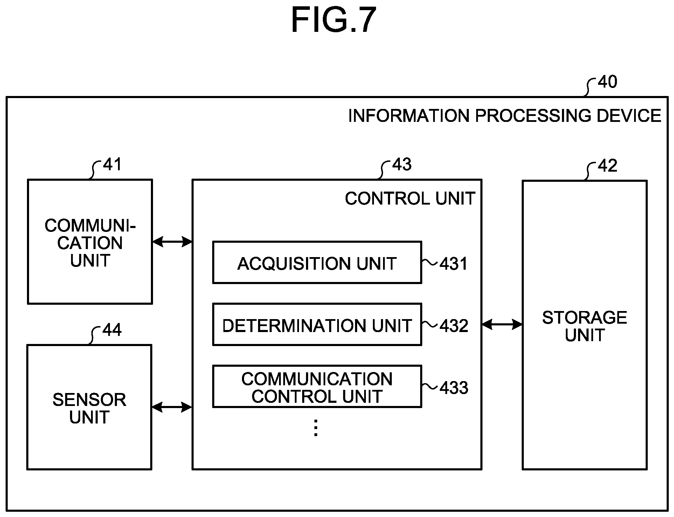

FIG. 7 is a diagram illustrating a configuration example of the information processing device 40 according to the embodiment of the present disclosure. The information processing device 40 includes a communication unit 41, a storage unit 42, a control unit 43, and a sensor unit 44. Note that the configuration illustrated in FIG. 7 is a functional configuration, and a hardware configuration may be different from the functional configuration.

Furthermore, functions of the information processing device 40 may be implemented in a distributed manner in a plurality of physically separated configurations. For example, the information processing device 40 may include a plurality of information processing devices.

The communication unit 41 is a communication interface for communicating with other devices. For example, the communication unit 41 is a network interface. For example, the communication unit 11 is a local area network (LAN) interface such as a network interface card (NIC). Note that the communication unit 41 may be a wired interface or a wireless interface. The communication unit 41 functions as a communication means of the information processing device 40. The communication unit 41 communicates with other communication apparatuses (e.g., management device 10, base station 20, terminal device 30, or another information processing device 40) under the control of the control unit 43.

The storage unit 42 is a data readable/writable storage device such as a dynamic random access memory (DRAM), a static random access memory (SRAM), a flash memory, or a hard disk. The storage unit 42 functions as a storage means of the information processing device 40.

The control unit 43 is a controller that controls each unit of the information processing device 40. The control unit 43 is realized by, for example, a processor such as a central processing unit (CPU) or a micro processing unit (MPU). For example, the control unit 43 is implemented by a processor executing various programs stored in the storage device inside the information processing device 40 using a random access memory (RAM) or the like as a work area. Note that the control unit 43 may be realized by an integrated circuit such as an application specific integrated circuit (ASIC) or a field programmable gate array (FPGA). Furthermore, the control unit 43 may be realized by the GPU. Any of the CPU, the MPU, the ASIC, the FPGA, and the GPU can be regarded as the controller. Note that the control unit 43 may include a plurality of physically separated objects. For example, the control unit 43 may include a plurality of semiconductor chips.

As illustrated in FIG. 7, the control unit 43 includes an acquisition unit 431, a determination unit 432, and a communication control unit 433. Each block (acquisition unit 431 to communication control unit 433) configuring the control unit 43 is a functional block indicating each function of the control unit 43. These functional blocks may be software blocks or hardware blocks. For example, each of the functional blocks described above may be one software module realized by software (including a microprogram), or may be one circuit block on a semiconductor chip (die). It is apparent that each functional block may be one processor or one integrated circuit. Note that the control unit 43 may be configured by a functional unit different from the above-described functional blocks. A configuration method of the functional blocks is arbitrary. Note that the operation of each block configuring the control unit 43 may be similar to the operation of each block included in the control unit 23 of the base station 20 and the operation of each block included in the control unit 43 of the terminal device 30.

The sensor unit 44 is a sensor that acquires various types of information regarding wireless communication. For example, the sensor unit 44 is a sensor that acquires information on an object around the device. For example, the sensor unit 44 is a sensor that acquires information such as a position, shape, and motion of other objects (e.g., third object, communication apparatus configuring a communication link, or third communication apparatus). The sensor unit 44 may be a sensor for detecting a state of the device itself (e.g., position, moving speed, inclination, vibration, and rotation of the information processing device 40).

In addition, the configuration of the sensor unit 44 may be similar to the configuration of the sensor unit 34 included in the terminal device 30. For example, the sensor unit 44 may be the RF sensor or the non-RF sensor. Furthermore, the sensor unit 44 may be a sensor system in which the RF sensor and the non-RF sensor are combined (e.g., sensor unit or sensor module).

<<Basic operation of communication system 1>>

The configuration of the communication system 1 has been described above, and the basic operation of the communication system 1 will be described next before the operation of the communication system 1 of the present embodiment is described in detail.

<Frame configuration>

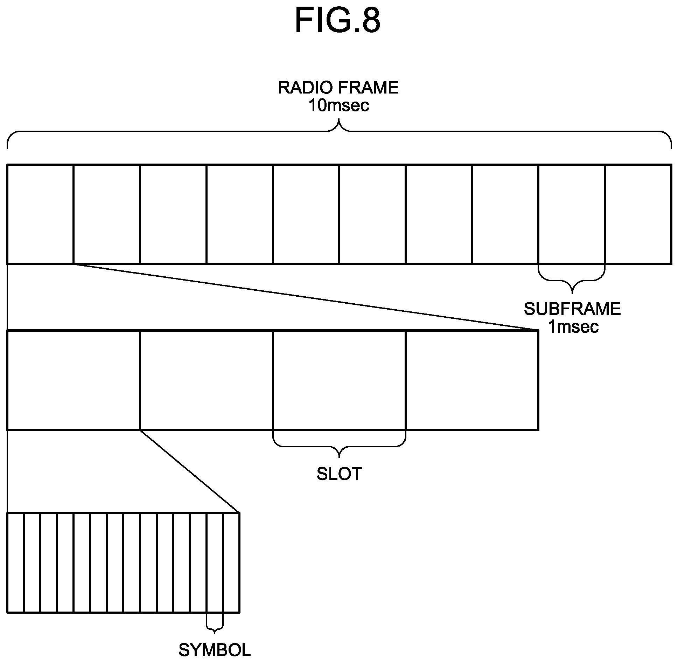

In a cellular wireless communication system, for example, a radio frame including 10 milliseconds (ms) is defined. FIG. 8 is a diagram illustrating an example of a frame configuration. Each radio frame is composed of two half frames. A time interval of the half frame is 5 ms. Each of the half frames includes five subframes. A time interval of the subframes is 1 ms. Further, one subframe includes one or more slots.

A time interval of the slots depends on numerology (numerology and OFDM numerology). The numerology is defined by a combination of subcarrier spacing (SCS) and cyclic prefix (CP). An example of the subcarrier spacing setting is indicated in a table (Table 1) below.

**(Table 1) Subcarrier spacing setting**

| Subcarrier spacing setting $\mu$ | Subcarrier spacing [kHz] | Cyclic prefix | Symbols per slot | Slots per radio frame | Slots per subframe |
|---|---|---|---|---|---|
| 0 | 15 | Normal CP | 14 | 10 | 1 |
| 1 | 30 | Normal CP | 14 | 20 | 2 |
| 2 | 60 | Normal CP | 14 | 40 | 4 |
| 2 | 60 | Extended CP | 12 | 40 | 4 |
| 3 | 120 | Normal CP | 14 | 80 | 8 |
| 4 | 240 | Normal CP | 14 | 160 | 16 |
| 5 | 480 | Normal CP | 14 | 320 | 32 |
| 6 | 960 | Normal CP | 14 | 640 | 64 |

The subcarrier spacing supported in the embodiment is defined by, for example, a power of 2 based on 15 kilohertz (kHz). Specifically, subcarrier spacings of 15 kHz, 30 kHz, 60 kHz, 120 kHz, 240 kHz, 480 kHz, and 960 kHz are supported. Time intervals of the slots are 1 ms, 0.5 ms, 0.25 ms, 0.125 ms, 0.0625 ms, 0.03125 ms, and 0.015625 ms for the subcarrier spacings of 15 kHz, 30 kHz, 60 kHz, 120 kHz, 240 kHz, 480 kHz, and 960 kHz, respectively. One slot includes 14 symbols for normal CP and 12 symbols for extended CP.

<Resource grid>

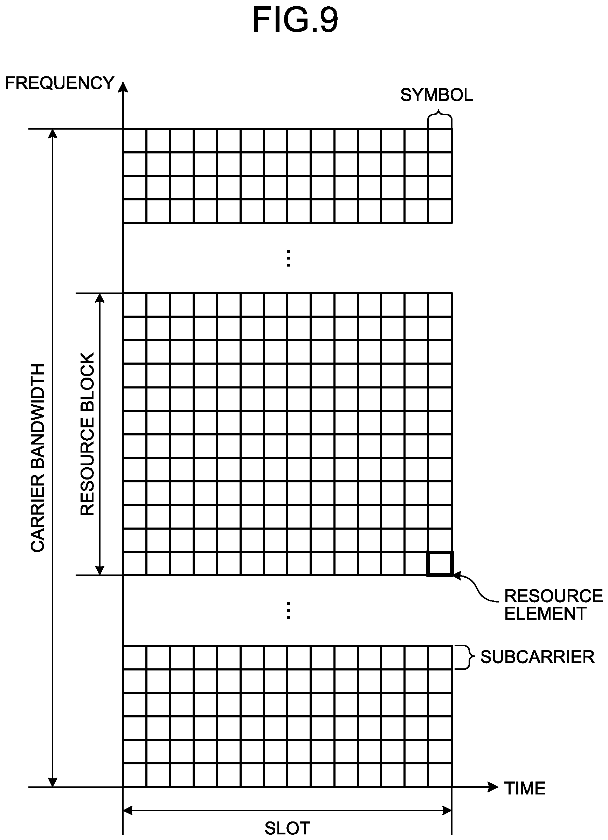

In each numerology and carrier in the embodiment, a transmitted physical signal or physical channel is represented by a resource grid. FIG. 9 is a diagram illustrating an example of the resource grid. The resource grid is defined by a plurality of resource elements. One resource element in a predetermined antenna port is represented by one subcarrier and one symbol. An index of a resource element at a predetermined antenna port may be represented by a combination of a subcarrier index and a symbol index.

In addition, in the present embodiment, a resource block that is a unit on a frequency axis is defined. One resource block (RB) includes, for example, 12 consecutive subcarriers on the frequency axis. The resource block includes a common resource block (CRB), a physical resource block (PRB), and a virtual resource block (VRB). The common resource block is a resource block defined with a predetermined bandwidth and a predetermined numerology. In all numerologies, a common resource block starts at a point A. A frequency specified at the point A is the center of a subcarrier #0 of a common resource block #0 in all the numerologies. The physical resource block is a resource block defined in a predetermined bandwidth part. A physical resource block index is numbered from 0 within its predetermined bandwidth part. A virtual resource block is a logical resource block and is used when a precoded signal of the PDSCH or PUSCH is mapped to the physical resource block.

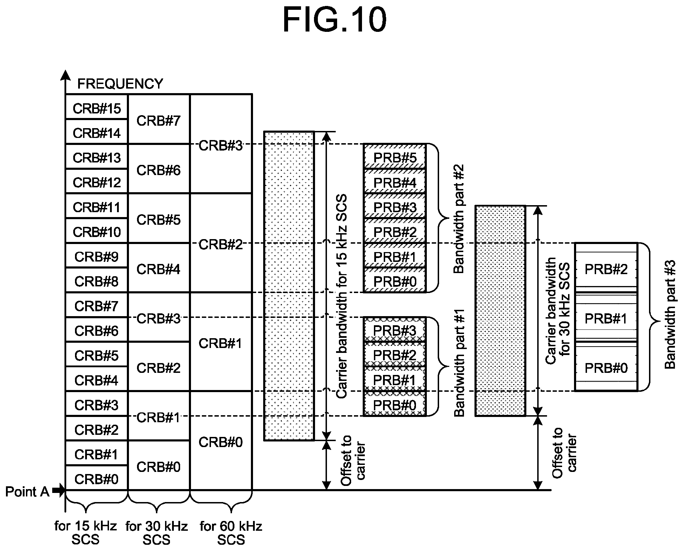

In addition, in the present embodiment, it is possible to set a subset of consecutive common resource blocks referred to as a bandwidth part (BWP). FIG. 10 is a diagram illustrating an example of the bandwidth part. The bandwidth part with a predetermined numerology falls within a bandwidth of a carrier defined by that numerology. A maximum of four bandwidth parts are set for each terminal device 30. At a predetermined time, there is one active bandwidth part. The terminal device 30 does not expect to receive the PDSCH, the PDCCH, and a CSI-RS outside a downlink active bandwidth part. The terminal device 30 does not send the PUSCH and the PUCCH outside an uplink active bandwidth part. In a predetermined active cell, the terminal device 30 does not transmit an SRS outside the uplink active bandwidth part.

<Slot format>

In a TDD cell (unpaired spectrum), each of the 14 symbols in the slot can be classified into a downlink (DL), uplink (UL), or flexible state. In a downlink symbol, the terminal device may be available for reception. In an uplink symbol, the terminal device may be available for transmission. In a flexible symbol, the terminal device may be available for transmission and reception. Further, the flexible symbol may be utilized as a downlink and uplink switching period or a guard period.

States of these symbols are specified in TDD configuration information common to terminal devices (TDD-UL-DL-ConfigCommon), TDD configuration information specific to each of the terminal devices (TDD-UL-DL-ConfigDedicaated), and/or a slot format index carried by the DCI.

The TDD configuration information common to the terminal devices includes information on the number of downlink slots and downlink symbols, the number of uplink slots and uplink symbols, and an uplink/downlink switching periodicity. The TDD configuration information common to the terminal devices includes information on all downlinks (all DL), all uplinks (all UL), or the number of downlink symbols and the number of uplink symbols for each symbol. The slot format index is an index of a slot format representing a combination of states of 14 symbols and is specified in units of slots. A format indicating a slot format is also referred to as a slot format indicator (SFI).

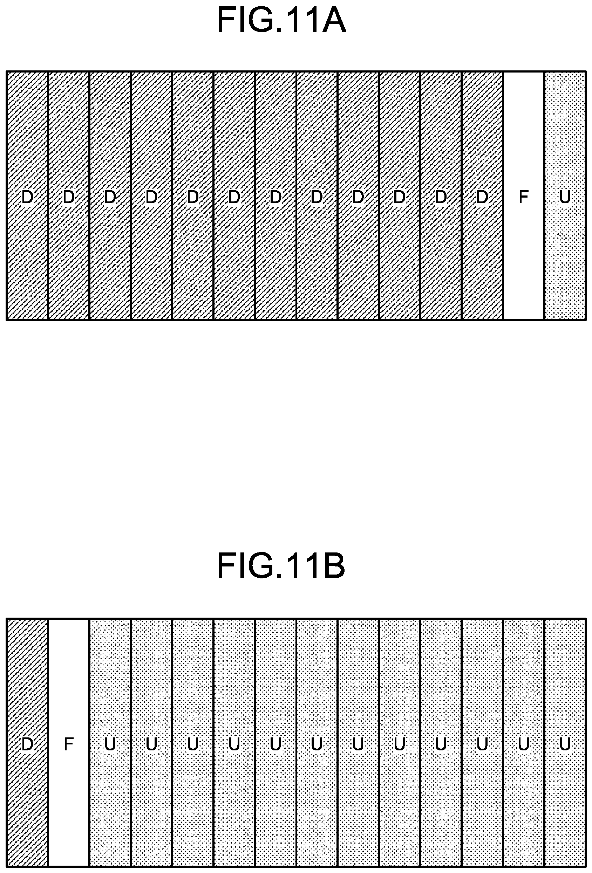

The uplink and the downlink can be flexibly switched in units of symbols by the TDD configuration or the slot format described above. FIGS. 11A and 11B are diagrams each illustrating an example of the slot format. In the drawings, D represents the downlink, U represents the uplink (UL), and F represents flexible.

In the example in FIG. 11A, the 1st to 12th symbols are downlink symbols, the 13th symbol is a flexible symbol, and the 14th symbol is an uplink symbol. The SFI of this slot is "DDDDDDDDDDDDFU" in order from a head symbol of the slot. As a result, transmission and reception of HARQ-ACK corresponding to the PDSCH can be performed in the same slot. In the example in FIG. 11B, the first symbol is the downlink symbol, the second symbol is the flexible symbol, and the third to fourteenth symbols are the uplink symbols. The SFI of this slot is "DFUUUUUUUUUUUU" in order from the symbol of the slot. As a result, transmission and reception of the PUSCH corresponding to an UL grant can be performed in the same slot.

<Conditional reconfiguration>

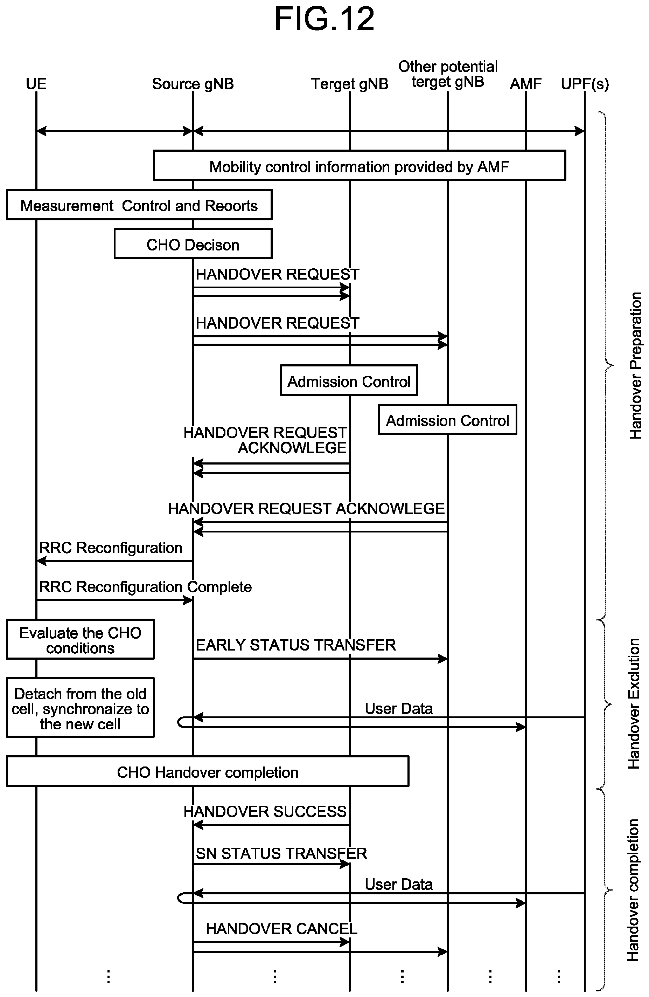

Conditional reconfiguration means that the configuration of the terminal device 30 is reset to a predetermined parameter when the terminal device 30 satisfies a predetermined condition. The conditional reconfiguration is executed by the terminal device 30. The predetermined condition is set by the base station 20. Alternatively, the predetermined condition is preconfigured. The predetermined parameter used for reconfiguration is also set by the base station 20 or preconfigured. For the conditional reconfiguration, for example, a handover executed by the terminal device 30 or a PSCell change is used. The handover performed by the terminal device 30 in the conditional reconfiguration is referred to as a conditional handover. FIG. 12 is a sequence diagram illustrating an example of the conditional handover.

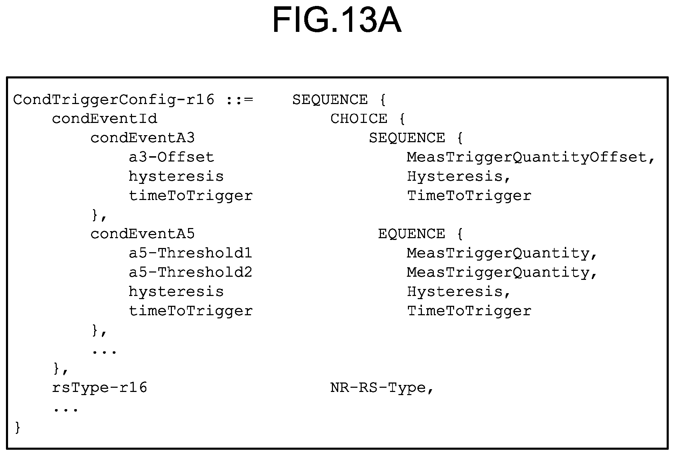

Note that an information element (IE) that sets a trigger event used for conditional reconfiguration is, for example, as illustrated in FIG. 13A. FIG. 13A illustrates an example of the IE that sets the trigger event used for the conditional reconfiguration. Here, the trigger defined in 3GPP Release 16 is described in 3GPP TS 38.331 V16.10.0, and an event A3 (condEventA3) and an event A5 (condEventA5) are included in the IE (CondTriggerConfig) that sets the trigger for the conditional reconfiguration.

The event A3 is an event triggered when a reception quality (e.g., RSRP, RSRQ, or SINR) of a neighboring cell is higher than a sum of a reception quality of SpCell (e.g., PCell or PSCell) and an offset value. The event A3 is triggered when the following formula is satisfied.

```
        Inequality A3-1 (Entering condition)
    Mn + Ofn + Ocn - Hys > Mp + Ofp + Ocp + Off


        Inequality A3-2 (Leaving condition)
    Mn + Ofn + Ocn + Hys < Mp + Ofp + Ocp + Off
```

Here, Mn is a measurement result of the neighboring cell without considering the offset, Ofn is a measurement-specific offset of a reference signal of the neighboring cell, Ocn is a cell-specific offset of the neighboring cell, Mp is a measurement result of SpCell without considering the offset, Ofp is a measurementspecific offset of SpCell, Ocp is a cell-specific offset of SpCell, Hys is a hysteresis parameter for this event, and Off is an offset parameter for this event.

The event A5 is an event triggered when the reception quality (e.g., RSRP, RSRQ, or SINR) of the SpCell (PCell or PSCell) becomes lower than a first threshold and the reception quality of the neighboring cell becomes higher than a second threshold. The event A5 is triggered when the following formula is satisfied.

```
        Inequality A5-1 (Entering condition 1)
    Mp + Hys < Thresh1


        Inequality A5-2 (Entering condition 2)
    Mn + Ofn + Ocn - Hys > Thresh2


        Inequality A5-3 (Leaving condition 1)
    Mp - Hys > Thresh1


        Inequality A5-4 (Leaving condition 2)
    Mn + Ofn + Ocn + Hys < Thresh2
```

Here, Mp is a measurement result of NR SpCell not considering the offset, Mn is a measurement result of the neighboring cell not considering the offset, Ofn is a measurement-specific offset of a reference signal of the neighboring cell, Ocn is a cell-specific offset of the neighboring cell, Hys is a hysteresis parameter for this event, Thresh1 is a first threshold parameter for this event, and Thresh2 is a second threshold parameter for this event.

As evaluation in the conditional reconfiguration, the terminal device considers a cell having a physical cell identifier matching a value included in the conditional reconfiguration as a valid (applicable) cell. Then, the terminal device considers that the corresponding event is satisfied when the measurement result after layer 3 filtering of the valid cell satisfies the entry condition specified by the conditional reconfiguration parameter. Alternatively, the terminal device considers that the corresponding event is not satisfied when setting of the conditional reconfiguration is changed or the measurement result after the Layer 3 filtering of the valid cell satisfies the leaving condition specified by the conditional reconfiguration parameter. If all conditions for a target candidate cell are satisfied, the terminal device considers the target candidate cell as a triggered cell, and the conditional reconfiguration is executed.

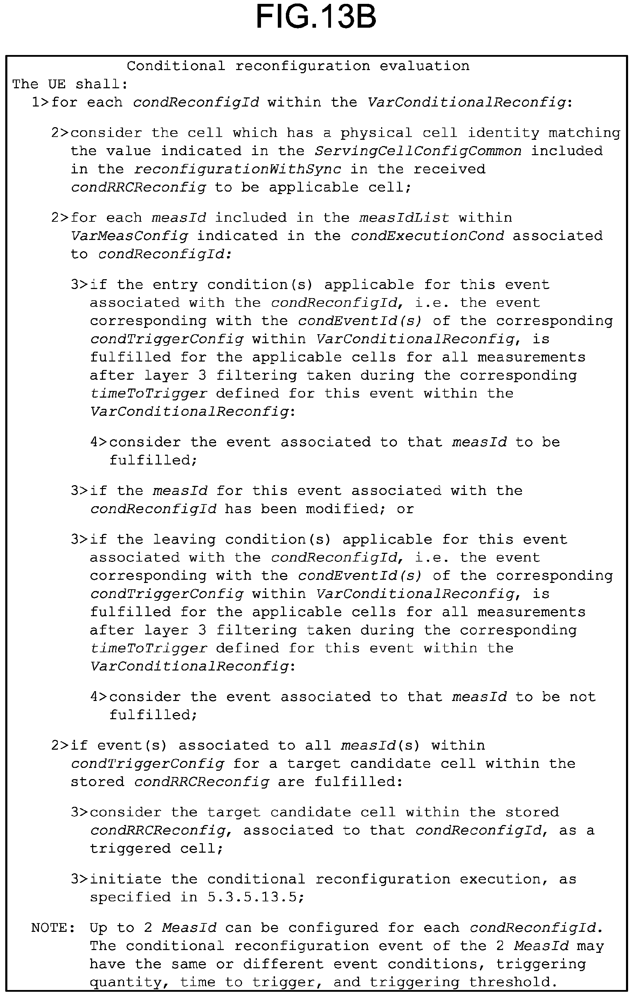

Details of the operation of conditional reconfiguration evaluation are described in 3GPP TS 38.331 V16.10.0 as illustrated in FIG. 13B. FIG. 13B is a diagram illustrating details of the conditional reconfiguration evaluation.

<Beam failure detection>

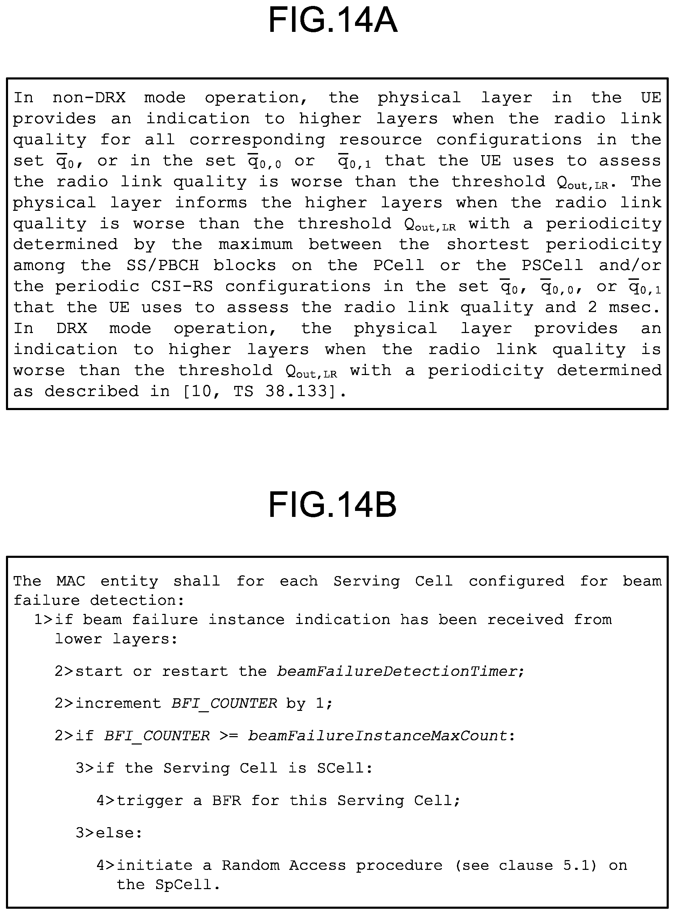

When a predetermined beam quality is degraded, the physical layer reports a beam failure instance to higher layers. Specifically, the report is performed in the operation described in 3GPP TS 38.213 (FIG. 14A). FIG. 14A illustrates an example of reporting of the beam failure instance.

Further, in medium access control (MAC), the beam failure is detected by a procedure described in 3GPP TS 38.321 (FIG. 14B). FIG. 14B illustrates an example of the beam failure detection operation. Thereafter, a beam failure recovery is triggered for the SCell, or a random access procedure is started for the SpCell.

<Beam failure recovery>

The communication apparatus that has detected the beam failure described above performs the beam failure recovery operation. For example, the communication apparatus performs the connection recovery operation using beam with higher quality. In the communication apparatus in which the beam failure recovery is triggered, starting of the random access procedure is triggered for the SpCell, or the beam failure recovery is triggered for the SCell.

In the SpCell in which the beam failure is detected, the beam failure recovery is performed by the random access procedure (4-step RACH procedure and 2-step RACH procedure). During the random access procedure, the terminal device re-performs beam selection, and switches to a connection having beam with higher quality. Then, in the case of a collision-based random access procedure, BFR MAC CE is included in PUSCH of Msg3 in the 4-step RACH procedure or MSGA in the 2-step RACH procedure, whereby the beam failure of the terminal device can be recognized.

In the SCell in which the beam failure is detected, the terminal device re-performs beam selection for the SCell, and transmits BFR MAC CE in any serving cell. By including the information regarding the beam failure for the SCell in the BFR MAC CE, it is possible to recognize the beam failure of the terminal device.

<Radio link monitoring>

Radio link monitoring (RLM) is used to maintain stability of establishment of a connection between a base station device and a terminal device in an RRC layer. The RLM enables the terminal device to determine whether the downlink connection is maintained.

The terminal device detects the quality of connection (link) with a connected base station device (cell and serving cell), and monitors the downlink quality of the PCell to indicate an in-synchronization (in-sync) state or an out-of-synchronization (out-of-sync) state to higher layers. In addition, the terminal device monitors the downlink quality of the PSCell when dual connectivity is configured and a parameter related to a radio link failure (RLF) is provided from higher layers. Hereinafter, monitoring the downlink quality is also referred to as RLM measurement.

The downlink quality (downlink radio link quality or downlink link quality) is monitored based on an SS/PBCH block or CSI-RS. For example, the downlink quality is calculated based on received power of the SS/PBCH block (SSB and SS block) or CSI-RS of the serving cell.

Whether the radio link quality indicates in-synchronization (in-sync) or out-of-synchronization (out-of-sync) is evaluated by comparing the downlink radio link quality with a threshold. As the threshold, a threshold $Q_{in}$ used to determine the in-synchronization (in-sync) and a threshold $Q_{out}$ used to determine the out-of-synchronization (out-of-sync) are defined.

In the physical layer of the terminal device, when the radio link quality of all resources configured as the radio link monitoring is lower than the threshold $Qo_{ut}$, the out-of-synchronization (out-of-sync) is reported to higher layers. When the radio link quality of any resource configured as the radio link monitoring is higher than the threshold $Q_{in}$, the in-synchronization (in-sync) is reported to higher layers.

For example, the threshold $Q_{out}$ is defined at a level at which a non-synchronous block error rate of virtual PDCCH transmission corresponds to a predetermined ratio. The predetermined ratio of the out-of-synchronization block error rate is set by a higher layer parameter (rlmInSyncOutOfSyncThreshold), and a default when the higher layer parameter is not set is 10%. Furthermore, the threshold $Q_{in}$ is defined, for example, at a level at which the reception quality is sufficiently better than the threshold $Q_{out}$ and an in-synchronization block error rate of virtual PDCCH transmission corresponds to a predetermined ratio. The predetermined ratio of the in-synchronization block error rate is set by a higher layer parameter (rlmInSyncOutOfSyncThreshold), and a default when the higher layer parameter is not set is 2%.

A predetermined time interval for evaluating the radio link quality in the terminal device is individually defined by a time interval $T_{Evaluate\_in}$ for evaluating the in-synchronization (in-sync) and a time interval $T_{Evaluate\_out}$ for evaluating the out-of-synchronization (out-of-sync). In addition, different evaluation intervals are defined for the SS/PBCH block and the CSI-RS.

When the out-of-sync is reported consecutively for a predetermined number of times (N310) set by a parameter related to the RLF, a higher layer determines that there is a problem in the radio link quality of the physical layer, and an RLF timer (T310) runs. When the in-sync is reported consecutively for a predetermined number of times (N311) set by the parameter related to the RLF before the RLF timer (T310) exceeds, the higher layer determines that the problem in the radio link quality of the physical layer is recovered, and the RLF timer (T310) stops. On the other hand, when the in-sync is not reported consecutively for the predetermined number of times (N311) and the RLF timer (T310) exceeds, it is regarded as the RLF (radio link failure).

<<Operation of communication system>>

The basic operation of the communication system 1 has been described above. Next, the operation of the communication system 1 of the present embodiment will be described in detail.

As described above, the communication apparatus of the present embodiment is any of a plurality of communication apparatuses including at least the transmission device and the reception device. In addition to the transmission device and the reception device, the plurality of communication apparatuses may include another communication apparatus (hereinafter also referred to as a third communication apparatus) different from the transmission device and the reception device. When the third object has a communication function, the plurality of communication apparatuses may include the third object having the communication function, in addition to the transmission device and the reception device. The communication apparatus of the present embodiment may be a communication apparatus selected from among the above plurality of communication apparatuses. The communication apparatus makes a determination regarding recovery control of the communication link between the transmission device and the reception device based on information on the third object acquired by sensing. For example, the communication apparatus makes the determination regarding the recovery control of the communication link between the transmission device and the reception device based on information on a change in a geographical relative position between the transmission device or the reception device and the third object.

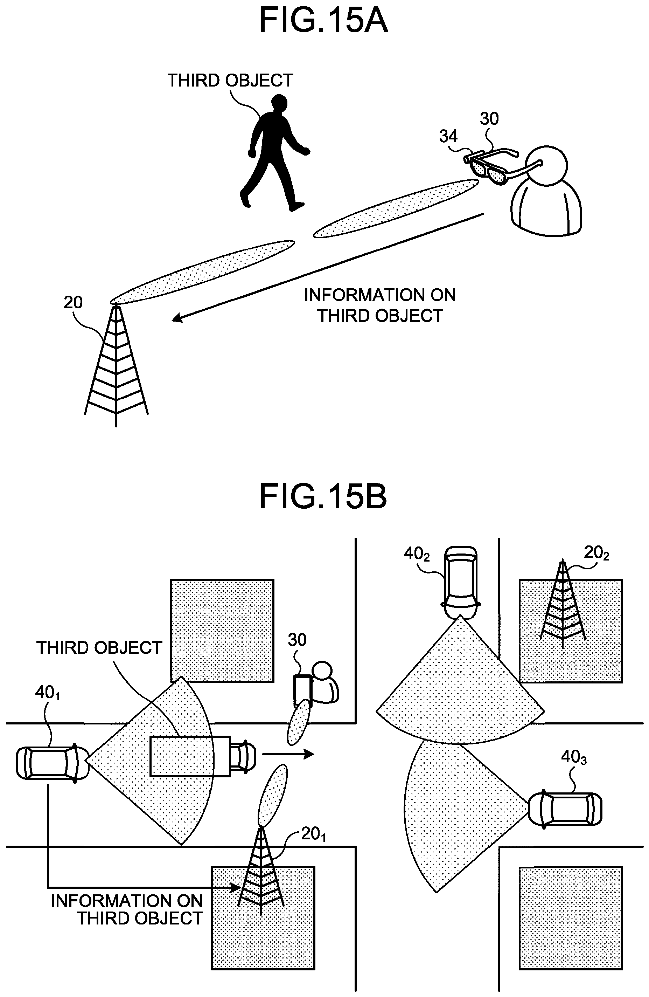

FIG. 15A is a diagram illustrating an example of the operation of the communication system 1. In the example in FIG. 15A, the base station 20 and the terminal device 30 are wirelessly linked, and a pedestrian is about to pass between the base station 20 and the terminal device 30. In the example in FIG. 15A, the base station 20 and the terminal device 30 are the reception devices and/or the transmission device, and a pedestrian is the third object. In the example in FIG. 15A, the terminal device 30 includes a sensor unit 34 (e.g., camera) that detects a state of the pedestrian. The terminal device 30 notifies the base station 20 of information detected by the sensor unit 34 as information on the third object. The base station 20 makes a determination regarding the recovery control of the communication link between the transmission device and the reception device based on the information on the third object.

FIG. 15B is a diagram illustrating another example of the operation of the communication system 1. In the example in FIG. 15B, the base station 20 and the terminal device 30 are wirelessly linked, and a truck tries to pass between the base station 20 and the terminal device 30. In the example in FIG. 15B, the base station 20 and the terminal device 30 are the reception device and/or the transmission device, and the truck is the third object. A vehicle (information processing device $40_1$) following the truck is the third communication apparatus. In the example in FIG. 15B, the vehicle (information processing device $40_1$) following the truck includes a sensor (e.g., distance measuring sensor such as LiDAR or millimeter wave radar). The terminal device 30 notifies the base station 20 of information detected by the sensor of the vehicle as information on the third object. The base station 20 makes a determination regarding the recovery control of the communication link between the transmission device and the reception device based on the information on the third object.

Note that the examples illustrated in FIGS. 15A and 15B are merely examples. The present embodiment is not limited to the examples illustrated in FIGS. 15A and 15B.

<Communication apparatus>

The communication apparatus that is a subject of the operation of the present embodiment (e.g., communication apparatus that makes a determination related to recovery control) may be the transmission device or the reception device. The transmission device and the reception device are communication apparatuses connected by a predetermined communication link (e.g., downlink, uplink, and sidelink). When the predetermined communication link is the uplink, the transmission device is the terminal device 30 and the reception device is the base station 20. When the predetermined communication link is the downlink, the transmission device is the terminal device 30, and the reception device is the terminal device 30. When the predetermined communication link is the sidelink communication, the transmission device is the terminal device 30, and the reception device is another terminal device 30.

Furthermore, the communication apparatus that is the subject of the operation of the present embodiment may be the third communication apparatus different from the transmission device and the reception device. At this time, the third communication apparatus may be the management device 10 or the base station 20. Furthermore, the third communication apparatus may be the terminal device 30 or the information processing device 40.

Note that when the third object has a communication function, the communication apparatus to be the subject of the operation of the present embodiment may be the third object. The third object will be described later.

<Third object>

The third object is an object other than the communication apparatus (transmission device and reception device) connected by a predetermined communication link (downlink, uplink, and sidelink). The third object may be the communication apparatus having the communication function (e.g., base station 20, terminal device 30, and information processing device 40), a device not having the communication function (e.g., vehicle or machine), or an object that is not a device (e.g., person, tree, cloud, or desk). The third object may be an object (moving body) moving from a predetermined position or an object fixed at a predetermined position.

The third object is typically an object that greatly changes a communication environment. In a microwave band, an object with high reflectance (e.g., metal object) may be assumed as the third object. In the millimeter wave band, an object having a large amount of radio wave attenuation (object having a large amount of moisture), in addition to an object having a high reflectance, can be assumed as the third object. Conversely, an object with high radio wave transmittance (e.g., object made of wood or glass) may not be considered as the third object. Obviously, the third object is not limited to the examples given here.

<Information on third object>

In the present embodiment, the third object is detected by sensing using a sensor (e.g., sensor unit 34 or sensor unit 44). In the following description, information detected by sensing may be referred to as information on the third object. Note that the information on the third object is not limited to the information acquired by sensing (hereinafter referred to as sensor information). The information on the third object may be information obtained by performing predetermined processing on the sensor information. At this time, the device that performs the predetermined processing is not limited to the device that performs sensing (hereinafter also referred to as a sensing device). The sensing device may be the transmission device, the reception device, or the third communication apparatus. When the third object includes a sensor such as a GNSS sensor, the sensing device may be the third object.

The information on the third object is, for example, position information (geographical position information) of the third object. At this time, the position information of the third object may be absolute position information. For example, the position information may be the position information of the third object in a global coordinate system.

Further, the position information of the third object may be relative position information. For example, the position information may be relative position information of the third object based on the position of a predetermined object. For example, the position information may be information on the position of the third object in a coordinate system based on the position of the sensing device. Furthermore, the position information may be information on the position of the third object in the coordinate system based on the position of the communication apparatus (reception device or transmission device) configuring the communication link. Note that, when the position information is relative position information, the reference position of the coordinate system may be moving. For example, when the position of the reception device or the transmission device is used as a reference, the reception device or the transmission device may be moving. Further, the position information may be relative position information of the third object based on the position of the communication link. At this time, the position of the communication link may be a straight line connecting the transmission device and the reception device.

Furthermore, the position information may be information of a combination of a plurality of pieces of position information. For example, the position information may be information of a combination of relative position information and absolute position information. For example, the position information of the third object may be information of a combination of the position information of the sensing device in the global coordinate system and the position information of the third object in the coordinate system based on the position of the sensing device. Furthermore, the position information may be information of a combination of a plurality of pieces of relative position information. For example, the position information may be information on a combination of information on the position of the reception device and/or the transmission device in the coordinate system with the position of the sensing device as a reference and the position information of the third object in the coordinate system with the position of the sensing device as a reference. In addition, the position information may be information of a combination of one or a plurality of pieces of absolute position information and one or a plurality of pieces of relative position information.

The position information may be expressed in an orthogonal coordinate system represented by vertical and horizontal heights or latitude and longitude altitudes, or may be expressed in another coordinate system such as a polar coordinate system represented by a distance and a two-axis angle.

Furthermore, the information on the third object may be information on a change in the geographical relative position between the transmission device or the reception device and the third object (hereinafter also referred to as change information of the geographical relative position of the third object). For example, the change information of the geographical relative position of the third object may be the change information of the relative position of the third object with respect to the position of the transmission device or the reception device. Alternatively, the change information of the geographical relative position of the third object may be the change information of the relative position of the third object with respect to a reference position determined with reference to the position of the transmission device or the reception device. At this time, the reference position may be a point (midpoint between the transmission device and the reception device) or a line (e.g., straight line connecting the transmission device and the reception device). When a reference position is the straight line connecting the transmission device and the reception device, the change information on the third object may be the change information of the shortest distance between the straight line connecting the transmission device and the reception device and the third object. Obviously, the reference position is not limited to the point and line, and may be, for example, a plane.

Note that the communication quality between the transmission device and the reception device may change due to a change in the geographical relative position of the third object. Here, a change in the communication quality caused by the change in the geographical relative position of the third object is typically radio wave blocking (blocking). However, the change in the communication quality caused by the change in the geographical relative position of the third object is not limited to this example. As an example, the change in communication quality caused by the change in the geographical relative position may be scattering (scattering) of radio waves. As another example, the change in the communication quality caused by the change in the geographical relative position may be radio wave focusing (focusing). As another example, the change in the communication quality caused by the change in the geographical relative position may be transmission of radio waves. In other words, the change in the communication quality between the transmission device and the reception device may occur in cases other than when the third object passes between the transmission device and the reception device. Obviously, the change in the communication quality is not limited to the blocking and scattering. For example, when the third object is a device that emits radio waves, the change in communication quality may be a change in the communication quality caused by radio wave interference from the third object.

The information on the third object may be information on the size of the third object. At this time, the information on the third object may be information on a size change of the third object. There is also a possibility that a change in the communication quality can be predicted by the size change of the third object.

The information on the third object may be information on a moving speed and/or a moving direction of the third object. At this time, the information on the moving speed may be information on an absolute moving speed or information on a relative moving speed. The absolute moving speed is, for example, a moving speed of the third object in the global coordinate system. In addition, the relative movement speed is a movement speed of the third object in a coordinate system based on the position of the communication apparatus configuring the communication link (reception device or transmission device).

The information on the third object may be information on a material of the third object. As the information on the material of the third object, for example, reflectance of radio waves or light of the third object is assumed. An influence on communication varies depending on the material of the third object. For example, the influence on communication varies depending on whether the third object is made of metal, wood, or glass. Therefore, there is a possibility that the change in the communication quality may be predicted depending on the material of the third object.

Note that the information on the third object is not limited to the information described above. For example, the information on the third object may be information on a posture or shape of the third object. As the information regarding the posture of the third object, for example, change information of the posture of the third object is assumed. As the information regarding the shape of the third object, for example, change information of the shape of the third object is assumed.

The information on the third object may include a plurality of pieces of information selected from the plurality of pieces of information described above. For example, the information on the third object may be information on the position, size, moving speed, moving direction, and material of the third object.

<Sensor for acquiring information on third object>

The sensor that acquires information on the third object (e.g., sensor unit 24, sensor unit 34, and/or the sensor unit 44) may be the RF sensor or the non-RF sensor. At this time, the sensor used for acquiring the information on the third object may be the following sensor.

· When information on the third object is the position information on third object

As a sensor used to acquire the position information of the third object, the RF sensor is assumed. At this time, when the position information of the third object including the reception device is acquired, the RF sensor used may be a wireless positioning sensor (e.g., 3GPP positioning, Wi-Fi/Bluetooth positioning, or GNSS sensor). In addition, the RF sensor to be used may be a radar as long as the position information of the third object not having the reception device is acquired.

The non-RF sensor is assumed as the sensor used to acquire the position information of the third object.

At this time, the non-RF sensor used may be a camera, a distance sensor (e.g., ToF sensor), LiDAR, or an altimeter (barometer).

· When information on the third object is the size information of the third object

The non-RF sensor is assumed as the sensor used to acquire the size information of the third object. At this time, the non-RF sensor used may be a camera.

· When information on the third object is the information on moving direction or moving speed of the third object

The non-RF sensor is assumed as a sensor used to acquire the information on moving direction or moving speed of the third object. The non-RF sensor used then may be an accelerometer (e.g., triaxial accelerometer). Note that the communication apparatus may estimate the moving direction or the moving speed of the third object based on the position information described above. The communication apparatus may estimate the moving direction or the moving speed of the third object based on a difference between a plurality of pieces of position information acquired at different times.

· When information on the third object is material information of the third object

A camera or radar/LiDAR is assumed as a sensor used to acquire the material information of the third object. In the case of the camera, since the color varies depending on the material, the material of the third object can be determined. In the case of the radar/LiDAR, since a reflection coefficient varies depending on the material, the material of the third object can be determined depending on an intensity or state of a signal reflected from the third object.

<Subject that senses information on third object>

The subject that senses the information on the third object may be a communication apparatus configuring the communication link (e.g., transmission device or reception device). At this time, the communication apparatus may acquire the information on the third object using a sensor included in the communication apparatus.
The subject that senses the information on the third object may be a communication apparatus that does not configure the communication link (e.g., third object or third communication apparatus). At this time, the communication apparatus may acquire the information on the third object and transfer the information to another communication apparatus (e.g., transmission device or reception device). For example, when the third object has a sensor and a communication function, the third object may acquire the information on the third object by using the sensor, and transfer the information to the communication apparatus configuring the communication link by using the communication function. Further, when the third communication apparatus includes a sensor, the third communication apparatus may acquire the information on the third object by using the sensor, and transfer the information to the communication apparatus configuring the communication link by using the communication function.
The subject that senses the information on the third object may be a network-side device (e.g., management device 10 or base station 20). At this time, the network-side device may acquire the information on the third object using a sensor included in the network-side device.

<Capability report of sensor acquiring information on third object>

A terminal device having the sensor described above and supporting a sensing-assisted communication function reports sensor capability information to a network (base station and/or other terminal devices). As a result, the terminal device can be set to have the sensing-assisted communication function from the network.
As an example of the sensor capability information to be reported, information on a type of sensor mounted on the terminal device (e.g., wireless positioning sensor, radar, camera, distance sensor, or LiDAR) is reported to the network.
As another example of the sensor capability information to be reported, information on a type of information that can be acquired by the sensor (e.g., position information of the third object, size information of the third object, moving speed information of the third object, or material information of the third object) is reported to the network.
Note that, as will be described later, the sensor capability information may additionally include a parameter regarding reliability of information obtained by the sensor.
Note that the terminal device may report the sensor capability information of another communication apparatus (e.g., another terminal device) in the network in addition to the capability information of its own sensor. In addition, even when the terminal device does not include a sensor and the sensing-assisted communication function, the terminal device may report the capability of a sensor of another communication apparatus in the network instead. As a result, for example, the sensing-assisted communication can be realized using the sensor of another communication apparatus that does not communicate with the base station (e.g., terminal device that performs sidelink communication outside a region or a communication apparatus that performs communication using another RAT).
The sensor capability information is desirably reported when a report is requested from the network.

<Communication recovery control>

The communication apparatus makes a determination regarding the recovery control (hereinafter also referred to as communication recovery control) of the communication link between the transmission device and the reception device based on the information on the change in the geographical relative position between the transmission device or the reception device and the third object. The communication recovery control may include at least one of the above-described conditional reconfiguration and beam failure recovery. The communication recovery control may be control other than the conditional reconfiguration and beam failure recovery. For example, the communication recovery control may include parameter setting, change, reconnection, and the like for recovering the communication link between a plurality of communication apparatuses.

Note that the communication recovery control is not limited to the above-described control. For example, the communication recovery control may be preventive control before a communication failure (radio link failure (RLF), beam failure, or the like) occurs. For example, the communication recovery control may be control performed by the communication apparatus (transmission device and/or reception device) to improve the communication quality.

Furthermore, the communication recovery control may be control related to a communication connection in which the communication failure has occurred while the communication connection is maintained. For example, the communication recovery control may be control for enabling the communication apparatus that has established the connection to resume communication while all or a part of the configuration for connection is maintained when a failure occurs in the connection. Furthermore, the communication recovery control may be control for discarding a setting causing the communication failure (e.g., transmission beam and/or reception beam, or radio resource) and performing resetting of the discarded portion necessary for connection.

Furthermore, the communication recovery control may be control in which an additional communication link is set, regardless of the quality of the current communication link, in order to increase redundancy of the communication connection. For example, the control may be such that the communication link is reconfigured when it is determined that there is a possibility that a new communication link is configured based on the information on the third object.

<Specific processing example>

Hereinafter, a specific processing example of the communication system 1 of the present embodiment will be described.

Processing executed by the communication system 1 of the present embodiment includes (S1) Step of acquiring information on the third object by sensing, (S2) Step of making a determination regarding communication recovery control based on the information on the third object, and (S3) Step of applying (executing) the communication recovery control based on the determination.

Here, processing in (S1) and (S2) is executed by any of the reception device, the transmission device, the third object, and another transmission device. Note that the processing in (S1) may be executed by the acquisition unit 231 of the base station 20, may be executed by the acquisition unit 331 of the terminal device 30, or may be executed by the acquisition unit 431 of the information processing device 40. Furthermore, the processing in (S2) may be executed by the determination unit 232 of the base station 20, may be executed by the determination unit 332 of the terminal device 30, or may be executed by the determination unit 432 of the information processing device 40.

On the other hand, the processing in (S3) is typically executed by the reception device. However, the processing in (S3) may be executed by the transmission device. Furthermore, the processing in (S3) may be executed by both the transmission device and the reception device. Note that the processing in (S3) may be executed by the communication control unit 233 of the base station 20 or may be executed by the communication control unit 333 of the terminal device 30.

Information such as a method of acquiring the information on the third object, a trigger for starting the communication recovery control, and a communication recovery method to be applied may be set in the communication apparatus (e.g., reception device) in advance. When the communication apparatus is the terminal device 30, these pieces of information are desirably set by RRC signaling.

In the cellular communication, the radio resource control function is desirably placed on a network side (e.g., core network or base station). Therefore, it is desirable that the subject that determines the communication recovery control considered to be one function of the radio resource control is basically the network-side device (management device 10 or base station 20). On the other hand, from the viewpoint of reducing a processing delay from instantaneous interruption to recovery, the subject that makes the determination regarding the communication recovery control may be the terminal device 30. Obviously, the subject that decides the communication recovery control may be the information processing device 40 (third communication apparatus or third object).

Hereinafter, control sequence examples based on the information on the third object will be listed. Note that the information on the third object appearing in the following sequence examples is typically the change information of the geographical relative position between the transmission device or the reception device and the third object. However, the information on the third object is not limited thereto. In the following description, the reception device may be referred to as an Rx node, the transmission device may be referred to as a Tx node, and the third communication apparatus may be referred to as another Tx node.

<Control sequence example (basic mode)>

First, a control sequence example of the basic mode will be described.

As the control sequence example of the basic mode, (A1) Sequence example in which a device that has acquired the information on the third object performs the communication recovery control and (A2) Sequence example in which a device different from the device that has acquired the information on the third object performs the communication recovery control are assumed.

(A1) Sequence example in which a device that has acquired the information on the third object performs the communication recovery control

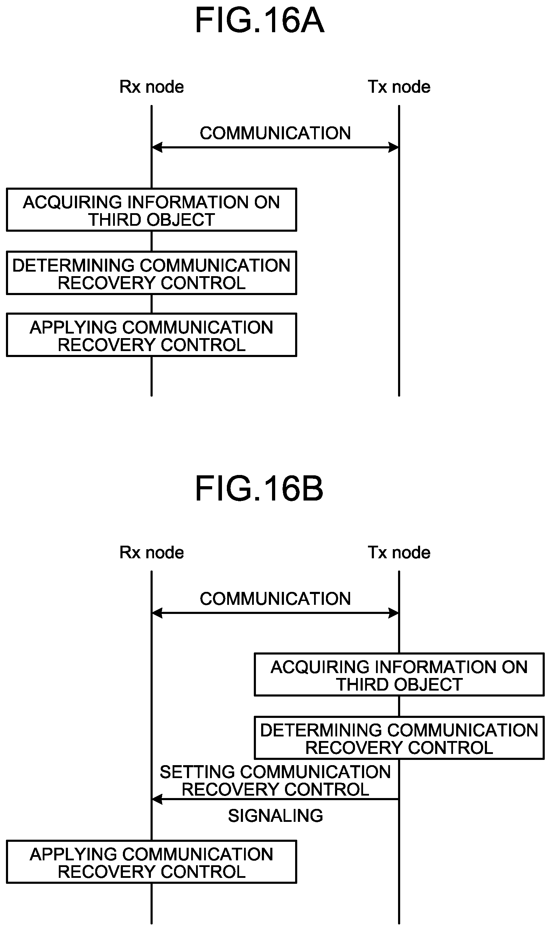

In this example, the device that has acquired the information on the third object performs the communication recovery control. FIG. 16A is a diagram illustrating an example of the control sequence according to the basic mode. In the example in FIG. 16A, the reception device executes (S1) Step of acquiring information on the third object by sensing, (S2) Step of making a determination regarding communication recovery control based on the information on the third object, and (S3) Step of applying the communication recovery control based on the determination. Note that the transmission device may execute the processing in (S1) to (S3).

In this example, the processing from (S1) to (S3) is completed in one device. Therefore, signaling from another device for the communication recovery control is unnecessary.

(A2) Sequence example in which a device different from the device that has acquired the information on the third object performs the communication recovery control

In this example, the device different from the device that has acquired the information on the third object performs the communication recovery control. FIG. 16B is a diagram illustrating another example of the control sequence according to the basic mode. In the example in FIG. 16B, the transmission device executes (S1) Step of acquiring information on the third object by sensing and (S2) Step of making a determination regarding communication recovery control based on the information on the third object. Then, the reception device executes (S3) Step of applying the communication recovery control based on the determination of the transmission device. Note that the reception device may execute the processing in (S1) and (S2), and the reception device may execute the processing in (S3).

In this example, signaling related to the communication recovery control determined is required. For example, it is necessary to transmit information (hereinafter referred to as configuration information) for applying the communication recovery control from the device determining the communication recovery control (e.g., transmission device) to the device executing the communication recovery control (e.g., reception device). When the transmission device is the base station 20 and the reception device is the terminal device 30, the configuration information is transmitted, for example, through the downlink. For example, the configuration information is transmitted by RRC signaling, MAC CE, and/or downlink control information (DCI). When both the transmission device and the reception device are the terminal device 30, the configuration information is transmitted, for example, through the sidelink. For example, the configuration information is transmitted by sidelink RRC signaling and/or sidelink control information (SCI).

<Control sequence example (first application)>

Next, a control sequence example according to a first application will be described.

In the first application, the reception device makes the determination regarding the communication recovery control. As control sequence examples according to the first application, the following (B1) to (B3) are assumed. In the first application, a device that makes the determination regarding the communication recovery control and a device that acquires the information on the third object by sensing are different devices. In addition, in the first application, the device that makes the determination regarding the communication recovery control and a device to which the communication recovery control is applied are the same device.

(B1) Sequence example in which the transmission device acquires the information on the third object

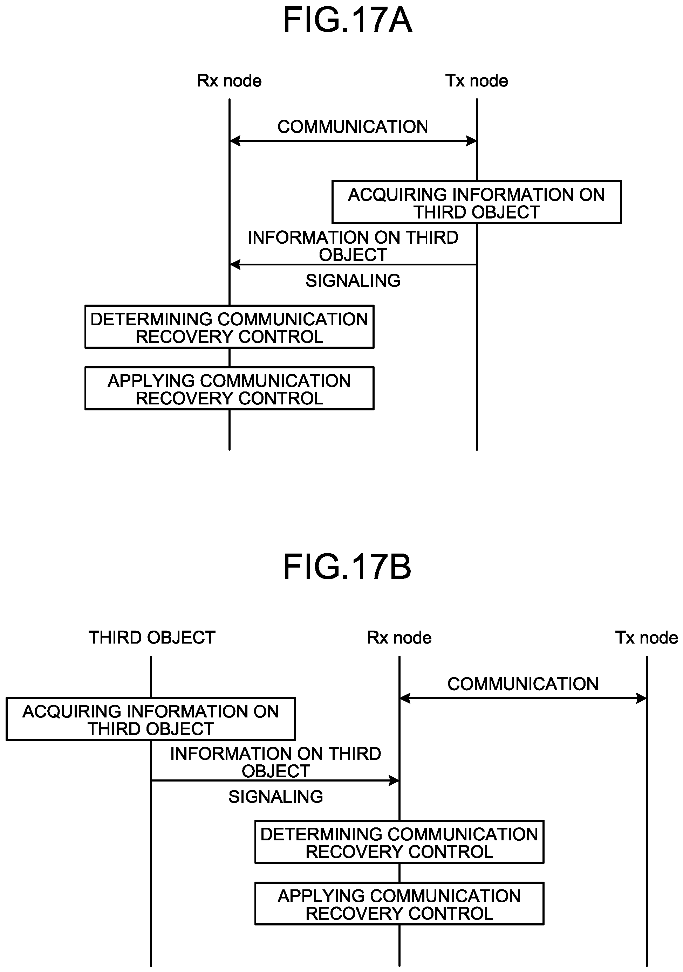

FIG. 17A is a diagram illustrating an example of the control sequence according to the first application. In the example in FIG. 17A, the transmission device executes (S1) Step of acquiring information on the third object by sensing. Then, the transmission device transmits the information on the third object to the reception device. The reception device executes (S2) Step of making a determination regarding communication recovery control based on the information on the third object and (S3) Step of applying the communication recovery control based on the determination.

In this example, it is necessary to transmit the information on the third object from the transmission device to the reception device. When the transmission device is the terminal device 30 and the reception device is the base station 20, the information on the third object is transmitted, for example, through the uplink. For example, the information on the third object is sent in a measurement report, the MAC CE, and/or uplink control information (UCI) in the RRC layer. When both the transmission device and the reception device are the terminal device 30, the information on the third object is transmitted, for example, through the sidelink. For example, the information on the third object is transmitted through sidelink RRC signaling and/or SCI.

(B2) Sequence example in which the third object acquires the information on the third object

FIG. 17B is a diagram illustrating another example of the control sequence according to the first application. In the example in FIG. 17B, the third object is a device having a communication function. In the example in FIG. 17B, the third object executes (S1) Step of acquiring information on the third object by sensing. Then, the third object transmits the information on the third object to the reception device. The reception device executes (S2) Step of making a determination regarding communication recovery control based on the information on the third object and (S3) Step of applying the communication recovery control based on the determination.

In this example, it is necessary to transmit the information on the third object from the third object to the reception device. When the reception device is the base station 20 and the third object is a device that communicates with the base station 20, the information on the third object is transmitted, for example, through the uplink. When the reception device is the terminal device 30 and the third object is a device that communicates with the terminal device 30, the information on the third object is transmitted, for example, through the sidelink. Note that the radio access technology (RAT) used by the third object to transmit the information on the third object is not limited to cellular communication. For example, the third object may transmit the information on the third object using another RAT, for example, Wi-Fi or Bluetooth.

In this example, the third object itself acquires the information on the third object by sensing. Therefore, the reception device can determine the communication recovery control based on highly-accurate information on the third object.

(B3) Sequence example in which the third communication apparatus acquires the information on the third object

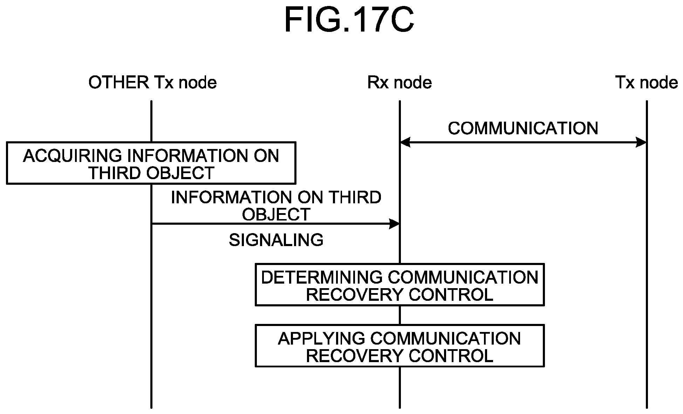

FIG. 17C is a diagram illustrating another example of the control sequence according to the first application. In the example in FIG. 17C, the third communication apparatus executes (S1) Step of acquiring information on the third object by sensing. Then, the third communication apparatus transmits the information on the third object to the reception device. The reception device executes (S2) Step of making a determination regarding communication recovery control based on the information on the third object and (S3) Step of applying the communication recovery control based on the determination.

In this example, it is necessary to transmit the information on the third object from the third communication apparatus to the reception device. When the reception device is the base station 20 and the third communication apparatus is another base station 20, the information on the third object is transmitted via, for example, a predetermined interface (e.g., Xn interface or NG interface). When the reception device is the terminal device 30 and the third communication apparatus is the base station 20, the information on the third object is transmitted, for example, through the downlink. When the reception device is the terminal device 30 and the third communication apparatus is another terminal device 30, the information on the third object is transmitted, for example, through the sidelink. Note that the radio access technology (RAT) used by the third communication apparatus to transmit the information on the third object is not limited to cellular communication. For example, the third communication apparatus may transmit the information on the third object using another RAT such as Wi-Fi or Bluetooth.

<Control sequence example (second application)>

Next, control sequence examples according to a second application will be described.

In the second application, the transmission device makes the determination regarding the communication recovery control. As the control sequence examples according to the second application, the following (C1) to (C4) are assumed. In the second application, a device determining the communication recovery control and a device to which the communication recovery control is applied are different devices.

(C1) Sequence example in which the reception device acquires the information on the third object

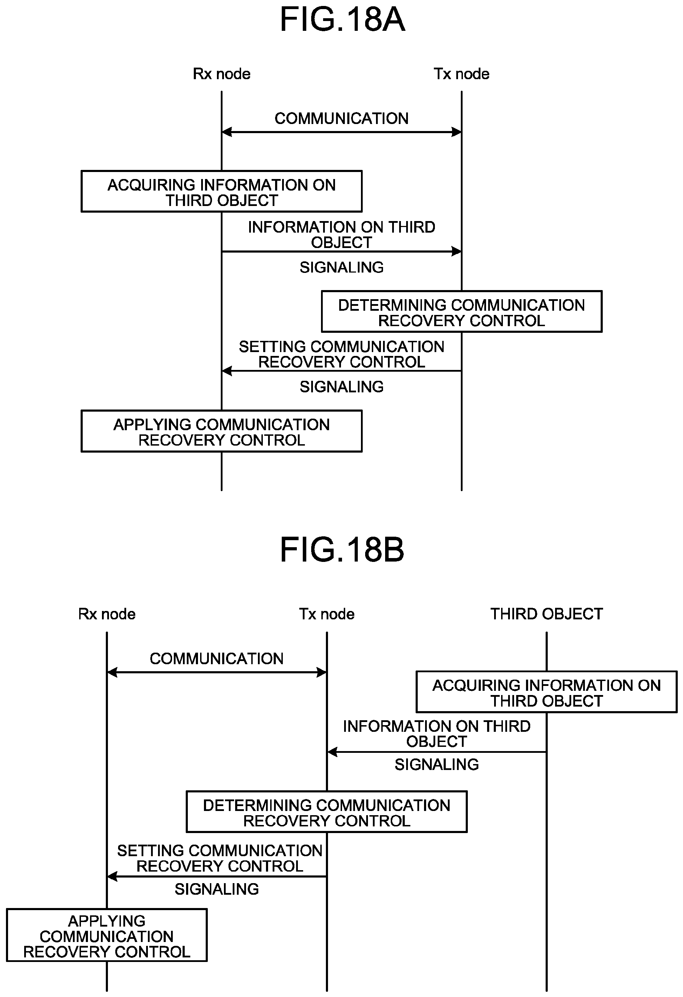

FIG. 18A is a diagram illustrating an example of a control sequence according to the second application. In the example in FIG. 18A, the reception device executes (S1) Step of acquiring information on the third object by sensing. Then, the reception device transmits the information on the third object to the transmission device. The transmission device executes (S2) Step of making a determination regarding communication recovery control based on the information on the third object. Then, the transmission device transmits information regarding the determination to the reception device. The reception device executes (S3) Step of applying the communication recovery control based on the determination of the transmission device.

In this example, it is necessary to transmit the information on the third object from the reception device to the transmission device. When the reception device is the terminal device 30 and the transmission device is the base station 20, the information on the third object is transmitted through the uplink. When both the transmission device and the reception device are the terminal device 30, the information on the third object is transmitted, for example, through the sidelink.

In this example, it is necessary to transmit information for applying the communication recovery control (hereinafter referred to as configuration information) from the transmission device to the reception device. When the transmission device is the base station 20 and the reception device is the terminal device 30, the configuration information is transmitted, for example, through the downlink. When both the transmission device and the reception device are the terminal device 30, the configuration information is transmitted, for example, through the sidelink.

(C2) Sequence example in which the third object acquires the information on third object

FIG. 18B is a diagram illustrating another example of the control sequence according to the second application. In the example in FIG. 18B, the third object is a device having the communication function. In the example in FIG. 18B, the third object executes (S1) Step of acquiring information on the third object by sensing. Then, the third object transmits the information on the third object to the transmission device. The transmission device executes (S2) Step of making a determination regarding communication recovery control based on the information on the third object. Then, the transmission device transmits information regarding the determination to the reception device. The reception device executes (S3) Step of applying the communication recovery control based on the determination of the transmission device.

In this example, it is necessary to transmit the information on the third object from the third object to the transmission device. When the transmission device is the base station 20 and the third object is a device communicating with the base station 20, the information on the third object is transmitted, for example, through the uplink. When the transmission device is the terminal device 30 and the third object is a device communicating with the terminal device 30, the information on the third object is transmitted through, for example, the sidelink. Note that the RAT used by the third object to transmit the information on the third object is not limited to cellular communication. The third object may transmit the information on the third object using another RAT such as Wi-Fi or Bluetooth.

Further, in this example, it is necessary to transmit the configuration information from the transmission device to the reception device. The configuration information is transmitted similarly to the above-described sequence example (C1).

In this example, the third object itself acquires the information on the third object by sensing. Therefore, the transmission device can determine the communication recovery control based on highly-accurate information on the third object.

(C3) Sequence example in which the third communication apparatus acquires the information on the third object

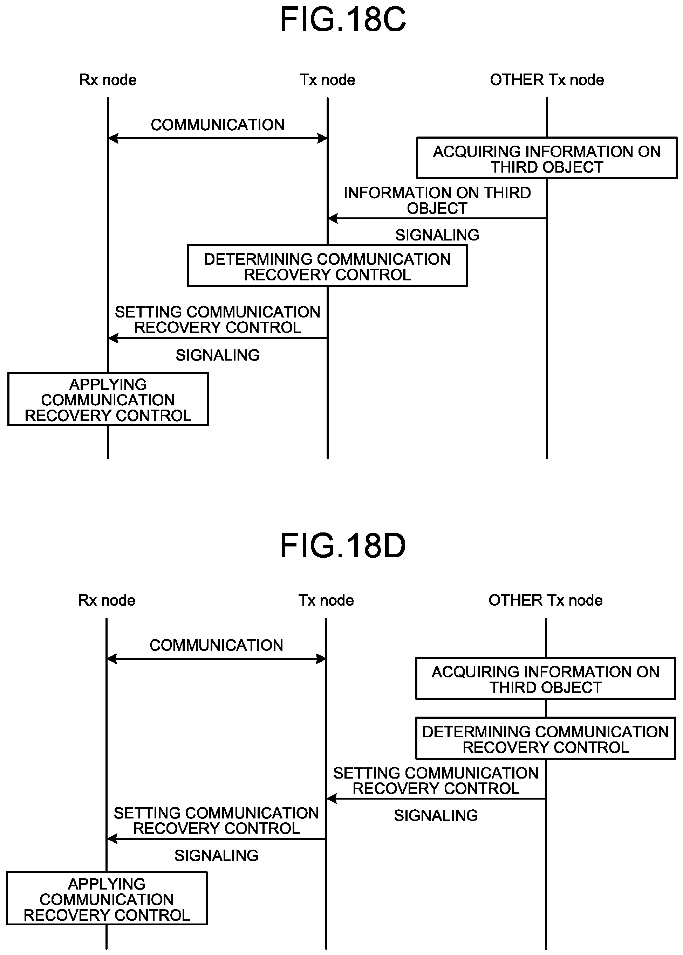

FIG. 18C is a diagram illustrating another example of the control sequence according to the second application. In the example in FIG. 18C, the third communication apparatus executes (S1) Step of acquiring information on the third object by sensing. Then, the third communication apparatus transmits the information on the third object to the transmission device. The transmission device executes (S2) Step of making a determination regarding communication recovery control based on the information on the third object. Then, the transmission device transmits information regarding the determination to the reception device. The reception device executes (S3) Step of applying the communication recovery control based on the determination of the transmission device.

In this example, it is necessary to transmit the information on the third object from the third communication apparatus to the transmission device. When the transmission device is the base station 20 and the third communication apparatus is another base station 20, the information on the third object is transmitted via, for example, a predetermined interface (e.g., Xn interface or NG interface). When the transmission device is the base station 20 and the third communication apparatus is the terminal device 30, the information on the third object is transmitted, for example, through the uplink. When the transmission device is the terminal device 30 and the third communication apparatus is the base station 20, the information on the third object is transmitted, for example, through the downlink. When the transmission device is the terminal device 30 and the third communication apparatus is another terminal device 30, the information on the third object is transmitted, for example, through the sidelink. Note that the RAT used by the third communication apparatus to transmit the information on the third object is not limited to cellular communication. The third communication apparatus may transmit the information on the third object using another RAT such as Wi-Fi or Bluetooth.

Further, in this example, it is necessary to transmit the configuration information from the transmission device to the reception device. The configuration information is transmitted similarly to the above-described sequence example (C1).

(C4) Sequence example in which the transmission device (or third communication apparatus) acquires the information on the third object

FIG. 18D is a diagram illustrating another example of the control sequence according to the second application. In the example in FIG. 18D, the transmission device (or the third communication apparatus) executes (S1) Step of acquiring information on the third object by sensing and (S2) Step of making a determination regarding communication recovery control based on the information on the third object. Then, the transmission device (or the third communication apparatus) transmits information regarding the determination to the reception device via the third communication apparatus (or the transmission device). The reception device executes (S3) Step of applying the communication recovery control based on the determination of the transmission device (or the third communication apparatus).

In this example, it is necessary to transmit information for applying the communication recovery control (hereinafter referred to as configuration information) from the transmission device to the reception device. When the transmission device is the base station 20 (e.g., donor base station), the third communication apparatus is the relay station (e.g., IAB node), and the reception device is the terminal device 30, the configuration information is transmitted, for example, through a backhaul link and the downlink (downlink of an access link). When the transmission device, the third communication apparatus, and the reception device are all the terminal device 30, the configuration information is transmitted, for example, through the sidelink.

<Control sequence example (third application)>

Next, control sequence examples of a third application will be described.

In the third application, the third communication apparatus or the third object makes a determination regarding the communication recovery control. As control sequence examples according to the third application, the following (D1) to (D5) are assumed. In the third application, a device making a determination regarding the communication recovery control and a device to which the communication recovery control is applied are different devices.

(D1) Sequence example in which the transmission device acquires the information on the third object

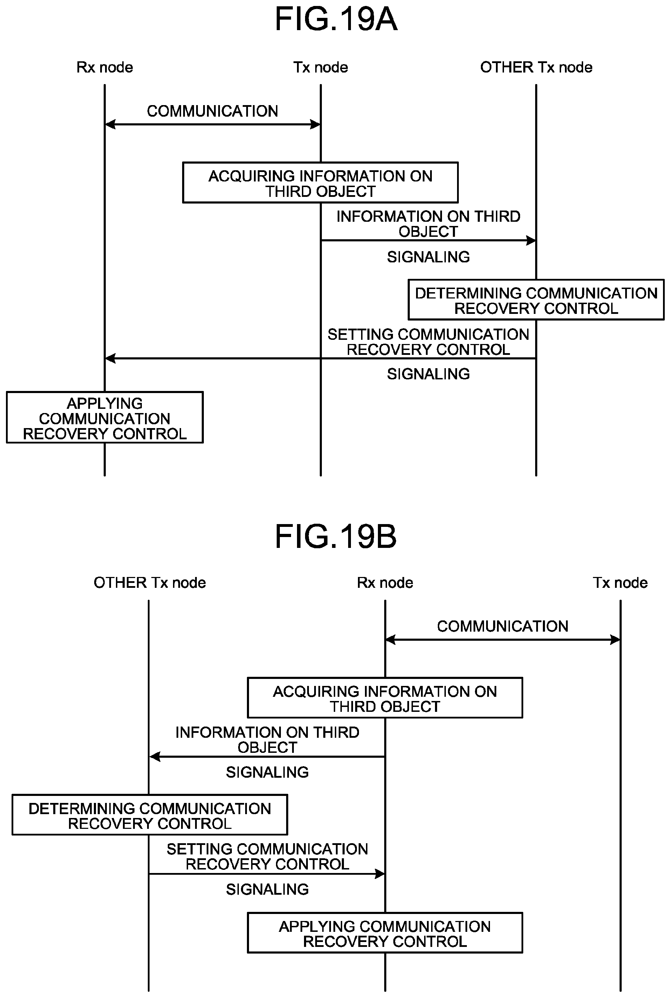

FIG. 19A is a diagram illustrating an example of the control sequence according to the third application. In the example in FIG. 19A, the transmission device executes (S1) Step of acquiring information on the third object by sensing. Then, the transmission device transmits the information on the third object to the third communication apparatus. The third communication apparatus executes (S2) Step of making a determination regarding communication recovery control based on the information on the third object. Then, the third communication apparatus transmits information regarding the determination to the reception device. The reception device executes (S3) Step of applying the communication recovery control based on the determination of the third communication apparatus.

In this example, it is necessary to transmit the information on the third object from the transmission device to the third communication apparatus. When the transmission device is the base station 20 and the third communication apparatus is another base station 20, the information on the third object is transmitted via, for example, a predetermined interface (e.g., Xn interface or NG interface). When the transmission device is the terminal device 30 and the third communication apparatus is the base station 20, the information on the third object is transmitted, for example, through the uplink. When the transmission device is the base station 20 and the third communication apparatus is the terminal device 30, the information on the third object is transmitted, for example, through the downlink. When the transmission device is the terminal device 30 and the third communication apparatus is another terminal device 30, the information on the third object is transmitted, for example, through the sidelink. Note that the RAT used by the transmission device to transmit the information on the third object is not limited to cellular communication. The transmission device may transmit the information on the third object using another RAT such as Wi-Fi or Bluetooth.

In this example, it is necessary to transmit information for applying the communication recovery control (hereinafter referred to as configuration information) from the third communication apparatus to the reception device. When the reception device is the base station 20 and the third communication apparatus is another base station 20, the configuration information is transmitted via, for example, a predetermined interface (e.g., Xn interface or NG interface). When the reception device is the base station 20 and the third communication apparatus is the terminal device 30, the configuration information is transmitted, for example, through the uplink. When the reception device is the terminal device 30 and the third communication apparatus is the base station 20, the configuration information is transmitted, for example, through the downlink. When the reception device is the terminal device 30 and the third communication apparatus is another terminal device 30, the configuration information is transmitted, for example, through the sidelink. Note that the RAT used by the third communication apparatus to transmit the configuration information is not limited to cellular communication. The third communication apparatus may transmit the configuration information using another RAT such as Wi-Fi or Bluetooth.

Note that the third communication apparatus illustrated in the example in FIG. 19A can be replaced with the third object. In other words, the third object may make a determination regarding the communication recovery control based on the information on the third object received from the reception device.

(D2) Sequence example in which the reception device acquires the information on the third object

FIG. 19B is a diagram illustrating another example of the control sequence according to the third application. In the example in FIG. 19B, the reception device executes (S1) Step of acquiring information on the third object by sensing. Then, the reception device transmits the information on the third object to the third communication apparatus. The third communication apparatus executes (S2) Step of making a determination regarding communication recovery control based on the information on the third object. Then, the third communication apparatus transmits information regarding the determination to the reception device. The reception device executes (S3) Step of applying the communication recovery control based on the determination of the third communication apparatus.

In this example, it is necessary to transmit the information on the third object from the reception device to the third communication apparatus. When the reception device is the base station 20 and the third communication apparatus is another base station 20, the information on the third object is transmitted via, for example, a predetermined interface (e.g., Xn interface or NG interface). When the reception device is the terminal device 30 and the third communication apparatus is the base station 20, the information on the third object is transmitted, for example, through the uplink. When the reception device is the base station 20 and the third communication apparatus is the terminal device 30, the information on the third object is transmitted, for example, through the downlink. When the reception device is the terminal device 30 and the third communication apparatus is another terminal device 30, the information on the third object is transmitted, for example, through the sidelink. Note that the radio access technology (RAT) used by the reception device to transmit the information on the third object is not limited to cellular communication. The reception device may transmit the information on the third object by using another RAT such as Wi-Fi or Bluetooth.

In this example, it is necessary to transmit information for applying the communication recovery control (hereinafter referred to as configuration information) from the third communication apparatus to the reception device. When the reception device is the base station 20 and the third communication apparatus is another base station 20, the configuration information is transmitted via, for example, a predetermined interface (e.g., Xn interface or NG interface). When the reception device is the base station 20 and the third communication apparatus is the terminal device 30, the configuration information is transmitted, for example, through the uplink. When the reception device is the terminal device 30 and the third communication apparatus is the base station 20, the configuration information is transmitted, for example, through the downlink. When the reception device is the terminal device 30 and the third communication apparatus is another terminal device 30, the configuration information is transmitted, for example, through the sidelink. Note that the RAT used by the third communication apparatus to transmit the configuration information is not limited to cellular communication. The third communication apparatus may transmit the configuration information using another RAT such as Wi-Fi or Bluetooth.

Note that the third communication apparatus illustrated in the example in FIG. 19B can be replaced with the third object. In other words, the third object may make a determination regarding the communication recovery control based on the information on the third object received from the transmission device.

(D3) Sequence example in which the third communication apparatus acquires the information on the third object

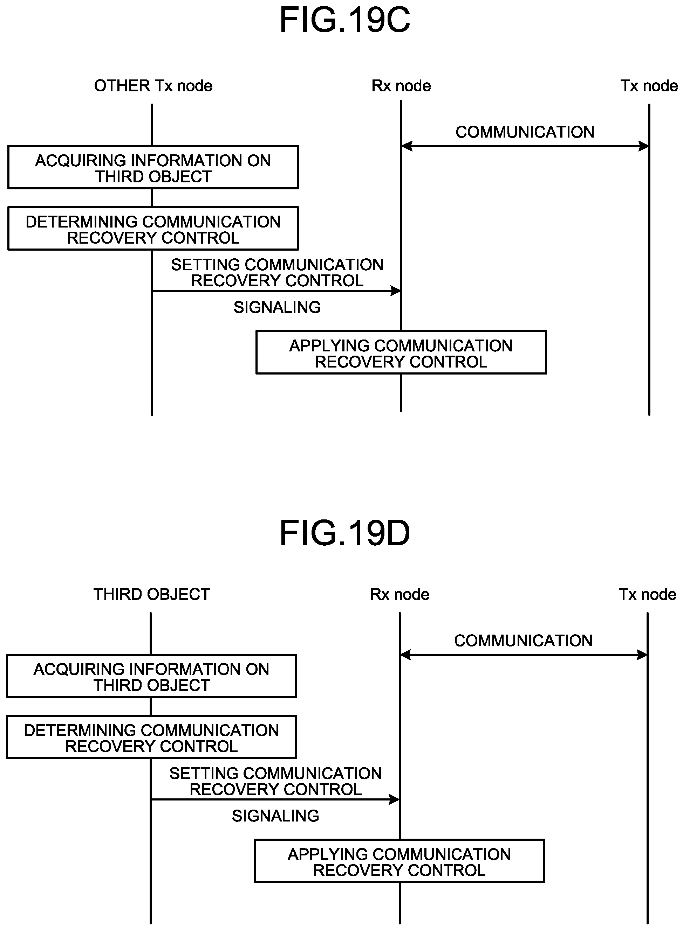

FIG. 19C is a diagram illustrating another example of the control sequence according to the third application. In the example of FIG. 19 C, the third communication apparatus executes (S1) Step of acquiring information on the third object by sensing and (S2) Step of making a determination regarding communication recovery control based on the information on the third object. Then, the third communication apparatus transmits information regarding the determination to the reception device. The reception device executes (S3) Step of applying the communication recovery control based on the determination of the third communication apparatus.

In this example, it is necessary to transmit the configuration information from the third communication apparatus to the reception device. The configuration information is transmitted similarly to the above-described sequence example (D2).

(D4) Sequence example in which the third object acquires the information on the third object

FIG. 19D is a diagram illustrating another example of the control sequence according to the third application. In the example in FIG. 19D, the third object executes (S1) Step of acquiring information on the third object by sensing and (S2) Step of making a determination regarding communication recovery control based on the information on the third object. Then, the third object transmits information regarding the determination to the reception device. The reception device executes (S3) Step of applying the communication recovery control based on the determination of the third object.

In this example, it is necessary to transmit the configuration information from the third object to the reception device. When the reception device is the base station 20 and the third object is a device communicating with the base station 20, the configuration information is transmitted, for example, through the uplink. When the reception device is the terminal device 30 and the third object is a device communicating with the terminal device 30, the configuration information is transmitted, for example, through the sidelink. Note that the RAT used by the third object to transmit the configuration information is not limited to cellular communication. The third object may transmit the information on the third object using another RAT such as Wi-Fi or Bluetooth.

In this example, the third object itself acquires the information on the third object by sensing. Therefore, the third object can determine the communication recovery control based on highly-accurate information on the third object.

(D5) Sequence example in which the third object acquires the information on the third object

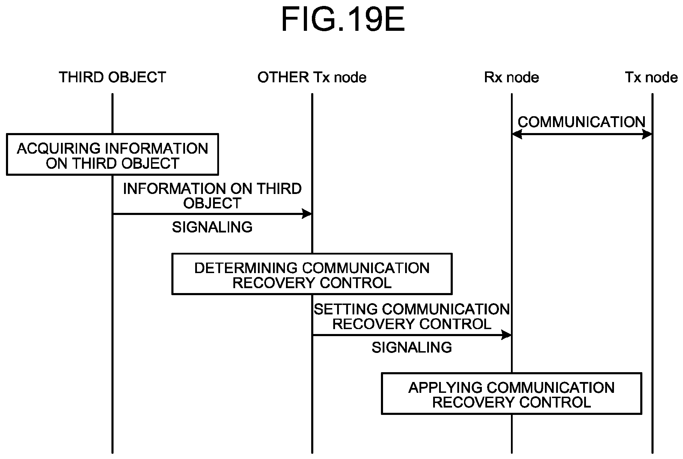

FIG. 19E is a diagram illustrating another example of the control sequence according to the third application. In the example in FIG. 19E, the third object executes (S1) Step of acquiring information on the third object by sensing. Then, the third object transmits the information on the third object to the third communication apparatus. The third communication apparatus executes (S2) Step of making a determination regarding communication recovery control based on the information on the third object. Then, the third communication apparatus transmits information regarding the determination to the reception device. The reception device executes (S3) Step of applying the communication recovery control based on the determination of the third communication apparatus.

In this example, it is necessary to transmit the information on the third object from the third object to the third communication apparatus. When the third communication apparatus is the base station 20 and the third object is a device communicating with the base station 20, the information on the third object is transmitted, for example, through the uplink. When the third communication apparatus is the terminal device 30 and the third object is a device communicating with the terminal device 30, the information on the third object is transmitted, for example, through the sidelink. Note that the RAT used by the third object to transmit the information on the third object is not limited to cellular communication. The third object may transmit the information on the third object using another RAT such as Wi-Fi or Bluetooth.

In this example, it is necessary to transmit the configuration information from the third communication apparatus to the reception device. The configuration information is transmitted similarly to the above-described sequence example (D2).

In this example, the third object itself acquires the information on the third object by sensing. Therefore, the third communication apparatus can determine the communication recovery control based on highly-accurate information on the third object.

Note that the third communication apparatus and the third object illustrated in the example in FIG. 19E are interchangeable. In other words, the third object may make a determination regarding the communication recovery control based on the information on the third object received from the third communication apparatus.

<Control sequence example (fourth application)>

Next, control sequence examples according to a fourth application will be described.

In the fourth application, the third communication apparatus or the third object makes a determination regarding communication recovery control. Then, the third communication apparatus or the third object causes the reception device to execute the communication recovery control via the transmission device. Accordingly, even when the third communication apparatus or the third object cannot directly communicate with the reception device, the reception device can be caused to execute the communication recovery control.

In the fourth application, signaling for setting the communication recovery control is sent via the transmission device. At this time, the transmission device may reconfigure the communication recovery control. For example, the transmission device receives the signaling for setting the communication recovery control from the third communication apparatus. Then, the transmission device may further reconfigure the communication recovery control based on the radio quality. On the other hand, the reconfiguration function may be disabled. In other words, the transmission device whose reconfiguration function is disabled may provide the reception device with the same information as the signaling for setting the communication recovery control from another device.

As control sequence examples according to the fourth application, the following (E1) to (E5) are assumed. In the fourth application, a device making a determination regarding communication recovery control and a device to which the communication recovery control is applied are different devices.

(E1) Sequence example in which the third communication apparatus acquires the information on the third object

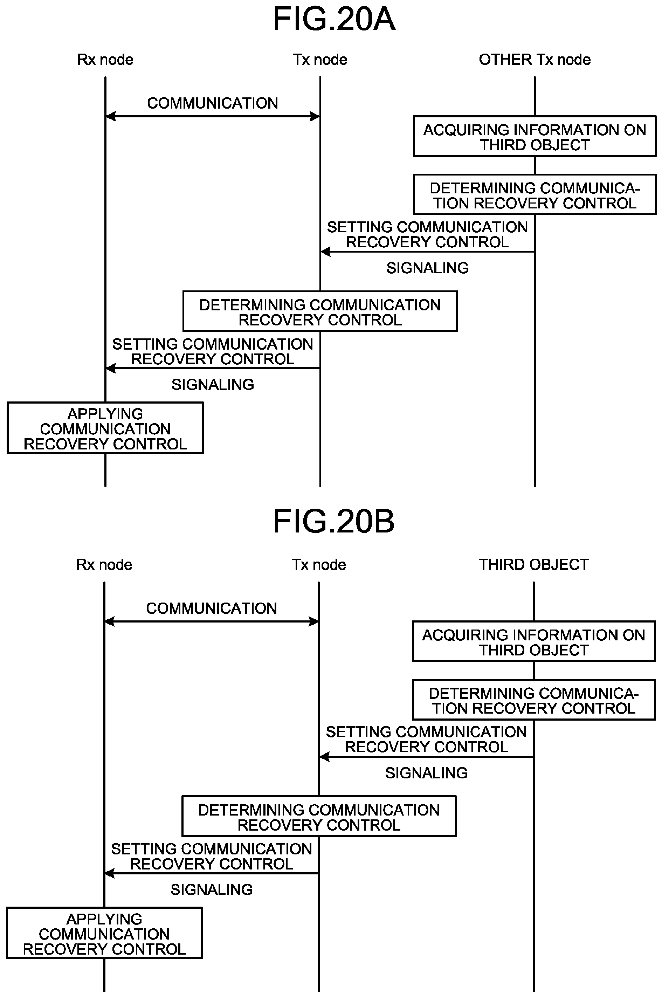

FIG. 20A is a diagram illustrating an example of the control sequence according to the fourth application. In the example in FIG. 20A, the third communication apparatus executes (S1) Step of acquiring information on the third object by sensing and (S2) Step of making a determination regarding communication recovery control based on the information on the third object. Then, the third communication apparatus transmits information regarding the determination to the reception device via the transmission device. The transmission device may make a determination regarding the communication recovery control again based on the information received from the third communication apparatus. The reception device executes (S3) Step of applying the communication recovery control based on the determination of the third communication apparatus or the transmission device.

In this example, it is necessary to transmit information for causing the reception device to apply the communication recovery control (hereinafter referred to as configuration information) from the third communication apparatus to the transmission device. When the transmission device is the base station 20 and the third communication apparatus is another base station 20, the configuration information is transmitted via, for example, a predetermined interface (e.g., Xn interface or NG interface). When the transmission device is the base station 20 and the third communication apparatus is the terminal device 30, the configuration information is transmitted, for example, through the uplink. When the transmission device is the terminal device 30 and the third communication apparatus is the base station 20, the configuration information is transmitted, for example, through the downlink. When the transmission device is the terminal device 30 and the third communication apparatus is another terminal device 30, the configuration information is transmitted, for example, through the sidelink. Note that the RAT used by the third communication apparatus to transmit the configuration information is not limited to cellular communication. The third communication apparatus may transmit the configuration information using another RAT such as Wi-Fi or Bluetooth.

Further, in this example, it is necessary to transmit the configuration information from the transmission device to the reception device. When the transmission device is the base station 20 (e.g., donor base station), the third communication apparatus is the relay station (e.g., IAB node), and the reception device is the terminal device 30, the configuration information is transmitted, for example, through the backhaul link and the downlink (downlink of an access link). When the transmission device, the third communication apparatus, and the reception device are all the terminal device 30, the configuration information is transmitted, for example, through the sidelink.

(E2) Sequence example in which the third object acquires the information on the third object

FIG. 20B is a diagram illustrating another example of the control sequence according to the fourth application. In the example in FIG. 20B, the third object executes (S1) Step of acquiring information on the third object by sensing and (S2) Step of making a determination regarding communication recovery control based on the information on the third object. Then, the third object transmits information regarding the determination to the reception device via the transmission device. The transmission device may make a determination regarding the communication recovery control again based on the information received from the third object. The reception device executes (S3) Step of applying the communication recovery control based on the determination of the third object or the transmission device.

In this example, it is necessary to transmit the configuration information from the third object to the transmission device. When the transmission device is the base station 20 and the third object is a device communicating with the base station 20, the configuration information is transmitted, for example, through the uplink. When the transmission device is the terminal device 30 and the third object is a device communicating with the terminal device 30, the configuration information is transmitted, for example, through the sidelink. Note that the RAT used by the third object to transmit the configuration information is not limited to cellular communication. The third object may transmit the configuration information using another RAT such as Wi-Fi or Bluetooth.

Further, in this example, it is necessary to transmit the configuration information from the transmission device to the reception device. The configuration information is transmitted from the transmission device to the reception device similarly to the above-described sequence example (E1).

In this example, the third object itself acquires the information on the third object by sensing. Therefore, the third object or the transmission device can determine the communication recovery control based on highly-accurate information on the third object.

(E3) Sequence example in which the third object acquires the information on the third object

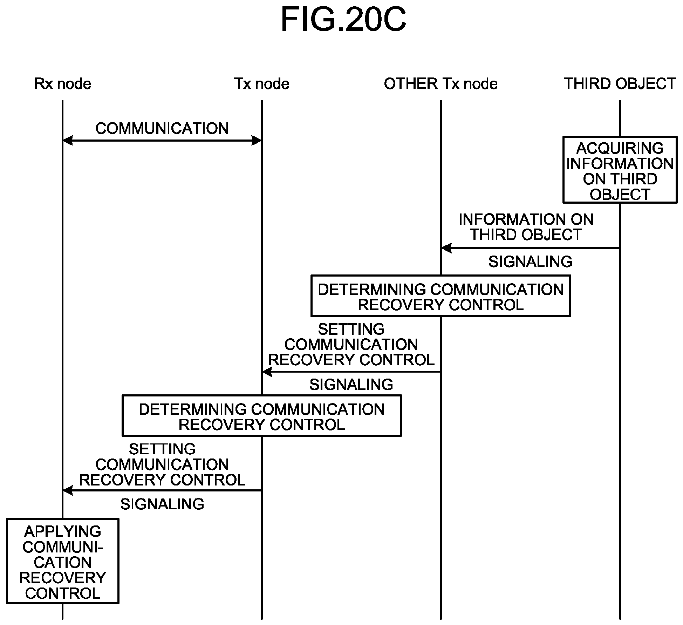

FIG. 20C is a diagram illustrating another example of the control sequence according to the fourth application. In the example in FIG. 20C, the third object executes (S1) Step of acquiring information on the third object by sensing. Then, the third object transmits the information on the third object to the third communication apparatus. The third communication apparatus executes (S2) Step of making a determination regarding communication recovery control based on the information on the third object.

Then, the third communication apparatus transmits information regarding the determination to the reception device via the transmission device. The transmission device may make a determination regarding the communication recovery control again based on the information received from the third communication apparatus. The reception device executes (S3) Step of applying the communication recovery control based on the determination of the third communication apparatus or the transmission device.

In this example, it is necessary to transmit the information on the third object from the third object to the third communication apparatus. When the third communication apparatus is the base station 20 and the third object is a device communicating with the base station 20, the information on the third object is transmitted, for example, through the uplink. When the third communication apparatus is the terminal device 30 and the third object is a device communicating with the terminal device 30, the information on the third object is transmitted, for example, through the sidelink, Note that the RAT used by the third object to transmit the configuration information is not limited to cellular communication. The third object may transmit the configuration information using another RAT such as Wi-Fi or Bluetooth.

In this example, it is necessary to transmit the configuration information from the third communication apparatus to the transmission device. The configuration information is transmitted from the third communication apparatus to the transmission device similarly to the above-described sequence example (E1).

Further, in this example, it is necessary to transmit the configuration information from the transmission device to the reception device. The configuration information is transmitted from the transmission device to the reception device similarly to the above-described sequence example (E1).

In this example, the third object itself acquires the information on the third object by sensing. Therefore, the third communication apparatus or the transmission device can determine the communication recovery control based on highly-accurate information on the third object.

Note that the third communication apparatus and the third object illustrated in the example in FIG. 20C are interchangeable. In other words, the third object may make a determination regarding the communication recovery control based on the information on the third object received from the third communication apparatus.

(E4) Sequence example in which the transmission device acquires the information on the third object

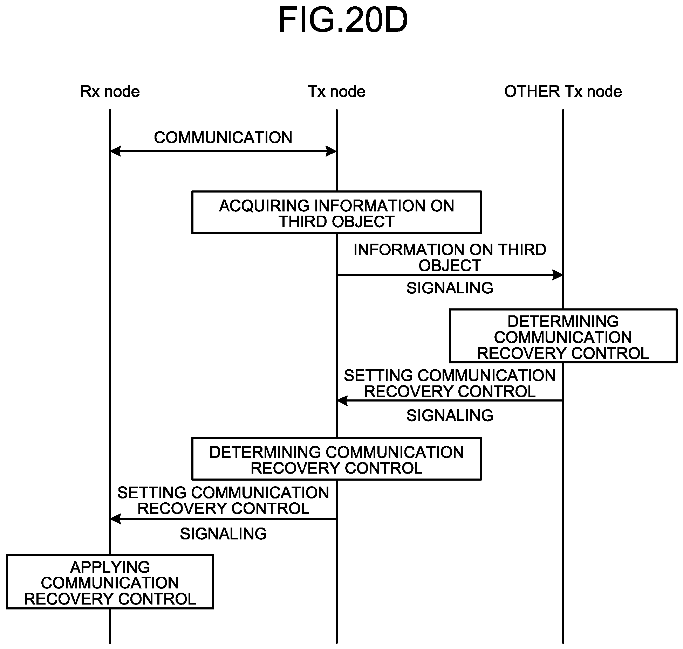

FIG. 20D is a diagram illustrating another example of the control sequence according to the fourth application. In the example in FIG. 20D, the transmission device executes (S1) Step of acquiring information on the third object by sensing. Then, the transmission device transmits the information on the third object to the third communication apparatus. The third communication apparatus executes (S2) Step of making a determination regarding communication recovery control based on the information on the third object. Then, the third communication apparatus transmits information regarding the determination to the reception device via the transmission device. The transmission device may make a determination regarding the communication recovery control again based on the information received from the third communication apparatus. The reception device executes (S3) Step of applying the communication recovery control based on the determination of the third communication apparatus or the transmission device.

In this example, it is necessary to transmit the information on the third object from the third communication apparatus to the transmission device. When the transmission device is the base station 20 and the third communication apparatus is another base station 20, the information on the third object is transmitted via, for example, a predetermined interface (e.g., Xn interface or NG interface). When the transmission device is the base station 20 and the third communication apparatus is the terminal device 30, the information on the third object is transmitted, for example, through the uplink. When the transmission device is the terminal device 30 and the third communication apparatus is the base station 20, the information on the third object is transmitted, for example, through the downlink. When the transmission device is the terminal device 30 and the third communication apparatus is another terminal device 30, the information on the third object is transmitted, for example, through the sidelink. Note that the RAT used by the third communication apparatus to transmit the configuration information is not limited to cellular communication. The third communication apparatus may transmit the configuration information using another RAT such as Wi-Fi or Bluetooth.

In this example, it is necessary to transmit the configuration information from the third communication apparatus to the transmission device. The configuration information is transmitted from the third communication apparatus to the transmission device similarly to the above-described sequence example (E1).

Further, in this example, it is necessary to transmit the configuration information from the transmission device to the reception device. The configuration information is transmitted from the transmission device to the reception device similarly to the above-described sequence example (E1).

Note that the third communication apparatus and the third object illustrated in the example in FIG. 20D are interchangeable. In other words, the third object may make a determination regarding the communication recovery control based on the information on the third object received from the transmission device.

(E5) Sequence example in which the reception device acquires the information on the third object

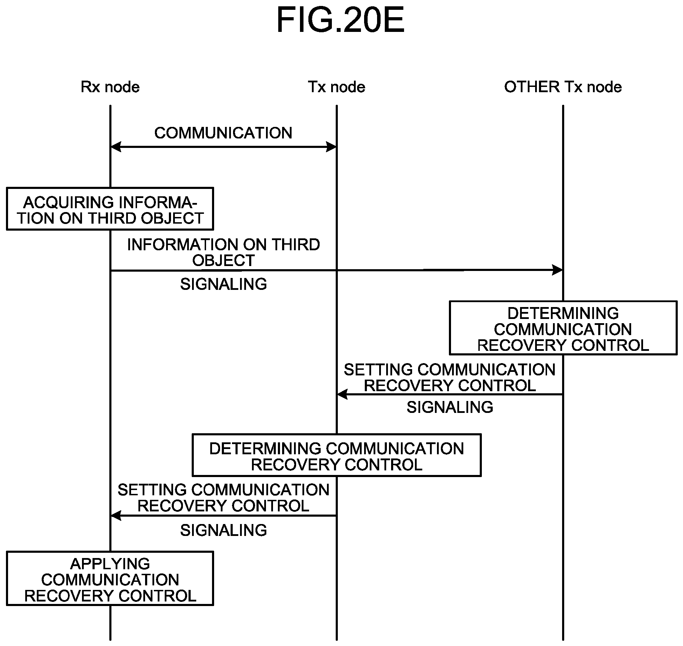

FIG. 20E is a diagram illustrating another example of the control sequence according to the fourth application. In the example in FIG. 20E, the reception device executes (S1) Step of acquiring information on the third object by sensing. Then, the reception device transmits the information on the third object to the third communication apparatus. The third communication apparatus executes (S2) Step of making a determination regarding communication recovery control based on the information on the third object. Then, the third communication apparatus transmits information regarding the determination to the reception device via the reception device. The reception device may make a determination regarding the communication recovery control again based on the information received from the third communication apparatus. The reception device executes (S3) Step of applying the communication recovery control based on the determination of the third communication apparatus or the reception device.

In this example, it is necessary to transmit the information on the third object from the third communication apparatus to the reception device. When the reception device is the base station 20 and the third communication apparatus is another base station 20, the information on the third object is transmitted via, for example, a predetermined interface (e.g., Xn interface or NG interface). When the reception device is the base station 20 and the third communication apparatus is the terminal device 30, the information related to the third object is transmitted, for example, through the uplink. When the reception device is the terminal device 30 and the third communication apparatus is the base station 20, the information on the third object is transmitted, for example, through the downlink. When the reception device is the terminal device 30 and the third communication apparatus is another terminal device 30, the information on the third object is transmitted, for example, through the sidelink. Note that the RAT used by the third communication apparatus to transmit the configuration information is not limited to cellular communication. The third communication apparatus may transmit the configuration information using another RAT such as Wi-Fi or Bluetooth.

In this example, it is necessary to transmit the configuration information from the third communication apparatus to the transmission device. The configuration information is transmitted from the third communication apparatus to the transmission device similarly to the above-described sequence example (E1).

Further, in this example, it is necessary to transmit the configuration information from the transmission device to the reception device. The configuration information is transmitted from the transmission device to the reception device similarly to the above-described sequence example (E1).

Note that the third communication apparatus and the third object illustrated in the example in FIG. 20E are interchangeable. In other words, the third object may make a determination regarding the communication recovery control based on the information on the third object received from the reception device.

<Trigger event based on third object information>

As described above, the communication recovery control is executed by the communication control unit (e.g., communication control unit 233 and/or communication control unit 333) of at least one of the transmission device and the reception device. The event for causing the communication control unit to execute the communication recovery control may be triggered at a timing when a predetermined condition (hereinafter also referred to as a trigger condition) is satisfied. For example, the communication apparatus (transmission device, reception device, third communication device, or third object) may make a determination for causing the communication control unit to execute the recovery control at a predetermined timing. As a result, it is possible to realize highly-accurate communication recovery control while reducing additional processing of the communication apparatus. As an example of the timing at which the event is triggered, the following Examples 1 to 7 are assumed.

· Example 1

The event may be triggered at a timing when the third object enters/exits a predetermined area. For example, the communication apparatus may make a determination for causing the communication control unit to execute the recovery control at a timing when the third object enters or exits the predetermined area determined based on at least one of the position information of the transmission device and the position information of the reception device.

At this time, the information on the third object acquired by sensing may include the position information of the third object.

The predetermined area may also be a zone calculated from a geographical distance. Alternatively, the distance may be a distance from a predetermined position. As an example of the predetermined position, a position of the communication apparatus configuring the communication link, an intermediate position of the communication link, or a minimum relative distance from the communication link is assumed.

The communication apparatus may trigger the event at a timing when a part of the third object enters/exits the predetermined area. In addition, the communication apparatus may also trigger the event at a timing when a portion of the third object enters/exits the predetermined area. For example, the communication apparatus may trigger the event at a timing when a predetermined percentage of the third object enters/exits the predetermined area. At this time, the predetermined percentage may be a preset value, or may be a value set between 0% and 100%, for example, as a parameter. The communication apparatus may also trigger the event at a timing when a central part of the third object enters/exits the predetermined area. At this time, the central part of the third object may be defined by a predetermined definition, or may be determined by implementation of the sensor.

Note that the communication apparatus may hold information regarding the size of the object defined as an offset.

Furthermore, the communication apparatus may change the size of the predetermined area based on the moving speed of the third object. For example, the communication apparatus may set the size of the predetermined area to a first size when the moving speed of the third object is faster than the predetermined speed, and may set the size of the predetermined area to a second size smaller than the first size when the moving speed of the third object is slower than the predetermined speed. Note that a plurality of predetermined areas may be defined. For example, a plurality of areas having different sizes may be defined as the predetermined area. Then, the communication apparatus may switch the area to be applied to the trigger event according to the moving speed of the third object.

· Example 2

The event may be triggered at a timing when the third object has approached/moved for a certain distance from a predetermined position. For example, the communication apparatus may make a determination for causing the communication control unit to execute the recovery control at a timing when a predetermined criterion is satisfied with respect to a relationship between a predetermined position determined based on at least the position information of the transmission device or the position information of the reception device and a position of the third object.

At this time, the information on the third object acquired by sensing may include the position information of the third object.

The communication apparatus may trigger the event at a timing when a relative distance between the predetermined position and the third object approaches/moves for a certain distance.

· Example 3

The event may be triggered based on a change in a line-of-sight (LOS)/non-line-of-sight (NLOS). For example, the communication apparatus may make a determination for causing the communication control unit to execute the recovery control at a timing when a change in the LOS/NLOS satisfies a predetermined criterion.

At this time, the information on the third object acquired by sensing may include the position information of the transmission device and the third object. Further, the information on the third object may include the position information of the reception device and the third object. Furthermore, the information on the third object may include propagation path information of the reception device or the transmission device.

For example, it is assumed that the communication apparatus that triggers the event is the reception device or the transmission device. At this time, the communication apparatus may determine the LOS/NLOS based on visual information. For example, the communication apparatus may determine the LOS when the communication apparatus as a partner of the communication link can be confirmed by the sensor (e.g., camera), and determine the NLOS when the communication apparatus as a partner of the communication link cannot be confirmed by the sensor.

In addition, it is assumed that the communication apparatus that triggers the event is the reception device. At this time, the communication apparatus may determine the LOS/NLOS based on a multipath or delay profile. For example, the communication apparatus may determine the LOS when the number of strong multipaths satisfying a predetermined criterion is smaller than a predetermined threshold, and determine the NLOS when the number of strong multipaths satisfying the predetermined criterion is smaller than the predetermined threshold. In addition, the communication apparatus determines the LOS when the strong path satisfying a predetermined criterion is received from a direction of the transmission device (e.g., when angle of arrival (AoA)/zenith angle of arrival (ZoA) of the strong path is in the direction of the transmission device), and determines the NLOS when the strong path is received from a direction other than the direction of the transmission device (when AoA/ZoA of the strong path is other than the direction of the transmission device).

Then, the communication apparatus may trigger the event at a timing when the communication environment between the reception device and the transmission device changes from the LOS to the NLOS or at a timing when the communication environment changes from the NLOS to the LOS.

· Example 4

The event may be triggered at a timing when the position of the third object has moved for a predetermined distance or more. For example, the communication apparatus may periodically measure the position of the third object and trigger the event at a timing when a difference from the previous position becomes larger than the predetermined distance. For example, the communication apparatus may make a determination to cause the communication control unit to execute the recovery control at a timing when the difference from the previous position becomes larger than the predetermined distance.

· Example 5

The event may be triggered at a timing when a predetermined or more change occurs in the moving speed of the third object. For example, the communication apparatus may make a determination for causing the communication control unit to execute the recovery control at a timing when a change in the moving speed of the third object satisfies a predetermined criterion. At this time, the moving speed of the third object may be a relative moving speed with respect to the reception device or the transmission device.

When the moving speed of the third object is slow, there is a possibility that the third object can be sufficiently followed by conventional radio link monitoring (RLM) or beam quality measurement. However, when the moving speed of the third object is high, there is a possibility that the third object cannot be followed by the RLM. Therefore, a trigger based on the sensor information is desirable.

· Example 6

The event may be triggered at a timing when a state of the third object changes. For example, the communication apparatus may make a determination for causing the communication control unit to execute the recovery control at a timing when a change in the state of the third object satisfies a predetermined criterion. For example, the communication apparatus may trigger the event at a timing when a change in orientation (moving direction) of the third object satisfies the predetermined criterion. In addition, the communication apparatus may trigger the event at a timing when a change in size (size) of the third object satisfies a predetermined criterion.

· Others

To average deviations in prediction, the communication apparatus may trigger the event when the trigger condition satisfies a predetermined number of times. For example, the communication apparatus determines that the event is satisfied only when the trigger condition is continuously satisfied a predetermined number of times at certain time intervals, and does not determine that the event is satisfied otherwise. The predetermined number of times may be a preset number of times or a number of times set by the RRC parameter.

<Fallback due to prediction failure>

The communication apparatus makes a determination regarding communication recovery control based on prediction of deterioration in quality of a communication link between the transmission device and the reception device due to an impact of the third object. Even when the event is triggered (e.g., even when the communication recovery control is executed), the communication apparatus may determine that the prediction of deterioration of the communication quality has failed when the communication quality of the communication link before switching does not deteriorate or when the communication quality of the communication link after switching is not improved as compared with that before the switching.

For example, it is assumed that the communication recovery control is switching of the communication link between the reception device and the transmission device. The communication apparatus continues measurement of the communication quality of the link before switching the communication link, even after switching, for a predetermined time (timer). As a result of the measurement, when the communication quality of the communication link before switching changes (deteriorates), the communication apparatus determines that the prediction is successful. When the communication quality of the communication link before switching has not changed, the communication apparatus determines that the prediction has failed.

When determining that the prediction is successful, the communication apparatus stops the measurement of the communication quality of the link before switching thereafter.

On the other hand, when it is determined that the prediction has failed, the communication apparatus makes a determination regarding the fallback operation. For example, when it is determined that the prediction has failed, the communication apparatus determines to switch the communication link to the communication link before switching. When determining that the prediction has failed, the communication apparatus determines to switch the communication link to a preset communication link (default communication link).

Note that the measurement for fallback and the determination of the fallback operation may be executed by a communication apparatus that executes the communication recovery control, or may be executed by a communication apparatus other than the communication apparatus that executes the communication recovery control. For example, a communication apparatus other than the communication apparatus that executes the communication recovery control determines whether or not the prediction has failed. When it is determined that the prediction has failed, the fallback operation may be set to the communication apparatus that executes the communication recovery control (e.g., the base station 20 may perform setting in the terminal device 30). In other words, the communication apparatus that executes the communication recovery control does not necessarily need to determine the fallback operation due to the prediction failure.

Fallback allows the communication apparatus to make more accurate determination regarding the communication recovery control.

<Additional report information for improving prediction accuracy>

The communication apparatus may acquire additional report information for improving prediction accuracy in addition to the information on the third object from another communication apparatus (e.g., sensing device). The additional report information is information on sensing of the third object. The additional report information may be sensor reliability information or measurement environment information (sensing environment information). Obviously, the additional report information may be other type of information. The communication apparatus makes a determination regarding the communication recovery control based on the information on the third object (e.g., information on a change in the geographical relative position between the transmission device or the reception device and the third object) and the additional report information. As a result, the communication apparatus can make a more accurate determination regarding the communication recovery control.

· Sensor reliability information

The sensor reliability information may be sensor capability information. The sensor capability information may be sensor measurement accuracy information. As the sensor measurement accuracy information, information of a degree of deviation (standard deviation, variance, or tolerance) from a standard measurement value is assumed. Furthermore, the sensor capability information may be sensor accuracy capability information. When the sensor is a wireless positioning sensor, the sensor capability information may be information of accuracy capability of a device that transmits a positioning signal.

Furthermore, the sensor reliability information may be information regarding a sensor measurement system. When the sensor is a wireless positioning sensor, the information regarding the sensor measurement system may be information regarding positioning accuracy by the measurement position. Since radio wave propagation time changes depending on the LOS/NLOS environment, the LOS/NLOS information is assumed as the information regarding positioning accuracy by the measurement position. In addition, since the distance from the transmission device and the positioning accuracy are correlated, information on a distance from the device that transmits the positioning signal and/or reception power is assumed as another piece of information regarding positioning accuracy by the measurement position. In addition, since the accuracy is improved as an amount of radio resources is larger, information such as a type of radio resource used for measurement (frequency band used) and a radio resource amount (bandwidth of frequency used for measurement or measurement frequency) is also assumed as the reliability information in another piece of information regarding positioning accuracy by the measurement position. In addition, since the accuracy changes depending on a measurement method, information regarding a method used for measurement (e.g., round trip time (RTT), an angle of arrival (AoA)/an angle of departure (AoD), or a time difference of arrival (DL/UL-TDOA) as a radio positioning method) is also assumed as the reliability information in another piece of information regarding positioning accuracy by the measurement position.

Furthermore, the sensor reliability information may be measurement error. information For example, when it is difficult or impossible to measure due to some kind of sensor failure (operation stop, occurrence of disturbance, or occurrence of interruption processing), another communication apparatus may report the measurement error information. For example, when an abnormal value (out of a range of possible values) is acquired as a result of measurement, another communication apparatus may report the measurement error information.

The sensor reliability information is used as a determination parameter in determination of communication recovery. For example, when the sensor reliability information is received as additional report information and/or when the measurement information from the sensor having a low reliability in the sensor information is received, the measurement information is excluded or weighted low, and the communication recovery is determined. In other words, when the measurement information from the sensor having high reliability in the sensor information is received, the communication recovery can be determined only using this measurement information or weighted high.

· Measurement environment information (sensing environment information)

The measurement environment information (sensing environment information) may be information regarding disturbance. The information regarding disturbance is, for example, information indicating that the disturbance is large/small. The measurement environment information may be information on an amount of a moving object in a sensing target area. Furthermore, the measurement environment information may be information on a type of the object in the sensing target area or information on a shape of the object.

Furthermore, the measurement environment information (sensing environment information) may be information regarding terrain. The information regarding terrain may be information on buildings in the sensing target area. Furthermore, the information regarding terrain may be a map (two-dimensional map or three-dimensional map) of the sensing target area.

<<Example of communication operation caused by trigger event based on information on third object>>

Hereinafter, an example of communication operation caused by the trigger event based on the information of the third object will be described.

<Measurement information report>

A trigger event causes a measurement information report. For example, the sensing device reports the information on the third object as the measurement information to the communication apparatus. The measurement information may be information on a current third object (position information of the third object, or the like) or prediction information of the third object (e.g., position information of estimated future third object or information indicating blocking that is about to occur).

Example of measurement information included in report

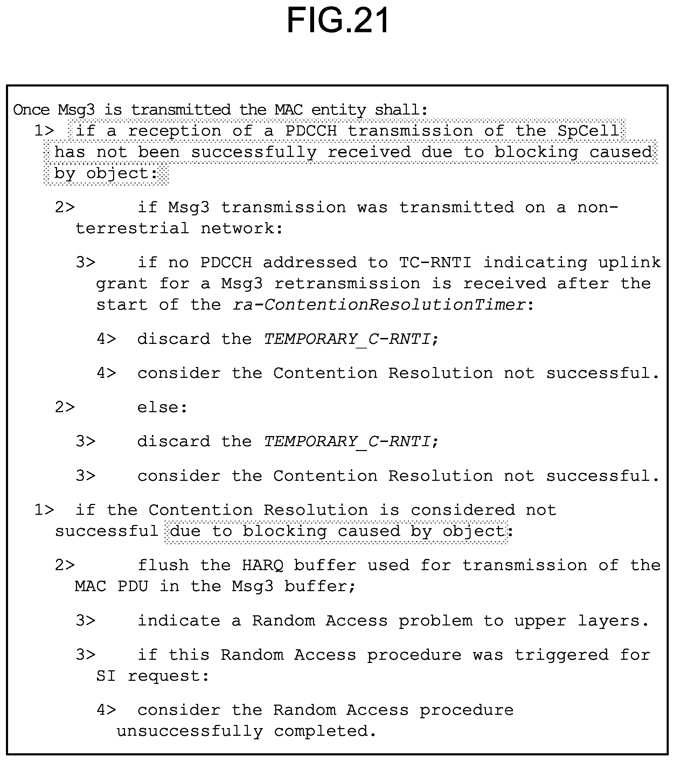

Hereinafter, FIG. 21 illustrates an example of IE of the measurement information when the measurement information is reported based on the information on the third object. The measurement information of the third object is also included as IE measResultICS in IE MeasResults including measured results for intra-frequency, extra-frequency, and inter-RAT mobility. The IE measResultICS for reporting the measurement information of the third object includes location information (locationInfoObject) of the third object, a state of communication predicted by the third object (expectedState), and a measured time (measuredTime). Note that the measurement information of the third object is not limited to the following parameters, and may naturally include other pieces of information (measurement accuracy information, etc.) described above.

<Conditional handover>

When a trigger event based on the third object occurs, a conditional handover may be performed. In this case, an event based on the information on the third object for triggering the conditional handover is defined.

Event definition example 1

Hereinafter, an example of the definition of the event for detecting that the third object has entered/exited the predetermined area will be described. In this example, the determination is made based on a relative distance on each axis in orthogonal coordinates. Specifically, when both Entering condition 1 and Entering condition 2 are met, the third object is considered to have entered the predetermined area, and when either Leaving condition 1 or Leaving condition 2 is met, the third object is considered to have exited the predetermined area.

$$\text{Inequality D1-1 (Entering condition 1)}$$
$$X\_position - X\_area + Hys < Thresh1$$

$$\text{Inequality D1-2 (Entering condition 2)}$$
$$Y\_position - Y\_area + Hys < Thresh2$$

$$\text{Inequality D1-3 (Leaving condition 1)}$$

$$\text{X\_position - X\_area - Hys > Thresh1}$$

$$\text{Inequality D1-4 (Leaving condition 2)}$$

$$\text{Y\_position - Y\_area - Hys > Thresh2}$$

Here, X_position represents a coordinate of the third object on the X-axis, Y_position represents a coordinate of the third object on the Y-axis, X_area represents a coordinate of the predetermined area on the X-axis, and Y_area represents a coordinate of the predetermined area on the Y-axis.

Note that this event is defined by two-dimensional coordinates of the X axis and the Y axis, but it is needless to say that determination of a Z axis (height or altitude) can also be included in this event, and the event may be defined by three-dimensional coordinates.

Event definition example 2

Hereinafter, another example of the definition of the event for detecting that the third object has entered/exited the predetermined area will be described. In this example, the determination is made based on a relative distance between the position of the third object and the position of the predetermined area. Specifically, when an entering condition is met, the third object is considered to have entered the predetermined area, and when a leaving condition is met, the third object is considered to have exited the predetermined area.

$$\text{Inequality D1-1 (Entering condition)}$$

$$|\text{measured\_position - reference\_position}| + \text{Hys} < \text{Thresh}$$

$$\text{Inequality D1-2 (Leaving condition)}$$

$$|\text{measured\_position - reference\_position}| - \text{Hys} > \text{Thresh}$$

Here, measured_position represents a vector of the position of the third object, and reference_position represents a vector of coordinates of the predetermined area.

Example of IE

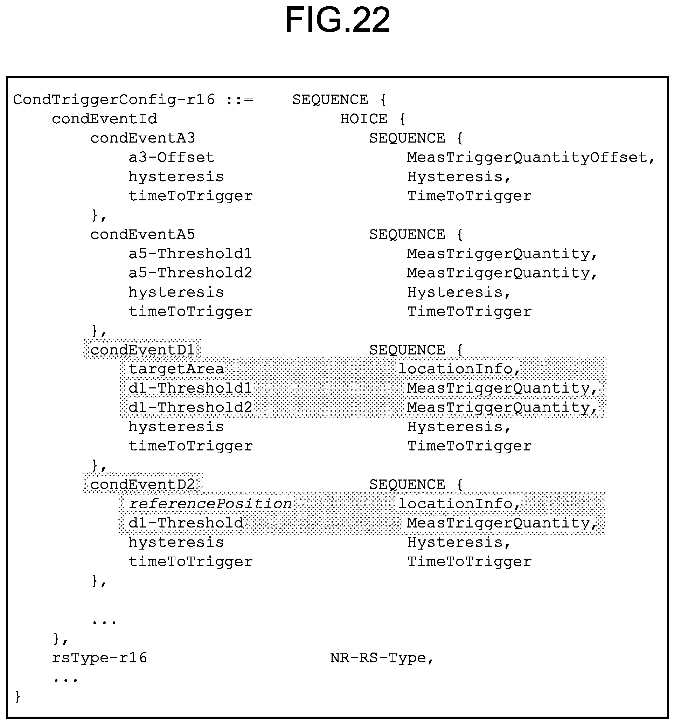

FIG. 22 illustrates an example of an information element (IE) that supports the above event definition examples (Event definition example 1 and/or event definition example 2). FIG. 22 illustrates a change example of the IE that sets the trigger event used for conditional reconfiguration. In the example in FIG. 22, a portion marked on a text in the IE illustrated in FIG. 13A is changed.

In the present embodiment, in addition to the conventional event (condEventA3, condEventA5), a new event IE (condEventD1 and condEventD2 in the example in FIG. 22,) is defined in the IE (CondTriggerConfig) of the conditional handover.

Note that the above event has been described as an example of a case where the conditional handover is triggered, but the event may also be applied to another communication operation using an event trigger. As a specific example, the above event may also be applied to the measurement information report (Measurement Report).

<Beam failure recovery>

When a trigger event based on the third object occurs, beam failure recovery may be performed. The operations of medium access control (MAC) and physical layer (PHY) may be changed as follows.

Change example of MAC

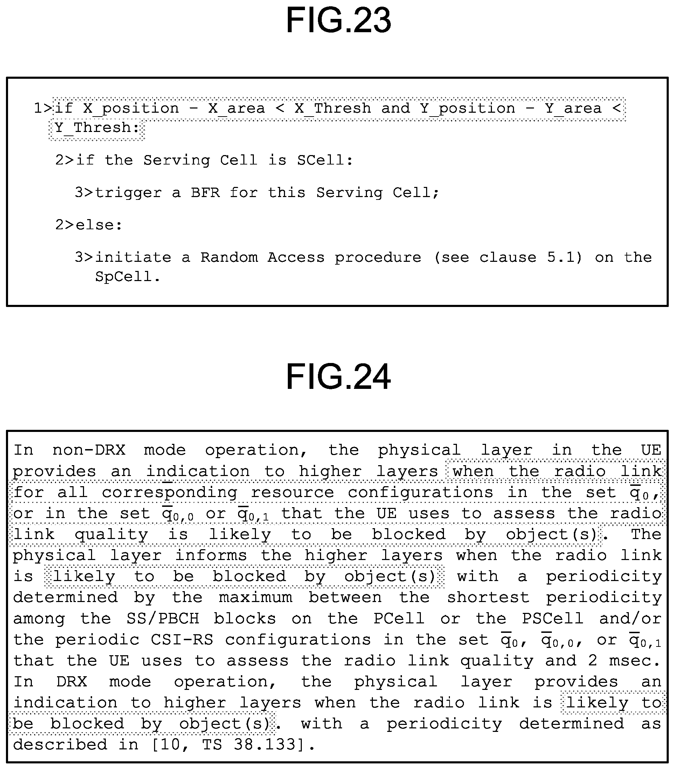

In the medium access control (MAC), beam failure detection is performed by a procedure illustrated in FIG. 23. FIG. 23 illustrates a change example of the beam failure detection operation. In the procedure illustrated in FIG. 23, a portion marked on a text in the procedure illustrated in FIG. 14B is changed.

Change Example 1 of physical layer operation

As a change example of the physical layer operation, when the radio link is likely to be blocked in the future, a beam failure is detected. Specifically, in a state illustrated in FIG. 24, the physical layer notifies higher layers of a beam failure instance. FIG. 24 illustrates a change example of the beam failure instance reporting operation. In the example illustrated in FIG. 24, a portion marked on a text in the report operation illustrated in FIG. 14A is changed.

Change Example 2 of physical layer operation

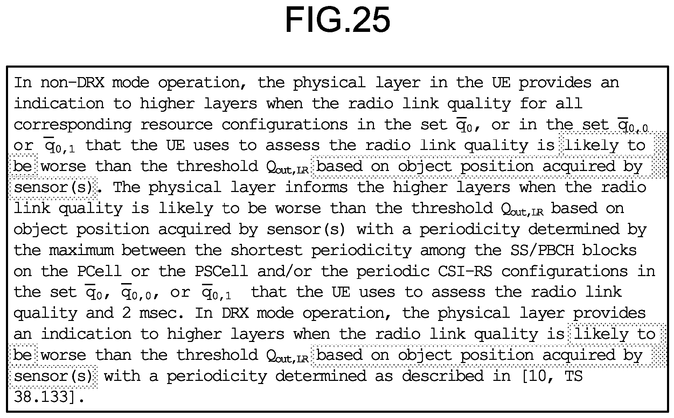

As another change example of the physical layer operation, a beam failure is detected when the radio link quality is likely to drop below the threshold $Q_{out}$ based on the position information by the sensor. Specifically, in a state illustrated in FIG. 25, the physical layer notifies higher layers of the beam failure instance. FIG. 25 illustrates a change example of the beam failure instance reporting operation. In the example in FIG. 25, a portion marked on a text in the report operation illustrated in FIG. 14A is changed. Here, the sensor information may be information on a higher layer (e.g., application layer) or measurement information defined in 3GPP TS 38.215.

<Radio link monitoring/radio link failure>

A radio link failure is determined based on the information on the third object.

Change example of physical layer operation

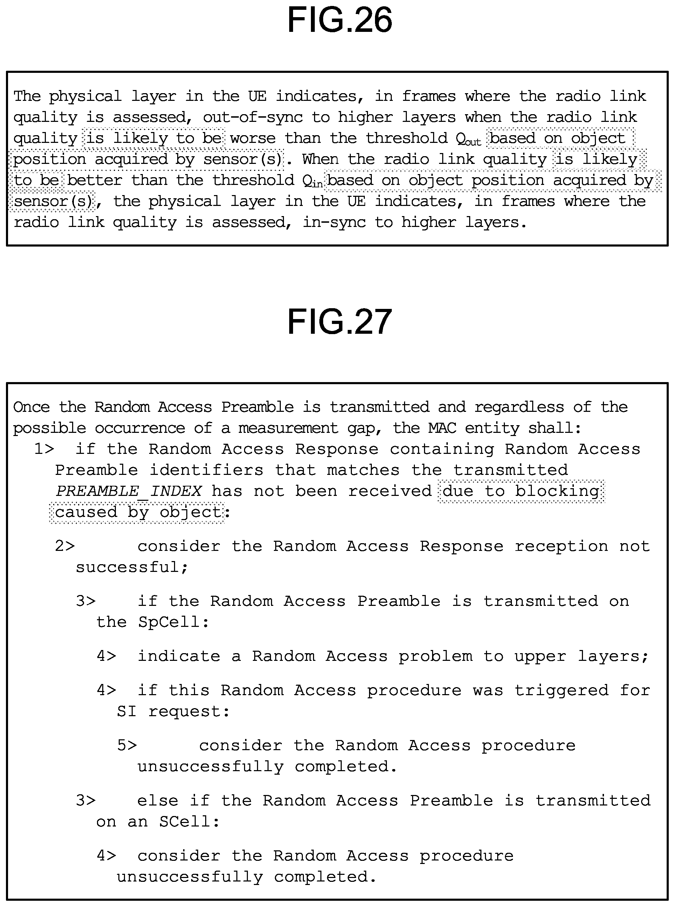

As a change example of the physical layer operation, an example in which a radio link failure is detected when the radio link is highly likely to be blocked in the future will be described. FIG. 26 illustrates a change example of the radio link monitoring operation. In FIG. 26, a portion marked on a text is a change portion. Specifically, as in a state illustrated in FIG. 26, when the radio link quality is expected to deteriorate below the threshold $Q_{out}$ based on the position of the third object obtained by the sensor, the physical layer notifies the higher layers of out-of-sync. In addition, when it is expected that the radio link quality improves more than the threshold $Q_{in}$ based on the position of the third object, the physical layer notifies higher layers of in-sync.

<Random access problem>

When a random access is expected to fail based on the information on the third object, the terminal device stops transmitting an uplink channel (Msg1, Msg3, or MsgA) related to the random access, or stops receiving a downlink channel (Msg2, Msg4, or MsgB) related to the random access. Further, a MAC entity of the terminal device notifies higher layers of a random access problem. Specifically, when the uplink channel transmission or the downlink channel reception related to the random access is likely to fail based on the information on the third object, the random access problem is notified to the higher layers regardless of a preamble transmission count (PREAMBLE_TRANSMISSION_COUNTER). By recognizing the random access problem based on the information on the third object, it is possible to reduce channel retransmission related to unnecessary random access.

Change Example 1 of MAC layer operation

As Example 1 of the change example of the MAC layer operation, a change example related to random access response reception is illustrated in FIG. 27. FIG. 27 illustrates Change Example 1 of the MAC layer operation in the random access procedure. In FIG. 27, a portion marked on a text is a change portion. When the random access response is not successfully received due to the third object, the random access problem is notified to the higher layers regardless of the preamble transmission count (PREAMBLE_TRANSMISSION_COUNTER). In this case, it is assumed that the random access procedure is not successful.

Change Example 2 of MAC layer operation

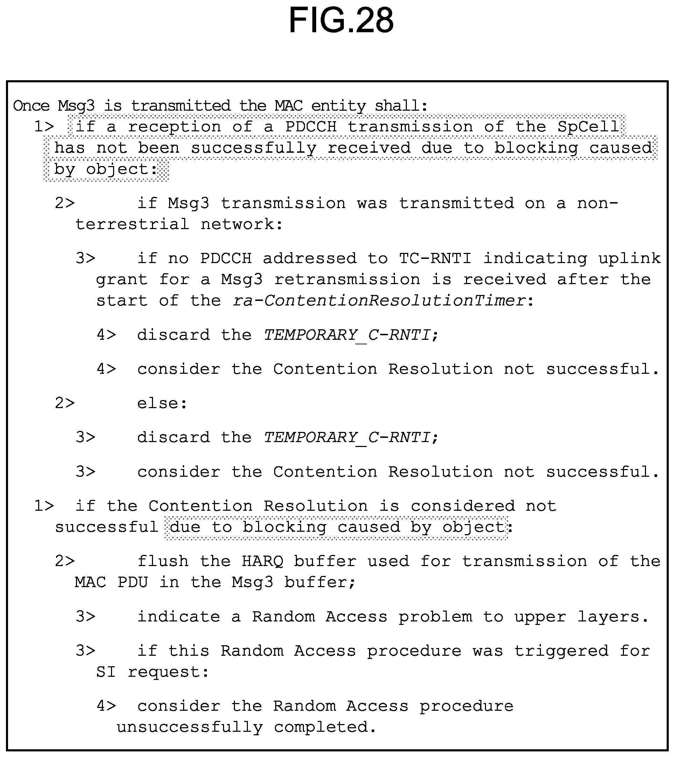

As Example 2 of the change example of the MAC layer operation, a change example related to contention resolution is illustrated in FIG. 28. FIG. 28 illustrates Change Example 2 of the MAC layer operation in the random access procedure. In FIG. 28, a portion marked on a text is a change portion. When the reception of the PDCCH is not successful due to the third object, the random access problem is notified to the higher layers regardless of the preamble transmission count (PREAMBLE_TRANSMISSION_COUNTER). In this case, it is assumed that the random access procedure is not successful.

<Transmission pause of periodic uplink channel/signal>

Based on the information on the third object, transmission of periodic uplink channel/signal is paused. Specifically, when the periodic uplink channel/signal may be blocked by the third object, the terminal device pauses transmission of the periodic uplink channel/signal. The periodic uplink channel/signal includes, for example, PUSCH to which a configured grant is set, PUCCH including SR or periodic CSI, and a periodic or semi-persistent SRS.

<Change of applied uplink precoder/transmission beam>

Based on the information on the third object, the applied uplink precoder or transmission beam is changed. Specifically, when the uplink channel/signal may be blocked by the third object, the terminal device changes an applied uplink precoder/transmission beam to transmit the uplink channel/signal.
As an example of a method for changing the applied uplink precoder/transmission beam, a plurality of uplink precoders/transmission beams are configured in the terminal device in advance by the RRC. The terminal device selects, based on the information on the third object, from the plurality of uplink precoders/transmission beams set, and applies to transmission of the uplink channel/signal. As a rule for selecting from the plurality of uplink precoders/transmission beams set, the uplink precoder/transmission beam may be selected based on a priority order or may be selected randomly.
As another example of a method for changing the applied uplink precoder/transmission beam, one or more uplink precoders/transmission beams are specified by the DCI in the terminal device. The terminal device selects one from the one or more specified uplink precoders/transmission beams based on the information on the third object, and applies to the uplink channel/signal transmission.

<Change of CSI value>

A CSI value to be fed back is changed based on the information on the third object. As a specific example, when the communication link may be blocked by the third object, the communications apparatus feeds back, to the base station, a CQI index lower than a CQI index that is to be fed back. As another specific example, when the communication link may be blocked by the third object, the communications apparatus feeds back, to the base station, a PMI different from the PMI that is to be fed back.

<<Application example of additional communication link based on sensor information>>

The above-described communication operation examples are the operation examples with respect to a wireless link used for communication. On the other hand, the communication apparatus can add a communication link when the communication link that has not been available for communication can be used based on the information on the third object.
As a method for adding a communication link based on the information on the third object, a method similar to the method described above can be applied.
As an example of the method for adding the communication link based on the information on the third object, when a new communication link is found, the measurement report may notify the base station of information on the new communication link.
As another example of the method for adding a communication link based on the information on the third object, when a new communication link is found, the RACH may be transmitted to the new communication link.
As another example of the method for adding the communication link based on the information on the third object, when a new communication link is found, information (SSB index, CSI-RS index, SRI, etc.) of a beam for the communication link may be fed back.

<<Modifications>>

The above-described embodiments are examples, and various modifications and applications are possible.

For example, in the above-described control sequence example, the reception device applies (executes) the communication recovery control, but the transmission device may apply (execute) the communication recovery control. In this case, the transmission device and the reception device described in the above-described control sequence example may be interchanged.

A control device that controls the management device 10, the base station 20, the terminal device 30, and the information processing device 40 of the present embodiments may be realized by a dedicated computer system or a general-purpose computer system.

For example, a communication program for executing the above-described operation is stored and distributed in a computer-readable recording medium such as an optical disk, a semiconductor memory, a magnetic tape, or a flexible disk. Then, for example, the program is installed on a computer, and the above-described processes are executed to configure the control device. Here, the control device may be a device (e.g., personal computer) outside the management device 10, the base station 20, and the terminal device 30. Furthermore, the control device may be a device inside the management device 10, the base station 20, and the terminal device 30 (e.g., control unit 13, control unit 23, control unit 33, and control unit 43).

In addition, the above communication program may be stored in a disk device included in a server device on a network such as the Internet so that the communication program can be downloaded to the computer. In addition, the above-described functions may be realized by cooperation of an operating system (OS) and application software. In this case, a portion other than the OS may be stored in a medium and distributed, or a portion other than the OS may be stored in a server device and downloaded to the computer.

Among the processes described in the above embodiments, all or part of the processes described as being performed automatically can be performed manually, or all or part of the processes described as being performed manually can be performed automatically by a known method. In addition, the processing procedure, specific name, and information including various data and parameters illustrated in the above document and the drawings can be arbitrarily changed unless otherwise specified. For example, various types of information illustrated in each drawing are not limited to the illustrated information.

In addition, each component of each device illustrated in the drawings is functionally conceptual, and is not necessarily physically configured as illustrated in the drawings. In other words, a specific form of distribution and integration of each device is not limited to the illustrated form, and all or a part thereof can be functionally or physically distributed and integrated in an arbitrary unit according to various loads, usage conditions, and the like. Note that this configuration by distribution and integration may be performed dynamically.

In addition, the above-described embodiments can be appropriately combined in a region in which the processing content do not contradict each other. Furthermore, the order of each step illustrated in the flowchart of the above-described embodiments can be appropriately changed.

Furthermore, for example, the present embodiment can be implemented as any configuration constituting an apparatus or a system, for example, a processor as a system large scale integration (LSI) or the like, a module using a plurality of processors or the like, a unit using a plurality of modules or the like, a set obtained by further adding other functions to a unit, or the like (i.e., configuration of a part of device).

Note that, in the present embodiment, the system means a set of a plurality of components (devices, modules (parts), etc.), and it does not matter whether or not all the components are in the same housing. Therefore, the plurality of devices housed in separate housings and connected via the network and one device in which a plurality of modules is housed in one housing are both systems.

Furthermore, for example, the present embodiments can adopt a configuration of cloud computing in which one function is shared and processed by a plurality of devices in cooperation via a network.

<<Conclusion>>

As described above, according to the embodiment of the present disclosure, the communication apparatus is any of a plurality of communication apparatuses including at least the transmission device (e.g., terminal device 30), the reception device (e.g., base station 20), and the third communication apparatus (e.g., information processing device 40). The communication apparatus makes a determination regarding recovery control of the communication link between the transmission device and the reception device based on the information on the change in the geographical relative position between the transmission device or the reception device and the third object (e.g., truck or pedestrian). Here, the information on the change in the geographical relative position is information acquired by sensing performed by the transmission device, the reception device, a third communication apparatus, or the third object.

As a result, the communication apparatus can realize communication with high communication performance. For example, since the communication apparatus can perform the recovery control (e.g., communication link switching) before an adverse effect on communication (e.g., radio link failure or beam link failure) occurs, seamless communication can be realized.

Although the embodiments of the present disclosure have been described above, the technical scope of the present disclosure is not limited to the above-described embodiments as it is, and various modifications can be made without departing from the gist of the present disclosure. In addition, the components of different embodiments and modifications may be appropriately combined.

Note that the effects of each embodiment described in the present specification are merely examples and not limited thereto, and other effects may be provided.

The present technology may also have the following configurations.

(1) A communication apparatus among a plurality of communication apparatuses including at least a transmission device and a reception device, the communication apparatus comprising:

a determination unit that makes a determination regarding recovery control of a communication link between the transmission device and the reception device, based on information on a change in a geographical relative position between the transmission device or the reception device and a third object, wherein the information on the change in the geographical relative position is information acquired by sensing performed by the transmission device, the reception device, an other communication apparatus different from the transmission device and the reception device, or the third object.

(2) The communication apparatus according to (1), wherein

the communication apparatus is one of the transmission device and the reception device, and the determination unit makes the determination regarding the recovery control of the communication link between the transmission device and the reception device based on the information on the change in the geographical relative position acquired by sensing performed by the one of the transmission device and the reception device.

(3) The communication apparatus according to (1), wherein

the communication apparatus is one of the transmission device and the reception device, and the determination unit makes the determination regarding the recovery control of the communication link between the transmission device and the reception device based on the information on the change in the geographical relative position acquired by sensing performed by an other of the transmission device and the reception device.

(4) The communication apparatus according to (1), wherein

the communication apparatus is the transmission device or the reception device, and the determination unit makes the determination regarding the recovery control of the communication link between the transmission device and the reception device based on the information on the change in the geographical relative position acquired by sensing performed by the third object or the other communication apparatus.

(5) The communication apparatus according to (1), wherein

the plurality of communication apparatuses includes the other communication apparatus, the communication apparatus is the other communication apparatus, and the determination unit makes the determination regarding the recovery control of the communication link between the transmission device and the reception device based on the information on the change in the geographical relative position acquired by sensing performed by the transmission device, the reception device, or the other communication apparatus.

(6) The communication apparatus according to (1), wherein

the plurality of communication apparatuses includes the other communication apparatus, the communication apparatus is the other communication apparatus, and the determination unit makes the determination regarding the recovery control of the communication link between the transmission device and the reception device based on the information on the change in the geographical relative position acquired by sensing performed by the third object.

(7) The communication apparatus according to (1), wherein

the plurality of communication apparatuses includes the third object having a communication function,
the communication apparatus is the third object having the communication function, and
the determination unit makes the determination regarding the recovery control of the communication link between the transmission device and the reception device based on the information on the change in the geographical relative position acquired by sensing performed by the reception device, the transmission device, or the other communication apparatus.

(8) The communication apparatus according to (1), wherein

the plurality of communication apparatuses includes the third object having a communication function,
the communication apparatus is the third object having the communication function, and
the determination unit makes the determination regarding the recovery control of the communication link between the transmission device and the reception device based on the information on the change in the geographical relative position acquired by sensing performed by the third object.

(9) The communication apparatus according to any one of (1) to (8), wherein
the information on the change in the geographical relative position is information on a change in a relative position of the third object with respect to a position of the transmission device or the reception device or information on a change in a relative position of the third object with respect to a reference position determined with reference to the position of the transmission device or the reception device.
(10) The communication apparatus according to any one of (1) to (9), wherein

the recovery control is switching of the communication link between the reception device and the transmission device, and
the determination unit determines to switch the communication link switched by the recovery control to a communication link before the switching when a communication quality of a communication link after the switching is not improved as compared with the communication link before the switching.

(11) The communication apparatus according to any one of (1) to (9), wherein

the recovery control is switching of the communication link between the reception device and the transmission device, and
the determination unit determines to switch the communication link switched by the recovery control to a communication link before the switching when there is no change in a communication quality of the communication link before the switching even when the communication link is switched by the recovery control.

(12) The communication apparatus according to any one of (1) to (11), comprising

an acquisition unit that acquires information on sensing of the third object, wherein
the recovery control of the communication link between the transmission device and the reception device is determined based on the information on the change in the geographical relative position and the information on the sensing.

(13) The communication apparatus according to (12), wherein
the information on the sensing is reliability information of a sensor that performs the sensing or environment information of the sensing.
(14) The communication apparatus according to any one of (1) to (13), wherein

the recovery control is executed by a communication control unit of at least one of the transmission device and the reception device, and
the determination unit makes a determination to cause the communication control unit to execute the recovery control at a predetermined timing.

(15) The communication apparatus according to (14), wherein
the determination unit makes the determination to cause the communication control unit to execute the recovery control at a timing when the third object enters or exits a predetermined area determined based on at least position information of the transmission device or position information of the reception device.

(16) The communication apparatus according to (14), wherein

the determination unit makes the determination to cause the communication control unit to execute the recovery control at a timing when a relationship between a predetermined position and a position of the third object satisfies a predetermined criterion, the predetermined position being determined based on at least the position information of the transmission device or the position information of the reception device.

(17) The communication apparatus according to (14), wherein

the determination unit makes the determination to cause the communication control unit to execute the recovery control at a timing when a change in a moving speed of the third object satisfies a predetermined criterion.

(18) The communication apparatus according to (14), wherein

the determination unit makes the determination to cause the communication control unit to execute the recovery control at a timing when a change in a state of the third object satisfies a predetermined criterion.

(19) The communication apparatus according to any one of (1) to (18), wherein

the transmission device is a terminal device or a base station, and
the reception device is a terminal device or a base station.

(20) A communication method executed by any of a plurality of communication apparatuses including at least a transmission device, a reception device, and an other communication apparatus different from the transmission device and the reception device, the communication method comprising:

making a determination related to recovery control of a communication link between the transmission device and the reception device based on information on a change in a geographical relative position between the transmission device or the reception device and a third object, in which
the information on the change in the geographical relative position is information acquired by the transmission device, the reception device, the other communication apparatus, or the third object by sensing.

Reference Signs List

| 1 | COMMUNICATION SYSTEM |
|---|---|
| 10 | MANAGEMENT DEVICE |
| 20 | BASE STATION |
| 30 | TERMINAL DEVICE |
| 40 | INFORMATION PROCESSING DEVICE |
| 11, 41 | COMMUNICATION UNIT |
| 21, 31 | WIRELESS COMMUNICATION UNIT |
| 12, 22, 32, 42 | STORAGE UNIT |
| 13, 23, 33, 43 | CONTROL UNIT |
| 24, 34, 44 | SENSOR UNIT |
| 211, 311 | TRANSMISSION PROCESSING UNIT |
| 212, 312 | RECEPTION PROCESSING UNIT |
| 213, 313 | ANTENNA |
| 231, 331, 431 | ACQUISITION UNIT |
| 232, 332, 432 | DETERMINATION UNIT |
| 233, 333, 433 | COMMUNICATION CONTROL UNIT |

**Claims**

1. A communication apparatus among a plurality of communication apparatuses including at least a transmission device and a reception device, the communication apparatus comprising:

a determination unit that makes a determination regarding recovery control of a communication link between the transmission device and the reception device, based on information on a change in a geographical relative position between the transmission device or the reception device and a third object, wherein
the information on the change in the geographical relative position is information acquired by sensing performed by the transmission device, the reception device, an other communication apparatus different from the transmission device and the reception device, or the third object.

2. The communication apparatus according to claim 1, wherein

the communication apparatus is one of the transmission device and the reception device, and
the determination unit makes the determination regarding the recovery control of the communication link between the transmission device and the reception device based on the information on the change in the geographical relative position acquired by sensing performed by the one of the transmission device and the reception device.

3. The communication apparatus according to claim 1, wherein

the communication apparatus is one of the transmission device and the reception device, and
the determination unit makes the determination regarding the recovery control of the communication link between the transmission device and the reception device based on the information on the change in the geographical relative position acquired by sensing performed by an other of the transmission device and the reception device.

4. The communication apparatus according to claim 1, wherein

the communication apparatus is the transmission device or the reception device, and
the determination unit makes the determination regarding the recovery control of the communication link between the transmission device and the reception device based on the information on the change in the geographical relative position acquired by sensing performed by the third object or the other communication apparatus.

5. The communication apparatus according to claim 1, wherein

the plurality of communication apparatuses includes the other communication apparatus,
the communication apparatus is the other communication apparatus, and
the determination unit makes the determination regarding the recovery control of the communication link between the transmission device and the reception device based on the information on the change in the geographical relative position acquired by sensing performed by the transmission device, the reception device, or the other communication apparatus.

6. The communication apparatus according to claim 1, wherein

the plurality of communication apparatuses includes the other communication apparatus,
the communication apparatus is the other communication apparatus, and
the determination unit makes the determination regarding the recovery control of the communication link between the transmission device and the reception device based on the information on the change in the geographical relative position acquired by sensing performed by the third object.

7. The communication apparatus according to claim 1, wherein

the plurality of communication apparatuses includes the third object having a communication function,
the communication apparatus is the third object having the communication function, and
the determination unit makes the determination regarding the recovery control of the communication link between the transmission device and the reception device based on the information on the change in the geographical relative position acquired by sensing performed by the reception device, the transmission device, or the other communication apparatus.

8. The communication apparatus according to claim 1, wherein

the plurality of communication apparatuses includes the third object having a communication function,
the communication apparatus is the third object having the communication function, and
the determination unit makes the determination regarding the recovery control of the communication link between the transmission device and the reception device based on the information on the change in the geographical relative position acquired by sensing performed by the third object.

9. The communication apparatus according to claim 1, wherein

the information on the change in the geographical relative position is information on a change in a relative position of the third object with respect to a position of the transmission device or the reception device or information on a change in a relative position of the third object with respect to a reference position determined with reference to the position of the transmission device or the reception device.

10. The communication apparatus according to claim 1, wherein

the recovery control is switching of the communication link between the reception device and the transmission device, and
the determination unit determines to switch the communication link switched by the recovery control to a communication link before the switching when a communication quality of a communication link after the switching is not improved as compared with the communication link before the switching.

11. The communication apparatus according to claim 1, wherein

the recovery control is switching of the communication link between the reception device and the transmission device, and
the determination unit determines to switch the communication link switched by the recovery control to a communication link before the switching when there is no change in a communication quality of the communication link before the switching even when the communication link is switched by the recovery control.

12. The communication apparatus according to claim 1, comprising

an acquisition unit that acquires information on sensing of the third object, wherein
the recovery control of the communication link between the transmission device and the reception device is determined based on the information on the change in the geographical relative position and the information on the sensing.

13. The communication apparatus according to claim 12, wherein
the information on the sensing is reliability information of a sensor that performs the sensing or environment information of the sensing.

14. The communication apparatus according to claim 1, wherein

the recovery control is executed by a communication control unit of at least one of the transmission device and the reception device, and
the determination unit makes a determination to cause the communication control unit to execute the recovery control at a predetermined timing.

15. The communication apparatus according to claim 14, wherein
the determination unit makes the determination to cause the communication control unit to execute the recovery control at a timing when the third object enters or exits a predetermined area determined based on at least position information of the transmission device or position information of the reception device.

16. The communication apparatus according to claim 14, wherein
the determination unit makes the determination to cause the communication control unit to execute the recovery control at a timing when a relationship between a predetermined position and a position of the third object satisfies a predetermined criterion, the predetermined position being determined based on at least the position information of the transmission device or the position information of the reception device.

17. The communication apparatus according to claim 14, wherein
the determination unit makes the determination to cause the communication control unit to execute the recovery control at a timing when a change in a moving speed of the third object satisfies a predetermined criterion.

18. The communication apparatus according to claim 14, wherein
the determination unit makes the determination to cause the communication control unit to execute the recovery control at a timing when a change in a state of the third object satisfies a predetermined criterion.

19. The communication apparatus according to claim 1, wherein

the transmission device is a terminal device or a base station, and
the reception device is a terminal device or a base station.

20. A communication method executed by any one of a plurality of communication apparatuses including at least a transmission device and a reception device, the communication method comprising:

making a determination regarding recovery control of a communication link between the transmission device and the reception device based on information on a change in a geographical relative position between the transmission device or the reception device and a third object, wherein
the information on the change in the geographical relative position is information acquired by sensing performed by the transmission device, the reception device, an other communication apparatus different from the transmission device and the reception device, or the third object.

# FIG.1

Dynamic Blocker

TERMINAL DEVICE
WITH CAMERA

# FIG.2

SENSOR
INFORMATION

# FIG.3

# FIG.4

MANAGEMENT DEVICE

10

11

13

12

COMMUNI-
CATION
UNIT

CONTROL UNIT

STORAGE
UNIT

# FIG.5

# FIG.6

# FIG.7

INFORMATION PROCESSING DEVICE ⌐40

CONTROL UNIT ⌐43

COMMUNI-
CATION
UNIT ⌐41

ACQUISITION UNIT ～431

DETERMINATION UNIT ～432

COMMUNICATION
CONTROL UNIT ～433

SENSOR
UNIT ⌐44

STORAGE
UNIT ⌐42

# FIG.8

RADIO FRAME
10msec

SUBFRAME
1msec

SLOT

SYMBOL

# FIG.9

# FIG.10

# FIG.11A

| D | D | D | D | D | D | D | D | D | D | D | D | F | U |

# FIG.11B

| D | F | U | U | U | U | U | U | U | U | U | U | U | U |

# FIG.12

# FIG.13A

```
CondTriggerConfig-r16 ::=      SEQUENCE {
    condEventId                    CHOICE {
        condEventA3                    SEQUENCE {
            a3-Offset                      MeasTriggerQuantityOffset,
            hysteresis                     Hysteresis,
            timeToTrigger                  TimeToTrigger
        },
        condEventA5                    EQUENCE {
            a5-Threshold1                  MeasTriggerQuantity,
            a5-Threshold2                  MeasTriggerQuantity,
            hysteresis                     Hysteresis,
            timeToTrigger                  TimeToTrigger
        },
        ...
    },
    rsType-r16                     NR-RS-Type,
    ...
}
```

# FIG.13B

```
                Conditional reconfiguration evaluation
The UE shall:
 1>for each condReconfigId within the VarConditionalReconfig:

   2>consider the cell which has a physical cell identity matching
      the value indicated in the ServingCellConfigCommon included
      in the reconfigurationWithSync in the received
      condRRCReconfig to be applicable cell;

   2>for each measId included in the measIdList within
      VarMeasConfig indicated in the condExecutionCond associated
      to condReconfigId:

      3>if the entry condition(s) applicable for this event
         associated with the condReconfigId, i.e. the event
         corresponding with the condEventId(s) of the corresponding
         condTriggerConfig within VarConditionalReconfig, is
         fulfilled for the applicable cells for all measurements
         after layer 3 filtering taken during the corresponding
         timeToTrigger defined for this event within the
         VarConditionalReconfig:

         4>consider the event associated to that measId to be
            fulfilled;

      3>if the measId for this event associated with the
         condReconfigId has been modified; or

      3>if the leaving condition(s) applicable for this event
         associated with the condReconfigId, i.e. the event
         corresponding with the condEventId(s) of the corresponding
         condTriggerConfig within VarConditionalReconfig, is
         fulfilled for the applicable cells for all measurements
         after layer 3 filtering taken during the corresponding
         timeToTrigger defined for this event within the
         VarConditionalReconfig:

         4>consider the event associated to that measId to be not
            fulfilled;

   2>if event(s) associated to all measId(s) within
      condTriggerConfig for a target candidate cell within the
      stored condRRCReconfig are fulfilled:

      3>consider the target candidate cell within the stored
         condRRCReconfig, associated to that condReconfigId, as a
         triggered cell;

      3>initiate the conditional reconfiguration execution, as
         specified in 5.3.5.13.5;

 NOTE:  Up to 2 MeasId can be configured for each condReconfigId.
        The conditional reconfiguration event of the 2 MeasId may
        have the same or different event conditions, triggering
        quantity, time to trigger, and triggering threshold.
```

# FIG.14A

In non-DRX mode operation, the physical layer in the UE provides an indication to higher layers when the radio link quality for all corresponding resource configurations in the set $\overline{q}_0$, or in the set $\overline{q}_{0,0}$ or $\overline{q}_{0,1}$ that the UE uses to assess the radio link quality is worse than the threshold $Q_{out,LR}$. The physical layer informs the higher layers when the radio link quality is worse than the threshold $Q_{out,LR}$ with a periodicity determined by the maximum between the shortest periodicity among the SS/PBCH blocks on the PCell or the PSCell and/or the periodic CSI-RS configurations in the set $\overline{q}_0$, $\overline{q}_{0,0}$, or $\overline{q}_{0,1}$ that the UE uses to assess the radio link quality and 2 msec. In DRX mode operation, the physical layer provides an indication to higher layers when the radio link quality is worse than the threshold $Q_{out,LR}$ with a periodicity determined as described in [10, TS 38.133].

# FIG.14B

The MAC entity shall for each Serving Cell configured for beam failure detection:
  1>if beam failure instance indication has been received from lower layers:

    2>start or restart the *beamFailureDetectionTimer;*

    2>increment *BFI_COUNTER* by 1;

    2>if *BFI_COUNTER* >= *beamFailureInstanceMaxCount*:

      3>if the Serving Cell is SCell:

        4>trigger a BFR for this Serving Cell;

      3>else:

        4>initiate a Random Access procedure (see clause 5.1) on the SpCell.

# FIG.15A

# FIG.15B

# FIG.16A

Rx node                                    Tx node

COMMUNICATION

| ACQUIRING INFORMATION ON THIRD OBJECT |
|---|

| DETERMINING COMMUNICATION RECOVERY CONTROL |
|---|

| APPLYING COMMUNICATION RECOVERY CONTROL |
|---|

# FIG.16B

Rx node                                    Tx node

COMMUNICATION

| ACQUIRING INFORMATION ON THIRD OBJECT |
|---|

| DETERMINING COMMUNICATION RECOVERY CONTROL |
|---|

SETTING COMMUNICATION
RECOVERY CONTROL

SIGNALING

| APPLYING COMMUNICATION RECOVERY CONTROL |
|---|

# FIG.17A

Rx node             Tx node

COMMUNICATION

ACQUIRING INFORMATION ON
THIRD OBJECT

INFORMATION ON THIRD
OBJECT

SIGNALING

DETERMINING COMMUNICATION
RECOVERY CONTROL

APPLYING COMMUNICATION
RECOVERY CONTROL

# FIG.17B

THIRD OBJECT        Rx node        Tx node

COMMUNICATION

ACQUIRING INFORMATION ON
THIRD OBJECT

INFORMATION ON THIRD
OBJECT

SIGNALING

DETERMINING COMMUNICATION
RECOVERY CONTROL

APPLYING COMMUNICATION
RECOVERY CONTROL

# FIG.17C

OTHER Tx node         Rx node         Tx node

COMMUNICATION

| ACQUIRING INFORMATION ON THIRD OBJECT |

INFORMATION ON THIRD OBJECT

SIGNALING

| DETERMINING COMMUNICATION RECOVERY CONTROL |

| APPLYING COMMUNICATION RECOVERY CONTROL |

# FIG.18A

Rx node                         Tx node

COMMUNICATION

ACQUIRING INFORMATION ON
THIRD OBJECT

INFORMATION ON THIRD
OBJECT

SIGNALING

DETERMINING COMMUNICATION
RECOVERY CONTROL

SETTING COMMUNICATION
RECOVERY CONTROL

SIGNALING

APPLYING COMMUNICATION
RECOVERY CONTROL

# FIG.18B

Rx node          Tx node          THIRD OBJECT

COMMUNICATION

ACQUIRING INFORMATION ON
THIRD OBJECT

INFORMATION ON THIRD
OBJECT

SIGNALING

DETERMINING COMMUNICATION
RECOVERY CONTROL

SETTING COMMUNICATION
RECOVERY CONTROL

SIGNALING

APPLYING
COMMUNICATION
RECOVERY CONTROL

# FIG.18C

# FIG.18D

# FIG.19A

Rx node        Tx node        OTHER Tx node

COMMUNICATION

ACQUIRING INFORMATION ON
THIRD OBJECT

INFORMATION ON THIRD
OBJECT

SIGNALING

DETERMINING COMMUNICATION
RECOVERY CONTROL

SETTING COMMUNICATION
RECOVERY CONTROL

SIGNALING

APPLYING
COMMUNICATION
RECOVERY CONTROL

# FIG.19B

OTHER Tx node        Rx node        Tx node

COMMUNICATION

ACQUIRING INFORMATION ON
THIRD OBJECT

INFORMATION ON THIRD
OBJECT

SIGNALING

DETERMINING COMMUNICATION
RECOVERY CONTROL

SETTING COMMUNICATION
RECOVERY CONTROL

SIGNALING

APPLYING COMMUNICATION
RECOVERY CONTROL

# FIG.19C

OTHER Tx node | Rx node | Tx node

COMMUNICATION

ACQUIRING INFORMATION ON
THIRD OBJECT

DETERMINING COMMUNICATION
RECOVERY CONTROL

SETTING COMMUNICATION
RECOVERY CONTROL

SIGNALING

APPLYING COMMUNICATION
RECOVERY CONTROL

# FIG.19D

THIRD OBJECT | Rx node | Tx node

COMMUNICATION

ACQUIRING INFORMATION ON
THIRD OBJECT

DETERMINING COMMUNICATION
RECOVERY CONTROL

SETTING COMMUNICATION
RECOVERY CONTROL

SIGNALING

APPLYING COMMUNICATION
RECOVERY CONTROL

# FIG.19E

# FIG.20A

# FIG.20B

# FIG.20C

# FIG.20D

Rx node                Tx node             OTHER Tx node

COMMUNICATION

ACQUIRING INFORMATION ON
THIRD OBJECT

INFORMATION ON THIRD
OBJECT

SIGNALING

DETERMINING
COMMUNICATION
RECOVERY CONTROL

SETTING COMMUNICATION
RECOVERY CONTROL

SIGNALING

DETERMINING COMMUNICATION
RECOVERY CONTROL

SETTING COMMUNICATION
RECOVERY CONTROL

SIGNALING

APPLYING
COMMUNICATION
RECOVERY CONTROL

# FIG.20E

# FIG.21

```
Once Msg3 is transmitted the MAC entity shall:
  1>  if a reception of a PDCCH transmission of the SpCell
      has not been successfully received due to blocking caused
      by object:

    2>      if Msg3 transmission was transmitted on a non-
        terrestrial network:

      3>      if no PDCCH addressed to TC-RNTI indicating uplink
          grant for a Msg3 retransmission is received after the
          start of the ra-ContentionResolutionTimer:

        4>  discard the TEMPORARY_C-RNTI;

        4>  consider the Contention Resolution not successful.

    2>      else:

      3>      discard the TEMPORARY_C-RNTI;

      3>      consider the Contention Resolution not successful.

  1>  if the Contention Resolution is considered not
      successful due to blocking caused by object:

    2>      flush the HARQ buffer used for transmission of the
        MAC PDU in the Msg3 buffer;

      3>      indicate a Random Access problem to upper layers.

      3>      if this Random Access procedure was triggered for
          SI request:

        4>  consider the Random Access procedure
            unsuccessfully completed.
```

# FIG.22

```
CondTriggerConfig-r16 ::=      SEQUENCE {
    condEventId                    HOICE {
        condEventA3                    SEQUENCE {
            a3-Offset                      MeasTriggerQuantityOffset,
            hysteresis                     Hysteresis,
            timeToTrigger                  TimeToTrigger
        },
        condEventA5                    SEQUENCE {
            a5-Threshold1                  MeasTriggerQuantity,
            a5-Threshold2                  MeasTriggerQuantity,
            hysteresis                     Hysteresis,
            timeToTrigger                  TimeToTrigger
        },
        condEventD1                    SEQUENCE {
            targetArea                     locationInfo,
            d1-Threshold1                  MeasTriggerQuantity,
            d1-Threshold2                  MeasTriggerQuantity,
            hysteresis                     Hysteresis,
            timeToTrigger                  TimeToTrigger
        },
        condEventD2                    SEQUENCE {
            referencePosition              locationInfo,
            d1-Threshold                   MeasTriggerQuantity,
            hysteresis                     Hysteresis,
            timeToTrigger                  TimeToTrigger
        },

        ...
    },
    rsType-r16                     NR-RS-Type,
    ...
}
```

# FIG.23

```
1>if X_position - X_area < X_Thresh and Y_position - Y_area <
  Y_Thresh:

  2>if the Serving Cell is SCell:

    3>trigger a BFR for this Serving Cell;

  2>else:

    3>initiate a Random Access procedure (see clause 5.1) on the
      SpCell.
```

# FIG.24

In non-DRX mode operation, the physical layer in the UE provides an indication to higher layers when the radio link for all corresponding resource configurations in the set $\bar{q}_0$, or in the set $\bar{q}_{0,0}$ or $\bar{q}_{0,1}$ that the UE uses to assess the radio link quality is likely to be blocked by object(s). The physical layer informs the higher layers when the radio link is likely to be blocked by object(s) with a periodicity determined by the maximum between the shortest periodicity among the SS/PBCH blocks on the PCell or the PSCell and/or the periodic CSI-RS configurations in the set $\bar{q}_0$, $\bar{q}_{0,0}$, or $\bar{q}_{0,1}$ that the UE uses to assess the radio link quality and 2 msec. In DRX mode operation, the physical layer provides an indication to higher layers when the radio link is likely to be blocked by object(s). with a periodicity determined as described in [10, TS 38.133].

# FIG.25

In non-DRX mode operation, the physical layer in the UE provides an indication to higher layers when the radio link quality for all corresponding resource configurations in the set $\overline{q}_0$, or in the set $\overline{q}_{0,0}$ or $\overline{q}_{0,1}$ that the UE uses to assess the radio link quality is likely to be worse than the threshold $Q_{out,IR}$ based on object position acquired by sensor(s). The physical layer informs the higher layers when the radio link quality is likely to be worse than the threshold $Q_{out,IR}$ based on object position acquired by sensor(s) with a periodicity determined by the maximum between the shortest periodicity among the SS/PBCH blocks on the PCell or the PSCell and/or the periodic CSI-RS configurations in the set $\overline{q}_0$, $\overline{q}_{0,0}$, or $\overline{q}_{0,1}$ that the UE uses to assess the radio link quality and 2 msec. In DRX mode operation, the physical layer provides an indication to higher layers when the radio link quality is likely to be worse than the threshold $Q_{out,IR}$ based on object position acquired by sensor(s) with a periodicity determined as described in [10, TS 38.133].

# FIG.26

The physical layer in the UE indicates, in frames where the radio link quality is assessed, out-of-sync to higher layers when the radio link quality is likely to be worse than the threshold $Q_{out}$ based on object position acquired by sensor(s). When the radio link quality is likely to be better than the threshold $Q_{in}$ based on object position acquired by sensor(s), the physical layer in the UE indicates, in frames where the radio link quality is assessed, in-sync to higher layers.

# FIG.27

Once the Random Access Preamble is transmitted and regardless of the possible occurrence of a measurement gap, the MAC entity shall:

1> if the Random Access Response containing Random Access Preamble identifiers that matches the transmitted *PREAMBLE INDEX* has not been received due to blocking caused by object:

  2> consider the Random Access Response reception not successful;

    3> if the Random Access Preamble is transmitted on the SpCell:

      4> indicate a Random Access problem to upper layers;

      4> if this Random Access procedure was triggered for SI request:

        5> consider the Random Access procedure unsuccessfully completed.

    3> else if the Random Access Preamble is transmitted on an SCell:

      4> consider the Random Access procedure unsuccessfully completed.

# FIG.28

```
Once Msg3 is transmitted the MAC entity shall:
  1>  if a reception of a PDCCH transmission of the SpCell
      has not been successfully received due to blocking caused
      by object:

    2>      if Msg3 transmission was transmitted on a non-
        terrestrial network:

      3>      if no PDCCH addressed to TC-RNTI indicating uplink
          grant for a Msg3 retransmission is received after the
          start of the ra-ContentionResolutionTimer:

        4>  discard the TEMPORARY_C-RNTI;

        4>  consider the Contention Resolution not successful.

    2>      else:

      3>      discard the TEMPORARY_C-RNTI;

      3>      consider the Contention Resolution not successful.

  1>  if the Contention Resolution is considered not
      successful due to blocking caused by object:

    2>      flush the HARQ buffer used for transmission of the
        MAC PDU in the Msg3 buffer;

      3>      indicate a Random Access problem to upper layers.

      3>      if this Random Access procedure was triggered for
          SI request:

        4>  consider the Random Access procedure
            unsuccessfully completed.
```

## INTERNATIONAL SEARCH REPORT

| International application No. |
| --- |
| **PCT/JP2023/043370** |

| A. | CLASSIFICATION OF SUBJECT MATTER |
| --- | --- |

*H04W 76/25*(2018.01)i
FI: H04W76/25

According to International Patent Classification (IPC) or to both national classification and IPC

| B. | FIELDS SEARCHED |
| --- | --- |

Minimum documentation searched (classification system followed by classification symbols)

H04W76/25

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2021-158397 A (SONY GROUP CORPORATION) 07 October 2021 (2021-10-07) paragraphs [0016]-[0039], [0049]-[0054], [0076], [0077], [0079]-[0082], [0089]-[0091], [0105]-[0109], [0114]-[0116], [0127]-[0209], [0245]-[0279], [0388]-[0392] | 1-11, 14-20 |
| Y | | 12, 13 |
| Y | WO 2020/208387 A1 (NISSAN MOTOR CO., LTD.) 15 October 2020 (2020-10-15) paragraphs [0054]-[0061], [0077] | 12, 13 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 February 2024** | **20 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2023/043370**

| Patent document cited in search report | | | Publication date (day/month/year) | Patent family member(s) | | | Publication date (day/month/year) |
|---|---|---|---|---|---|---|---|
| JP | 2021-158397 | A | 07 October 2021 | US paragraphs [0048]-[0074], [0084]-[0090], [0113], [0114], [0116]-[0119], [0127]-[0129], [0143]-[0147], [0152]-[0154], [0165]-[0253], [0290]-[0327], [0442]-[0446] | 2021/0266715 | A1 | |
| | | | | WO | 2020/008911 | A1 | |
| WO | 2020/208387 | A1 | 15 October 2020 | US paragraphs [0067]-[0073], [0089] | 2022/0176975 | A1 | |
| | | | | EP | 3955643 | A1 | |
| | | | | KR | 10-2021-0130810 | A | |
| | | | | CN | 113661737 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **QUALCOMM**. *Cooperative Communication & sensing, Motivations, Use Cases and Proposal*, November 2021